# EUROPEAN PATENT APPLICATION

(11) **EP 4 779 179 A1**
(43) Date of publication of application: **22.07.2026**
(21) Application number: 26150618.2
(22) Date of filing: 07.01.2026
(51) Int. Cl.: F16J 15/00, F16J 15/3208, F16J 15/3236, F16J 15/16, F16C 19/06, F16C 33/78

(54) **LIP SEALS AND RELATED METHODS**

(30) Priority: 15.01.2025 US 202563745495 P
(71) Applicant: Bal Seal Engineering, LLC, Foothill Ranch, CA 92610 (US)
(72) Inventor: Dilmaghanian, Farshid, Foothill Ranch, 92610 (US); Balta, Miquel, Foothill Ranch, 92610 (US); Wong, Calvin, Foothill Ranch, 92610 (US); van de Pas, Constantijn, Foothill Ranch, 92610 (US)
(74) Representative: Bandpay & Greuter

(57) **Abstract**

Seal assemblies (102, 104) and systems and their components can be used as pre-packaged seals when installed in a cylinder or cartridge (106). The seal assemblies (102, 104) have can include restrictor blocks to restrict fluid flow. Sealing washers (172) can be included to add sealing points. In a pre-packaged configuration, the cylinder can be a straight cylinder, a stepped cylinder, or a split cylinder.

## Description

### CROSS-REFERENCE TO RELATED APPLICATION

This is a regular utility application of U.S. provisional application Ser. No. 63/745,495, filed January 15, 2025, the contents of which are expressly incorporated herein by reference.

### FIELD OF ART

The present disclosure is generally related to lip seals with specific discussions on spring energized lip seals and lip seals with other mechanical components and related methods.

### BACKGROUND

Lip seals, which can have a spring or an energizer, are known for sealing a flow path between a dynamic surface and a stationary surface, such as flow path between a shaft and a housing, to prevent liquid flow from a high-pressure region to a relatively lower pressure region via the flow path. Bearings, such as ball bearings and roller bearings, are also known for supporting an element, such as a shaft, which rotates within an outer stationary element, such as a housing.

### SUMMARY

Aspects of the present invention include a seal system comprising: a cylinder having a body with a first end, a second end, an inside surface defining a bore, and a lengthwise axis; a first seal assembly located in the bore and comprising: a first locking ring having body with a first deck having an outside surface with a notch, an inside surface with a notch, and a first deck thickness measured between the notch at the outside surface and the notch at the inside surface; a first seal element attached to the first locking ring, the first seal element having an inside flange with a free end, an outside flange with a free end, and a center channel section located therebetween and defining a first seal cavity, wherein the outside flange comprising an extended lip located in the notch at the outside surface of the first deck; a first spring comprising canted coil spring comprising a plurality of interconnected coils located in the notch of the inside surface of the first deck and the first seal cavity of the first seal element and biasing against the notch and the inside flange; a second seal assembly located in the bore and comprising: a second locking ring having body with a second deck having an outside surface with a notch, an inside surface with a notch, and a second deck thickness measured between the notch at the outside surface and the notch at the inside surface; a second seal element attached to the second locking ring, the second seal element having an inside flange with a free end, an outside flange with a free end, and a center channel section located therebetween and defining a second seal cavity, wherein the outside flange comprising an extended lip located in the notch at the outside surface of the second deck; a second spring comprising a canted coil spring comprising a plurality of interconnected coils located in the notch of the inside surface of the second deck and the second seal cavity and biasing against the notch and the inside flange; wherein the free ends of the first seal element and the free ends of the second seal element point in a same direction; and wherein each of the interconnected coils of the first spring comprises a major axis and a minor axis and wherein the first deck thickness has a dimension that is 1.4 times to 2.5 times larger than a dimension of the minor axis.

A still further aspect of the invention includes a seal system comprising: a cylinder having a body with a first end, a second end, an inside surface defining a bore, and a lengthwise axis; a first seal assembly located in the bore and comprising: a first locking ring having body with a first deck having an outside surface with a notch, an inside surface, and a first deck thickness measured between the notch at the outside surface and the inside surface; a first seal element attached to the first locking ring, the first seal element having an inside flange with a free end, an outside flange with a free end, and a center channel section located therebetween and defining a first seal cavity, wherein the outside flange comprising an extended lip located in the notch at the outside surface of the first deck; a secondary lip seal comprising a body with a seal deck and a seal flange extending from the seal deck and having an inside diameter (ID), wherein the seal deck comprises an outer surface in contact with the inside surface of the first deck and an inner surface comprising a recess; a first spring comprising a canted coil spring comprising a plurality of interconnected coils located in the recess of the seal deck and biasing against the recess and the inside flange; a second seal assembly located in the bore and comprising: a second locking ring having body with a second deck having an outside surface with a notch, an inside surface with a notch, and a second deck thickness measured between the notch at the outside surface and the notch at the inside surface; a second seal element attached to the second locking ring, the second seal element having an inside flange with a free end, an outside flange with a free end, and a center channel section located therebetween and defining a second seal cavity, wherein the outside flange comprising an extended lip located in the notch at the outside surface of the second deck; a second spring comprising canted coil spring comprising a plurality of interconnected coils located in the notch of the inside surface of the second deck and the second seal cavity and biasing against the notch and the inside flange; and wherein the free ends of the first seal element and the free ends of the second seal element point in a same direction.

Aspects of the present invention include a seal system comprising: a cylinder having a body with a first end, a second end, an inside surface defining a bore, a lengthwise axis, and a retaining wall at the first end; a first seal assembly located in the bore and comprising: a first locking ring having body with a first deck having an outside surface with a notch, an inside surface with a notch, and a first deck thickness measured between the notch at the outside surface and the notch at the inside surface; a first seal element attached to the first locking ring, the first seal element having an inside flange with a free end, an outside flange with a free end, and a center channel section located therebetween and defining a first seal cavity, wherein the outside flange comprising an extended lip located in the notch at the outside surface of the first deck; a first spring comprising a canted coil spring comprising a plurality of interconnected coils located in the notch of the inside surface of the first deck and the first seal cavity of the first seal element and biasing against the notch and the inside flange; a sealing washer comprising an OD and an ID, and wherein the sealing washer contacts the retaining wall; a second seal assembly located in the bore and comprising: a second seal element comprising an outside flange with a free end, a center section extending from the outside flange, a memory lip having a frustoconical structure having a free end at an end of the center section, and a seal cavity defined by the outside flange, the center section, and the memory lip; and wherein the free ends of the first seal element and the free ends of the second seal element point in a same direction.

Aspects of the present invention include a seal system comprising: a cylinder having a body with a first end, a second end, an inside surface defining a bore, a lengthwise axis, and a retaining wall at the first end; a first seal assembly located in the bore and comprising: a first locking ring having body with a first deck having an outside surface with a notch, an inside surface with a notch, and a first deck thickness measured between the notch at the outside surface and the notch at the inside surface; a first seal element attached to the first locking ring, the first seal element having an inside flange with a free end, an outside flange with a free end, and a center channel section located therebetween and defining a first seal cavity, wherein the outside flange comprising an extended lip located in the notch at the outside surface of the first deck; a first spring comprising a canted coil spring comprising a plurality of interconnected coils located in the notch of the inside surface of the first deck and the first seal cavity of the first seal element and biasing against the notch and the inside flange; a second seal assembly located in the bore and comprising: a second locking ring having body with a second deck having an outside surface with a notch, an inside surface with a notch, and a second deck thickness measured between the notch at the outside surface and the notch at the inside surface; a second seal element attached to the second locking ring, the second seal element having an inside flange with a free end, an outside flange with a free end, and a center channel section located therebetween and defining a second seal cavity, wherein the outside flange comprising an extended lip located in the notch at the outside surface of the second deck; a second spring comprising a plurality of interconnected coils located in the second seal cavity and biasing against the inside flange; wherein the free ends of the first seal element and the free ends of the second seal element point in a same direction; and wherein each of the interconnected coils of the first spring comprises a major axis and a minor axis and wherein the first deck thickness has a dimension that is 1.4 times to 2.5 times larger than a dimension of the minor axis.

Aspects of the present invention include a seal system comprising: a cylinder having a body with a first end, a second end, an inside surface defining a bore, a lengthwise axis, and a retaining wall at the first end; a first seal assembly located in the bore and comprising: a first locking ring having body with a first deck having an outside surface with a notch, an inside surface with a notch, and a first deck thickness measured between the notch at the outside surface and the notch at the inside surface; a first seal element attached to the first locking ring, the first seal element having an inside flange with a free end, an outside flange with a free end, and a center channel section located therebetween and defining a first seal cavity, wherein the outside flange comprising an extended lip located in the notch at the outside surface of the first deck and the inside flange comprises a notch; a first spring comprising a plurality of interconnected coils located in the notch of the inside flange in the first seal cavity and biasing against the inside flange; a sealing washer comprising an OD and an ID, and wherein the sealing washer contacts the retaining wall; a second seal assembly located in the bore and comprising: a second seal element comprising an outside flange with a free end, a center section extending from the outside flange, a memory lip having a frustoconical structure having a free end at an end of the center section, and a seal cavity defined by the outside flange, the center section, and the memory lip; and wherein the free ends of the first seal element and the free ends of the second seal element point in a same direction.

Aspects of the present invention include a seal system comprising: a cylinder having a body with a first end, a second end, an inside surface defining a bore, a lengthwise axis, and a retaining wall at the first end; a first seal assembly located in the bore and comprising: a first locking ring having body with a first deck having an outside surface with a notch, an inside surface, and a first deck thickness measured between the notch at the outside surface and the inside surface; a first seal element attached to the first locking ring, the first seal element having an inside flange with a free end, an outside flange with a free end, and a center channel section located therebetween and defining a first seal cavity, wherein the outside flange comprising an extended lip located in the notch at the outside surface of the first deck; a first spring comprising a canted coil spring comprising a plurality of interconnected coils located in the first seal cavity of the first seal element and biasing against the inside surface of the first deck and the inside flange; a second seal assembly located in the bore and comprising: a second locking ring having body with a second deck having an outside surface with a notch, an inside surface with a notch, and a second deck thickness measured between the notch at the outside surface and the notch at the inside surface; a second seal element attached to the second locking ring, the second seal element having an inside flange with a free end, an outside flange with a free end, and a center channel section located therebetween and defining a second seal cavity, wherein the outside flange comprising an extended lip located in the notch at the outside surface of the second deck; a second spring comprising a canted coil spring comprising a plurality of interconnected coils located in the notch of the inside surface of the second deck and the second seal cavity and biasing against the notch and the inside flange; a third spring comprising a canted coil spring comprising a plurality of interconnected coils located in the first seal cavity of the first seal element adjacent the first spring and biasing against the inside surface of the first deck and the inside flange; and wherein the free ends of the first seal element and the free ends of the second seal element point in a same direction.

Aspects of the present invention include a seal system comprising: a cylinder having a body with a first end, a second end, an inside surface defining a bore, a lengthwise axis, and a retaining wall at the first end; a first seal assembly located in the bore and comprising: a first locking ring having body with a first deck having an outside surface with a notch, an inside surface, and a first deck thickness measured between the notch at the outside surface and the inside surface; a first seal element attached to the first locking ring, the first seal element having an inside flange with a free end, an outside flange with a free end, and a center channel section located therebetween and defining a first seal cavity, wherein the outside flange comprising an extended lip located in the notch at the outside surface of the first deck; a first spring comprising a canted coil spring comprising a plurality of interconnected coils located in the first seal cavity of the first seal element and biasing against the inside surface of the first deck and the inside flange; a first sealing washer comprising an OD and an ID and in contact with the retaining wall; a restrictor block comprising an OD, an ID, a first surface between the OD and the ID, and an opposed second surface, and wherein the OD is in contact with the bore and the first sealing washer at the first surface; and a second sealing washer comprising an OD and an ID and in contact with the second surface of the restrictor block.

Aspects of the present invention include a seal system comprising: a cylinder having a body with a first end, a second end, an inside surface defining a bore, a lengthwise axis, and a retaining wall attached to the body at the first end; a restrictor block comprising an OD, an ID, a first surface between the OD and the ID, and an opposed second surface having an arm extending axially in a direction away from the first surface, and wherein the OD is in contact with the bore; a first seal assembly located in the bore and comprising: a first seal element having an inside flange with a free end, an outside flange with a free end, and a center channel section located therebetween and defining a first seal cavity, wherein the outside flange comprises an extended lip located in a notch of the arm on the restrictor block, which extends into the first seal cavity; a secondary lip seal comprising a body with a seal deck and a seal flange extending from the seal deck and having an inside diameter (ID), wherein the seal deck comprises an outer surface in contact with the arm of the restrictor block and an inner surface comprising a recess; a first spring comprising a canted coil spring comprising a plurality of interconnected coils located in the recess of the seal deck and biasing against the recess and the inside flange; a second seal assembly located in the bore and comprising: a second locking ring having body with a second deck having an outside surface with a notch, an inside surface with a notch, and a second deck thickness measured between the notch at the outside surface and the notch at the inside surface; a second seal element attached to the second locking ring, the second seal element having an inside flange with a free end, an outside flange with a free end, and a center channel section located therebetween and defining a second seal cavity, wherein the outside flange comprising an extended lip located in the notch at the outside surface of the second deck; a second spring comprising a canted coil spring comprising a plurality of interconnected coils located in the notch of the inside surface of the second deck and the second seal cavity and biasing against the notch and the inside flange; and wherein the free ends of the first seal element and the free ends of the second seal element point in a same direction.

Aspects of the present invention include a seal system comprising: a cylinder having a body with a first end, a second end, an inside surface defining a bore, a lengthwise axis, and a retaining wall at the first end; a first seal assembly located in the bore and comprising: a first locking ring having body with a first deck having an outside surface with a notch, an inside surface with a notch, and a first deck thickness measured between the notch at the outside surface and the notch at the inside surface; a first seal element attached to the first locking ring, the first seal element having an inside flange with a free end, an outside flange with a free end, and a center channel section located therebetween and defining a first seal cavity, wherein the outside flange comprising an extended lip located in the notch at the outside surface of the first deck; a first spring comprising canted coil spring comprising a plurality of interconnected coils located in the notch of the inside surface of the first deck and the first seal cavity of the first seal element and biasing against the notch and the inside flange; a second seal assembly located in the bore and comprising: a second locking ring having body with a second deck having an outside surface with a notch, an inside surface with a notch, and a second deck thickness measured between the notch at the outside surface and the notch at the inside surface; a second seal element attached to the second locking ring, the second seal element having an inside flange with a free end, an outside flange with a free end, and a center channel section located therebetween and defining a second seal cavity, wherein the outside flange comprising an extended lip located in the notch at the outside surface of the second deck; a second spring comprising a canted coil spring comprising a plurality of interconnected coils located in the notch of the inside surface of the second deck and the second seal cavity and biasing against the notch and the inside flange; a first sealing washer comprising an OD and an ID and in contact with the retaining wall; a restrictor block comprising an OD, an ID, a first surface between the OD and the ID, and an opposed second surface, and wherein the OD is in contact with the bore and the first sealing washer at the first surface; and a second sealing washer comprising an OD and an ID and in contact with the second surface of the restrictor block.

Aspects of the present invention include a seal system comprising: a cylinder having a body with a first end, a second end, an inside surface defining a bore, a lengthwise axis, and a retaining wall at the first end; a first seal assembly located in the bore and comprising: a first locking ring having body with a first deck having an outside surface with a notch, an inside surface, a first deck thickness measured between the notch at the outside surface and the inside surface, and a ring extension extending towards the retaining wall, the ring extension defining a cylinder having an OD and an ID ;a first seal element attached to the first locking ring, the first seal element having an inside flange with a free end, an outside flange with a free end, and a center channel section located therebetween and defining a first seal cavity, wherein the outside flange comprising an extended lip located in the notch at the outside surface of the first deck; a first spring comprising a canted coil spring comprising a plurality of interconnected coils located in the first seal cavity of the first seal element and biasing against the inside surface of the first deck and the inside flange; a second spring comprising a canted coil spring comprising a plurality of interconnected coils located in the first seal cavity adjacent the first spring and biasing against the inside surface of the first deck and the inside flange; a first sealing washer comprising an OD and an ID and in contact with the retaining wall; a restrictor block comprising an OD, an ID, a first surface between the OD and the ID, and an opposed second surface, and wherein the OD of the restrictor block is in contact with ID of the ring extension; and a second sealing washer comprising an OD and an ID and in contact with the first locking ring.

Aspects of the present invention include a seal system comprising: a cylinder having a body with a first end, a second end, an inside surface defining a bore, a lengthwise axis, and a retaining wall at the first end; a first seal assembly located in the bore and comprising: a first locking ring having body with a first deck having an outside surface with a notch, an inside surface with a notch, and a first deck thickness measured between the notch at the outside surface and the notch at the inside surface; a first seal element attached to the first locking ring, the first seal element having an inside flange with a free end, an outside flange with a free end, and a center channel section located therebetween and defining a first seal cavity, wherein the outside flange comprising an extended lip located in the notch at the outside surface of the first deck; a first spring comprising canted coil spring comprising a plurality of interconnected coils located in the notch of the inside surface of the first deck and the first seal cavity of the first seal element and biasing against the notch and the inside flange; a second seal assembly located in the bore and comprising: a second locking ring having body with a second deck having an outside surface with a notch, an inside surface with a notch, and a second deck thickness measured between the notch at the outside surface and the notch at the inside surface; a second seal element attached to the second locking ring, the second seal element having an inside flange with a free end, an outside flange with a free end, and a center channel section located therebetween and defining a second seal cavity, wherein the outside flange comprising an extended lip located in the notch at the outside surface of the second deck; a second spring comprising a canted coil spring comprising a plurality of interconnected coils located in the notch of the inside surface of the second deck and the second seal cavity and biasing against the notch and the inside flange; a restrictor block comprising an OD, an ID, a first surface between the OD and the ID, and an opposed second surface, and wherein the OD is in contact with the bore; and a sealing washer comprising an OD and an ID and in contact with the second surface of the restrictor block, which is spaced from the retaining wall.

Aspects of the present invention include a seal system comprising: a cylinder having a body with a first end, a second end, an inside surface defining a bore, a lengthwise axis, and a retaining wall attached to the body at the first end; a restrictor block comprising an OD, an ID, a first surface between the OD and the ID, and an opposed second surface having an arm extending axially in a direction away from the first surface, and wherein the OD is in contact with the bore; a first seal assembly located in the bore and comprising: a first seal element having an inside flange with a free end, an outside flange with a free end, and a center channel section located therebetween and defining a first seal cavity, wherein the outside flange comprises an extended lip located in a notch of the arm on the restrictor block, which extends into the first seal cavity; a secondary lip seal comprising a body with a seal deck and a seal flange extending from the seal deck and having an inside diameter (ID), wherein the seal deck comprises an outer surface in contact with the arm of the restrictor block and an inner surface comprising a recess; a first spring comprising a canted coil spring comprising a plurality of interconnected coils located in the recess of the seal deck and biasing against the recess and the inside flange; and a bearing assembly located in the bore and away from the retaining wall at the first end , the bearing assembly comprise an outer ring, an inner ring, a cage retaining a plurality of rolling elements; and wherein the outer ring is fitted to the bore of the cylinder in an interference fit.

Aspects of the present invention include a seal system comprising: a cylinder having a body with a first end, a second end, an inside surface defining a bore, a lengthwise axis, and a retaining wall at the first end; a first seal assembly located in the bore and comprising: a first locking ring having body with a first deck having an outside surface with a notch, an inside surface, and a first deck thickness measured between the notch at the outside surface and the inside surface; a first seal element attached to the first locking ring, the first seal element having an inside flange with a free end, an outside flange with a free end, and a center channel section located therebetween and defining a first seal cavity, wherein the outside flange comprising an extended lip located in the notch at the outside surface of the first deck; a first spring comprising a canted coil spring comprising a plurality of interconnected coils located in the first seal cavity of the first seal element and biasing against the inside surface of the first deck and the inside flange; a first sealing washer comprising an OD and an ID and in contact with the retaining wall; a first restrictor block comprising an OD, an ID, a first surface between the OD and the ID, and an opposed second surface between the OD and the ID, and wherein the OD is in contact with the bore and the first surface contacts the first sealing washer; a second restrictor block spaced from the first restrictor block, the second restrictor block comprising an OD, an ID, a first surface between the OD and the ID, and an opposed second surface between the OD and the ID, and wherein the OD of the second restrictor block is in contact with the bore; and a bearing assembly located in the bore and away from the retaining wall at the first end, the bearing assembly comprise an outer ring, an inner ring, a cage retaining a plurality of rolling elements; and wherein the outer ring is fitted to the bore of the cylinder in an interference fit.

Aspects of the present invention include a seal system comprising: a cylinder having a body with a first end, a second end, an inside surface defining a bore, a lengthwise axis, and a retaining wall at the first end; a first sealing washer comprising an OD and an ID and in contact with the retaining wall; a first restrictor block comprising an OD, an ID, a first surface between the OD and the ID, and an opposed second surface between the OD and the ID, and wherein the OD is in contact with the bore and the first surface contacts the first sealing washer; a second sealing washer comprising an OD and an ID and in contact with the second surface of the first restrictor block; a second restrictor block comprising an OD, an ID, a first surface between the OD and the ID, and an opposed second surface between the OD and the ID, and wherein the OD of the second restrictor block is in contact with the bore and the first surface contacts the second sealing washer; a third sealing washer comprising an OD and an ID and in contact with the first surface of the second restrictor block; a third restrictor block comprising an OD, an ID, a first surface between the OD and the ID, and an opposed second surface between the OD and the ID, and wherein the OD of the third restrictor block is in contact with the bore and the first surface contacts the third sealing washer; and a bearing assembly located in the bore and away from the retaining wall at the first end, the bearing assembly comprise an outer ring, an inner ring, a cage retaining a plurality of rolling elements; and wherein the outer ring is fitted to the bore of the cylinder in an interference fit.

Aspects of the present invention include a seal system comprising: a cylinder having a body with a first end, a second end, an inside surface defining a bore, a lengthwise axis, and a retaining wall at the first end; a first seal assembly located in the bore and comprising: a first locking ring having body with a first deck having an outside surface with a notch, an inside surface with a notch, and a first deck thickness measured between the notch at the outside surface and the notch at the inside surface; a first seal element attached to the first locking ring, the first seal element having an inside flange with a free end, an outside flange with a free end, and a center channel section connected to the inside and outside flanges and together defining a first seal cavity, wherein the outside flange comprising an extended lip located in the notch at the outside surface of the first deck; a first spring comprising canted coil spring comprising a plurality of interconnected coils located in the notch of the inside surface of the first deck and the first seal cavity of the first seal element and biasing against the notch and the inside flange; a first sealing washer comprising an OD and an ID and in contact with the retaining wall; a restrictor block comprising an OD, an ID, a first surface between the OD and the ID, and an opposed second surface, and wherein the OD is in contact with the bore and the first sealing washer at the first surface; wherein the ID of the restrictor block comprises a groove having a depth that is about 20% to 80% of a dimension of the restrictor block between the OD and the ID; and wherein service grease is located in the groove of the restrictor block.

Aspects of the present invention include a seal system comprising: a cylinder having a body with a first end, a second end, an inside surface defining a bore, a lengthwise axis, and a retaining wall at the first end; a first seal assembly located in the bore and comprising: a first locking ring having body with a first deck having an outside surface with a notch, an inside surface with a notch, and a first deck thickness measured between the notch at the outside surface and the notch at the inside surface; a first seal element attached to the first locking ring, the first seal element having an inside flange with a free end, an outside flange with a free end, and a center channel section connected to the inside and outside flanges and together defining a first seal cavity, wherein the outside flange comprising an extended lip located in the notch at the outside surface of the first deck; a first spring comprising canted coil spring comprising a plurality of interconnected coils located in the notch of the inside surface of the first deck and the first seal cavity of the first seal element and biasing against the notch and the inside flange; a second seal assembly located in the bore and comprising: a second locking ring having body with a second deck having an outside surface with a notch, an inside surface with a notch, and a second deck thickness measured between the notch at the outside surface and the notch at the inside surface; a second seal element attached to the second locking ring, the second seal element having an inside flange with a free end, an outside flange with a free end, and a center channel section connected to the inside and outside flanges and together defining a second seal cavity, wherein the outside flange comprising an extended lip located in the notch at the outside surface of the second deck; a second spring comprising a canted coil spring comprising a plurality of interconnected coils located in the notch of the inside surface of the second deck and the second seal cavity and biasing against the notch and the inside flange; a first sealing washer comprising an OD and an ID and in contact with the retaining wall; a restrictor block comprising an OD, an ID, a first surface between the OD and the ID, and an opposed second surface, and wherein the OD is in contact with the bore and the first sealing washer at the first surface; wherein the ID of the restrictor block comprises a groove having a depth that is about 20% to 80% of a dimension of the restrictor block between the OD and the ID; and wherein service grease is located in the groove of the restrictor block.

Other features and combinations for practicing the invention, including the systems, assemblies, components, and methods related thereto, will be apparent in light of the following description and drawings.

In other words, the invention relates to a seal system comprising:
a cylinder having a body with a first end with a retaining wall, a second end, an inside surface defining a bore, and a lengthwise axis;
a first seal assembly located in the bore and comprising:
   a first locking ring having body with a first deck having an outside surface with a notch, an inside surface with a notch, an inner flange extension, an outer flange extension, and wherein notch at the inside surface comprises a V-shaped bottom or a flat bottom;
   a first seal element attached to the first locking ring, the first seal element having an inside flange with a free end, an outside flange with a free end, and a center channel section connected to the inside and outside flanges and together defining a first seal cavity, wherein the outside flange comprising an extended lip located in the notch at the outside surface of the first deck;
   a first spring comprising a canted coil spring comprising a plurality of interconnected coils located in the notch of the inside surface of the first deck and the first seal cavity of the first seal element and biasing against the notch and the inside flange;
   a second seal assembly located in the bore and comprising:
   a second locking ring having body with a second deck having an outside surface with a notch, an inside surface with a notch, an inner flange extension, an outer flange extension), and wherein notch at the inside surface comprises a V-shaped bottom or a flat bottom;
   a second seal element attached to the second locking ring, the second seal element having an inside flange with a free end, an outside flange with a free end, and a center channel section located therebetween and defining a second seal cavity, wherein the outside flange comprising an extended lip located in the notch at the outside surface of the second deck;
   a second spring comprising a canted coil spring comprising a plurality of interconnected coils located in the notch of the inside surface of the second deck and the second seal cavity and biasing against the notch and the inside flange;
   a sealing washer having a body with a first surface, an opposed second surface, an outside diameter, and an inside diameter, and wherein the body of the sealing washer contacts both the retaining wall and the first locking ring or contacts both the retaining wall and the first seal element; and
   wherein the free ends of the first seal element and the free ends of the second seal element point in a same direction.

According to an embodiment of the invention, an end edge of the outer flange extension of the first locking ring is spaced from the inside surface of the bore, an end edge of the outer flange extension of the second locking ring is spaced from the inside surface of the bore, or both the end edge of the first locking ring and the end edge of the second locking ring are spaced from the inside surface of the bore.

According to an embodiment of the invention, the free ends of the first seal element and the free ends of the second seal element point at the retaining wall and wherein a second sealing washer is located between the first seal element and the second seal element.

According to an embodiment of the invention, the bore of the cylinder comprises at least two bore sections, including a first bore section with a first bore diameter and a second bore section with a second bore diameter that differs from the first bore diameter, and wherein the second seal element is partly located in the first bore section and partly located in the second bore section.

According to an embodiment of the invention, the bore has a third bore section of a third bore diameter that differs from the first bore diameter and the second bore diameter, and wherein a bearing assembly is located in the third bore section.

According to an embodiment of the invention, the bearing assembly is spaced from a retaining ring.

The seal system according to the invention may comprise a shaft having at least two different shaft sections, including a first shaft section of a first shaft diameter and a second shaft section of a second diameter that differs from the first shaft diameter, and wherein the first seal element and the second seal element are pressed against the first shaft section and the bearing assembly is pressed against the second shaft section.

The seal system according to the invention may comprise a retaining ring having an outside diameter and an inside diameter that is larger than an inside diameter of the second seal element, wherein the retaining ring is pressed against the second seal element and against the bore of the cylinder.

According to an embodiment of the invention, the retaining ring is pressed against the center channel section and the outside flange of the second seal element.

The seal system according to the invention may comprise a second sealing washer located between the retaining ring and the second seal element.

The invention also relates to a seal system comprising:
a cylinder having a body with a first end, a second end, an inside surface defining a bore, a lengthwise axis, and a retaining wall at the first end;
a first seal assembly located in the bore and comprising:
   a first locking ring having body with a first deck having an outside surface with a notch, an inside surface, a first deck thickness measured between the notch at the outside surface and the inside surface, and a ring extension extending towards the retaining wall, the ring extension defining a cylinder having an OD and an ID;
   a first seal element attached to the first locking ring, the first seal element having an inside flange with a free end, an outside flange with a free end, and a center channel section connected to the inside and outside flanges and together defining a first seal cavity, wherein the outside flange comprising an extended lip located in the notch at the outside surface of the first deck;
   a first spring comprising a canted coil spring comprising a plurality of interconnected coils located in the first seal cavity of the first seal element and biasing against the inside surface of the first deck and the inside flange;
   a second spring comprising a canted coil spring comprising a plurality of interconnected coils located in the first seal cavity adjacent the first spring and biasing against the inside surface of the first deck and the inside flange;
   a first sealing washer comprising an OD and an ID and in contact with the retaining wall; and
   a second sealing washer comprising an OD and an ID and in contact with the first locking ring.

Such a seal system according to the invention may comprise a restrictor block comprising an OD, an ID, a first surface between the OD and the ID, and an opposed second surface between the OD and the ID, and wherein the OD of the restrictor block is in contact with the bore.

The invention also relates to a method of assembling a seal system comprising:
inserting a first seal assembly and a second seal assembly into a cylinder, the cylinder having a body with a first end with a retaining wall, a second end, an inside surface defining a bore, and a lengthwise axis;
the first seal assembly is located in the bore and comprising:
   a first locking ring having body with a first deck having an outside surface with a notch, an inside surface with a notch, an inner flange extension, an outer flange extension, and wherein notch at the inside surface comprises a V-shaped bottom or a flat bottom;
   a first seal element attached to the first locking ring, the first seal element having an inside flange with a free end, an outside flange with a free end, and a center channel section connected to the inside and outside flanges and together defining a first seal cavity, wherein the outside flange comprising an extended lip located in the notch at the outside surface of the first deck;
   a first spring comprising a canted coil spring comprising a plurality of interconnected coils located in the notch of the inside surface of the first deck and the first seal cavity of the first seal element and biasing against the notch and the inside flange;
   the second seal assembly located in the bore and comprising:
      a second locking ring having body with a second deck having an outside surface with a notch, an inside surface with a notch, an inner flange extension, an outer flange extension, and wherein notch at the inside surface comprises a V-shaped bottom or a flat bottom;
      a second seal element attached to the second locking ring, the second seal element having an inside flange with a free end, an outside flange with a free end, and a center channel section located therebetween and defining a second seal cavity, wherein the outside flange comprising an extended lip located in the notch at the outside surface of the second deck;
      a second spring comprising a canted coil spring comprising a plurality of interconnected coils located in the notch of the inside surface of the second deck and the second seal cavity and biasing against the notch and the inside flange;
      placing a sealing washer into the bore of the cylinder, the sealing washer having a body with a first surface, an opposed second surface, an outside diameter, and an inside diameter, and wherein the body of the sealing washer contacts both the retaining wall and the first locking ring; and
      wherein the free ends of the first seal element and the free ends of the second seal element point in a same direction.

According to an embodiment of the method according to the invention, an end edge of the outer flange extension of the first locking ring is spaced from the inside surface of the bore, an end edge of the outer flange extension of the second locking ring is spaced from the inside surface of the bore, or both the end edge of the first locking ring and the end edge of the second locking ring are spaced from the inside surface of the bore.

The method according to the invention may comprise placing a retaining ring having an outside diameter and an inside diameter that is larger than an inside diameter of the second seal element into the bore of the cylinder, wherein the retaining ring is pressed against the second seal element and against the bore of the cylinder.

The method according to the invention may comprise placing a bearing assembly into the bore of the cylinder in a spaced relationship with the retaining ring.

### BRIEF DESCRIPTION OF THE DRAWINGS

These and other features and advantages of the present devices, systems, and methods will become appreciated as the same becomes better understood with reference to the specification, claims and appended drawings wherein:
FIGs. 1A and 1B are schematic side views of a seal system located inside a can or cylinder in accordance with aspects of the invention are shown.
FIG. 2 is schematic side view of a seal system located inside a can or cylinder in accordance with further aspects of the invention is shown.
FIG. 3 is schematic side view of a seal system located inside a can or cylinder in accordance with still further aspects of the invention is shown.
FIG. 4 is schematic side view of a seal system located inside a can or cylinder in accordance with yet further aspects of the invention is shown.
FIGs. 5A and 5B are schematic side views of a seal system located inside a can or cylinder in accordance with still yet further aspects of the invention are shown.
FIG. 6 is schematic side view of a seal system located inside a can or cylinder in accordance with yet further aspects of the invention is shown.
FIG. 7 is schematic side view of a seal system located inside a can or cylinder in accordance with yet further aspects of the invention is shown.
FIG. 8 is schematic side view of a seal system located inside a can or cylinder in accordance with yet further aspects of the invention is shown.
FIG. 9 is schematic side view of a seal system located inside a can or cylinder in accordance with yet further aspects of the invention is shown.
FIG. 10 is schematic side view of a seal system located inside a can or cylinder in accordance with yet further aspects of the invention is shown.
FIG. 11 is schematic side view of a seal system located inside a can or cylinder in accordance with yet further aspects of the invention is shown.
FIG. 12 is schematic side view of a seal system located inside a can or cylinder in accordance with yet further aspects of the invention is shown.
FIG. 13 is schematic side view of a seal system located inside a can or cylinder in accordance with yet further aspects of the invention is shown.
FIG. 14 is schematic side view of a seal system located inside a can or cylinder in accordance with yet further aspects of the invention is shown.
FIG. 15 is schematic side view of a seal system located inside a can or cylinder in accordance with yet further aspects of the invention is shown.
FIG. 16 is schematic side view of a seal system located inside a can or cylinder in accordance with yet further aspects of the invention is shown.
FIG. 17 is schematic side view of a seal system located inside a can or cylinder in accordance with yet further aspects of the invention is shown.
FIG. 18 is schematic side view of a seal system located inside a can or cylinder in accordance with yet further aspects of the invention is shown.
FIG. 19 is schematic side view of a seal system located inside a can or cylinder in accordance with yet further aspects of the invention is shown.
FIG. 20 is schematic side view of a seal system located inside a can or cylinder in accordance with yet further aspects of the invention is shown.
FIG. 21 is schematic side view of the seal system of FIG. 20 located inside a can or cylinder with a bearing assembly.

### DETAILED DESCRIPTION

The detailed description set forth below in connection with the appended drawings is intended as a description of the presently preferred embodiments of assemblies for drinking or drinking containers provided in accordance with aspects of the present devices, systems, and methods and is not intended to represent the only forms in which the present devices, systems, and methods may be constructed or utilized. The description sets forth the features and the steps for constructing and using the embodiments of the present devices, systems, and methods in connection with the illustrated embodiments. It is to be understood, however, that the same or equivalent functions and structures may be accomplished by different embodiments that are also intended to be encompassed within the spirit and scope of the present disclosure. As denoted elsewhere herein, like element numbers are intended to indicate like or similar elements or features.

Descriptions of technical features or aspects of an exemplary configuration of the disclosure should typically be considered as available and applicable to other similar features or aspects in another exemplary configuration of the disclosure. Accordingly, technical features described herein according to one exemplary configuration of the disclosure may be applicable to other exemplary configurations of the disclosure, and thus duplicative descriptions may be omitted herein.

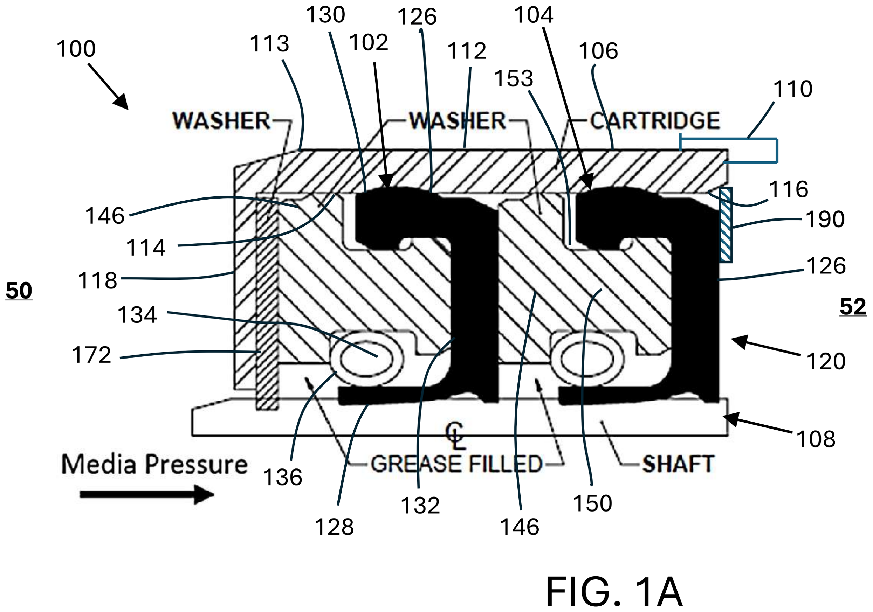

With reference now to FIG. 1A, a seal system 100 comprising a first seal assembly 102 and a second seal assembly 104 is shown located inside a cartridge 106, which has an interior surface defining a bore. The cartridge 106 may also be referred to as a cylinder or a can housing. The cartridge 106 provides a platform for which to mount components therein to form a seal system 100 in accordance with aspects of the invention. The seal system 100 can then be assembled onto or over a shaft and the assembly with the shaft installed inside the equipment housing 110, which is shown schematically and can represent any number of equipment, such as a pump, a compressor, an air blower, etc. In some examples, the seal system 100 is first installed inside an equipment housing 110, and then a shaft is then inserted into the bore of the seal system.

As used herein, the terms first and second and related generic terms, such as left and right, are meant to identify components by nomenclature only and are not structurally limiting unless the context indicates otherwise.

As previously presented, the seal system 100 can be located inside a pump, a blower, a turbine, an actuator, or other equipment having a shaft or pin 108 that is movable, such as rotatable, within the housing 110. The housing 110 is depicted schematically but can take an appropriate form for the particular application, such as having contours for an impeller and a volute for building velocity and pressure . The seal system 100 is understood to be generally circular and has a bore for receiving the shaft or pin 108, which is partially shown about a centerline 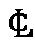 . The exterior of the cartridge 106 can be adjusted, such as crafted or machined, to fit with and housed within the housing 110 of the particular application, and can be machined and contoured to include any number of contours, steps, shoulders, diameter, and length as appropriate for fit.. Thus, specific exterior configuration of the cartridge can be adjusted or configured, such as being sized and shaped, without deviating from the spirit of the present invention.

The can housing 106 for housing the two seal assemblies 102, 104 therein can have a body 112 comprising a wall with an exterior wall surface 113 and an interior wall surface 114 defining a bore 116. The body 112 can have two open ends for assembling the two seal assemblies 102, 104 from either end of the body. In an embodiment, a retaining wall 118 is provided at one of the two ends of the body 112 to define a retaining end, which serves as a backstop and prevents components of the seal system 100 from escaping from the bore 116 out through the retaining end. By default, the opposite end of the body 112 is the insertion end or the assembly end 120, for use to place seal components into the bore 116 to form the seal system 100. In alternative embodiments, where a retaining wall 118 is shown or used, an open cylinder and a retaining disc may instead be used. In other words, the cylinder of the body may have two open ends with two retaining discs used to enclose the two ends after assembly of the seal components..

The cylinder 106 can be used to house seal components to form the seal system 100 prior to assembly onto a shaft 108 and then into a device or equipment housing. When seal components are pre-installed inside the can 106, the seal system 100 may be referred to as a pre-packaged seal system. The pre-packaged seal system is thereafter ready for mounting, as a unit, onto the shaft. The cylinder size, dimensions, and material can be selected for the particular application. Metal, such as stainless steel and alloys, may be used for most applications and stainless steel, cobalt chrome steels, titanium alloys, and platinum metals may be used for medical implant applications.

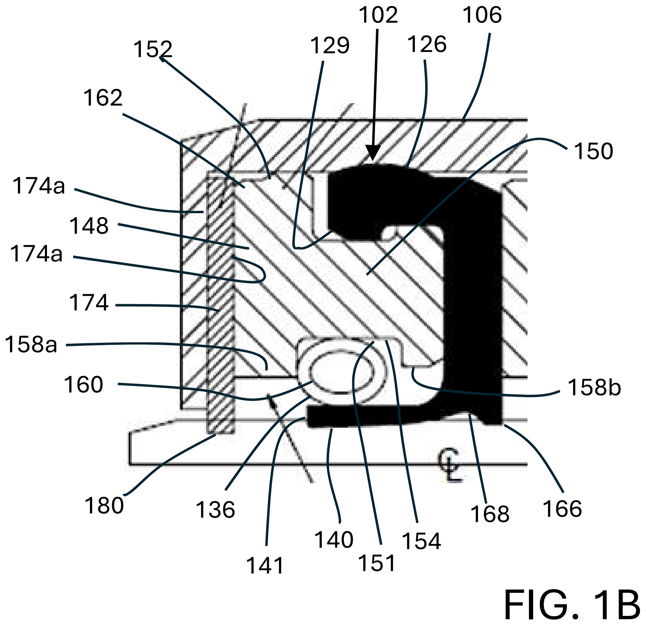

In an example, the first seal assembly 102 comprises a first seal element 126 comprising an inside or inner flange 128, an outside or outer flange 130, and a center channel section 132 connecting the inner and outer flanges and defining a cavity 134, which can accommodate an energizer 136, which can be a canted coil garter spring. The cavity 134 may also be referred to as a spring cavity for its used to accommodate a biasing spring, as further discussed below. With further reference to FIG. 1B, which is an enlarged view of the first seal assembly 102, the first seal element 126 is made from a non-metallic material and may be made from an elastomer, a thermoplastic material, such as PTFE, PE or PEEK, or any other special polymers. The particular elastomer, thermoplastic or polymer, can vary depending on the application.

In the embodiment shown, the energizer 136 is a canted coil spring comprising a length of a plurality of interconnected coils all canted generally in the same direction and having two ends of the length connected to form a garter or ring spring and wherein the coils operate to bias the inner flange 128 away from the outer flange 130 to press the inner flange 128 into sealing arrangement with the shaft 108. The inside flange 128 can have an inside exterior surface that contacts the shaft 108 and an inside interior surface that contacts the energizer 136. In the example shown, the inside flange has a length measured from the tip 141 (FIG. 1B) to the center channel section 132 (FIG. 1A) that is approximately 1.5 times to 2.2 times the length of the energizer's largest diameter, dimension, or axis. **In** other examples, the relative dimensions can be different and outside of the stated range. The length of the inside flange relative to the largest dimension of the energizer allows placement of the energizer along the length to control where the biasing force of the canted coils bias against the inside interior surface, which gives the designer a relatively long surface area from which to select where to place the energizer. While the energizer can be a canted coil spring as discussed, the energizer 136 can alternatively be an O-ring or a different metallic spring type, such as a ribbon spring, a V-spring, or a helical compression or extension spring. **In** some examples, such as in relatively low pressure applications, the energizer can be omitted, and the seal is a lip seal type but not a spring energized lip seal.

As shown, the inside flange 128 of the sealing element 126 has an inside diameter for placing around the shaft 108, or for receiving the shaft, and a sealing lip 140 that is pressed against the shaft surface to provide a dynamic seal, when the shaft moves or rotates relative to the inside flange. The inside diameter defined by the inside flange is preferably smaller than the shaft OD so as to create an interference fit with the shaft OD. The sealing lip 140 can have a long dynamic surface that is about 20% to about 85% of the length of the inside flange 128 or a short dynamic surface that is about 5% to about 20% of the length of the inside flange. Preferably, the sealing lip 140 is about 30-60% of the length of the inside flange. The sealing lip 140 can be biased by the energizer 136 against the surface of the shaft 108. As shown, the energizer 136 is a canted coil spring, which is known to have an operating working deflection range and provides a generally constant biasing force over the deflection range so that forces remain generally constant at the sealing interfaces when the coils deflect within the deflection range, such as when the shaft moves up and down within the deflection range.

In the present embodiment, the interior wall surface 114 of the cylinder 106 has a straight bore 116, which can be understood as having generally the same constant inside diameter throughout the bore of the cylinder without a purposeful step. However, in other embodiments, the interior wall surface 114 may include a purposeful step so that there are at least two different inside diameter regions of the inside bore. This allows for insertion of seal components of different outer diameters. For example, the bore 116 can have a first portion of one inside diameter and a second portion of a different inside diameter. The second portion can be a larger inside diameter than the first portion to allow the first seal assembly 102 of a first dimension to be inserted into the bore without experiencing friction resistance from the interior wall surface 114 of the second portion on the outer flange 130. The second locking ring of the second seal assembly 104 can then be equipped with a larger OD than the first locking ring 146 to then slide into and frictionally engage the larger second portion of the bore.

Furthermore, the entrance of the insertion end 120 can be chamfered to eliminate sharp edges and facilitate insertion of seal components and the length of the cylinder 106 can be selected to fit all the components mounted therein, including a retaining disc at the insertion end after the various components are installed. Externally, the exterior wall surface 113 may include chamfered surfaces, annular grooves, and/or one or more stepped surfaces to cooperate or mate with the equipment housing that the seal system 100 is be installed into. For example, an annular groove may be on the exterior for use with an O-ring for sealing against the equipment housing or used with a biasing spring, such as a canted coil spring, to bias against the equipment housing.

A first locking ring 146 is mechanically engaged to the first seal element 126 of the first seal assembly 102. The locking ring 146 has a body 148 comprising a deck 150 and a locking flange 152. The locking flange 152 has an OD that is sized and shaped to press fit within the bore, and prevent the first seal assembly from rotating relative to the cylinder. The deck 150 comprises a notch or groove for receiving the enlarged end section 129 of the outer flange 130 in a mechanical engagement, which is understood to be more than a surface to surface contact. The enlarged end section 129 can be viewed as an extended lip extending radially away from the inside surface of the outer flange to provide a bump or projection for engaging the notch on the locking ring. In addition to engaging the notch, the enlarged end section or extended tip 129 of the outside flange 130 extends radially outwardly to serve as a sealing lip to seal against the interior surface of the cylinder 106, which is pressed against the cylinder by the geometry of the deck 150 of the locking and the notch, which is understood as an indentation from adjoining surface features and can be considered a groove. In some examples, the locking flange 152 can be omitted or can recess from the interior of the cylinder 106 and the engagement with the bore is provided by the deck 150 and the bore squeezing the outside flange therebetween.

When mechanically engaged, the seal element 126 and the locking ring 146 are prevented or restricted from axially separating from one another, axially along the length of the shaft, or along the lengthwise axis of the seal system. The deck has a projection rising from the low point of the notch for supporting the inner part or the base part of the outer flange 130. The deck 150 further has an inside surface 154 that defines part of the spring cavity 134. The thickness of the deck 150 can vary to change the dimension of the spring cavity 134, and therefore the size and/or type of energizer 136 used to bias against the inside surface of the deck 150 and the inside surface of the inner sealing flange 128. In the present embodiment, the thickness of the deck 150 (FIG. 1A), in the radial direction relative to the axis of the shaft, is about 1.3 to 2.7 times the minor axis of the coils of the canted coil spring, with about 1 to 2 times being more preferred, and with 1.3 times to 1.8 times being most preferred. In other examples, the relative dimensions can be outside of the disclosed range. Setting the thickness of the deck allows the size of the coils to be controlled.

In the example shown, the inside surface 154 of the deck 150 comprises a groove 151 having a bottom surface and two sidewalls. The bottom surface or inside surface 154 is generally flat, which is understood to be generally parallel to the axis of the shaft, and the two sidewalls are generally orthogonal to the flat bottom surface. In an example, the sidewall closer to the first sealing element, the inner flange extension 158b, can be shorter that the sidewall remote from the first sealing element, which can be called the outer flange extension 158a. However, in another example, the inside surface 154 of the deck 150 may be tapered relative to the lengthwise axis of the shaft. In some examples, the groove or notch on the inside surface of the deck can round or has a complex curve.

The dimensions of the groove 151 can vary in shape to vary the spring cavity 134 for positioning the energizer 136 therein. For example, the tapered section can be expanded or enlarged, provided with an increased or decreased angle relative to the shaft axis, or can be omitted altogether to have a single flat section. The tapered section can be incorporated to preload or to turn the position of the energizer 136. For example, if the energizer 136 is a canted coil spring, the tapered section can be selected to occupy portions of the spring cavity so that when the canted coil spring 136 is situated in the spring cavity, the contour of the inside surface 154 causes the minor axis or axes of the coils of the canted coil spring to turn from generally horizontal relative to the shaft axis. When the minor axis is turned, the force versus deflection curve of the canted coil spring changes compared to when the minor axis is orthogonal to the shaft axis due to the rotated coils being compressed at points away from the minor axis, which require greater forces to deflect the coils. It is understood that when the energizer has a canted coil spring comprising a plurality of interconnected coils, each coil of the elliptical shaped coil can have a major axis and a minor axis, which is the shorter of the two axes of the elliptical shaped structure.

The contoured surface of the inside surface 154 in combination with the first inner flange extension 158a and the second inner flange extension 158b of the locking ring define a groove 151 that is structured to retain the energizer 136 within the spring cavity 134. The first and second inner flange extensions 158a, 158b have radial end tips that extend radially inwardly towards the shaft on either side of the energizer 136. The radial end tips project inwardly relative to the flat section of the inner surface 154 towards the shaft. The thickness of the first and second inner flange extensions 158a, 158b can restrict or limit the energizer 136 from translating axially within the spring cavity 134.

In the present embodiment, the first and second inner flange extensions 158a, 158b are positioned such that the energizer 136 is located near the end of the inside flange 128, away from the center channel section, to provide direct biasing at the point of or near the tip of the inside flange 128. Furthermore, in the present embodiment the energizer 136 is smaller in comparison to the spring cavity 134 and does not touch both inner flange extensions 158a, 158b at the same time. In other examples, both inner flange extensions 158a, 158b can be spaced so that the energizer 136 can touch both at the same time. The first inner flange extension 158a is sized with sufficient space for insertion of the energizer into the spring cavity. Said differently, an entrance or opening 160 is provided between the first inner flange extension 158a and the inner flange 128 to facilitate assembly but also make it difficult for the energizer 136 to pop out of the cavity through the spring cavity entrance 160 during use. Without the first inner flange extension 158a extending below a plane defined by the flat portion of the inside surface 154, the spring cavity entrance 160 between the end tip of the inside flange 128 and the locking ring 146 would increase and would more readily allow the energizer 136 to escape.

In the example shown, the radial end of the outer flange extension 162 of the locking flange 152 is sized to press against the interior surface 114 of the cylinder 106 to secure the locking ring 146 from axial translation during service. For example, the outer flange extension 162 of the locking ring can have an interference fit with the bore of the cylinder 106 so that the locking ring is fixed to the cylinder via the interference fit. As the seal element 126 is mechanically engaged to the locking ring 146, the seal element 126 is also secured from axial translation during service. Further, the bump or enlarged section 129 on the outside flange 130 is pressed between the notch on the deck 150 and the interior surface 114 of the cylinder 106, the enlarged section 129 functions as a sealing lip to form a static seal at the outside flange 130 that prevents fluid from flowing thereacross and prevents the sealing element from rotating.

In an example, an excluder 166 is provided at an end of the center channel section 132, on the inside flange 128 side. As another way to view it, an excluder 166 is provided at an end of the inside flange 128, opposite the free end of the inside flange. The excluder 166 can be singularly formed with the body the seal element 126 and can be provided with an inside diameter (ID) that is smaller than the inside diameter of the inside flange 128 at the inside sealing lip 140 and/or the outside diameter of the shaft 108. The excluder 166 can have a fin-like cross-section with a flat or blunt tip that seals against the shaft located adjacent an annular recess 168. The annular recess presents a discontinuity along the inside of the inside sealing flange. In other words, the inside flange 128 is separated from the excluder 166 by the annular recess 168. The tight fitting excluder 166 around the outside diameter (OD) of the shaft 108 helps to prevent fluid located external of the spring cavity 134 from entering past the excluder 166 and into the interface between the shaft and the inside flange and possibly interferes with the dynamic seal or presents a difficult media for the seal to maintain.

With reference again to FIG. 1A, the second seal assembly 104 of the seal system 100 can be the same or similar to the first seal assembly 102. For example, the second seal assembly 104 can have a seal element 126, a locking ring 146, and an energizer 136 that are the same or similar to analogous components of the first seal assembly 102. In the embodiment shown, the tips or free ends of the inner and outer sealing flanges 128, 130 of the second seal element 126 of the second seal assembly face the same direction as the free ends of the first sealing element of the first seal assembly 102. Thus, if the external region 50 in FIG. 1A is the high pressure region, both seal assemblies have free ends that face or point in the direction of the high pressure region 50. By arranging both seal assemblies to face the same direction, to face the media pressure, this allows the media pressure to pressurize the ID sealing lip 128 to increase sealing against the shaft by adding additional sealing stress, via the media pressure, to the sealing flange to thereby improve sealing ability and reducing media leakage.

In the present embodiment, a washer 172 is provided between the retaining wall 118 and the locking ring 146 of the first seal assembly 102. The washer 172 can be made from an elastomeric material, thermoplastic material, such as PTFE, PE or PEEK, or any other special polymers as appropriate for the application, such as when taking into account the type of liquid and the temperature of the application. In some examples, the washer 172 may have the same non-metallic material as the sealing element of the first and/or second seal assemblies. In the configuration shown in FIG. 1A, the seal system 100 seals against two exterior or external environments 50, 52, external to the spring cavities 134 of the first and second seal assemblies 102, 104. Assuming region 50 is the high pressure region, the washer 172 acts as the first line of defense in sealing to prevent fluid intruding or seeping into the spring cavity 134 of the first seal assembly 102.

In an example, the washer 172 has a body 174 having a first surface 174a and an opposing second surface 174b. The washer 172 is wedged or positioned between the retaining wall 118 and the locking ring 146 of the first seal assembly 102 and is preferably compressed therebetween. The body 174 can have an OD and an ID. The OD can contact the interior surface of the cylinder bore or can be spaced from the interior surface as shown. The ID of the body 174 is preferably smaller than the shaft OD, as schematically shown by the ID projecting into the body of the shaft. In practice, the insertion of the shaft into the ID of the washer 172 would cause the ID to be enlarged by the larger shaft and would cause the ID of the washer to bulge outward and grip the shaft in an interference fit.

In some examples, a memory lip can be provided at the ID of the washer. When incorporated, the memory lip may be molded along with the planar body 174 to have a curved portion at the ID, similar to a truncated cone in which the ID is curved away from the planar first surface 174a of the body. The curved portion of the memory lip is curved or arcuate such that the second surface 174b functions as a lip seal and contracts the OD of the shaft to seal against the shaft while the first surface 174a is spaced away or does not contact the shaft. When the washer is provided with the memory lip that functions as a lip seal to seal against the shaft, the washer may be referred to as a lip seal. The lip seal of the first washer 172 provides another dynamic seal for the seal system 100, which in combination with the first and second seal assemblies 102, 104 provide three dynamic sealing points or three dynamic seals with the shaft.

The inside opening 180 of the washer has an ID that is smaller than the OD of the shaft so as to be in interference with the shaft. Preferably, the inside diameter of the opening 180 is the same as or smaller than the inside diameter of the inside flange 128 so as to have a higher inference than the inside flange of the sealing element.

In some examples, the seal system 100 can comprise one or more additional washers 172 in addition to the washer located adjacent the retaining wall 118. For example, an additional washer can be located between the seal element 126 of the first seal assembly 102 and the locking ring 146 of the second seal assembly 104. This additional washer can be referred to as a second washer and can be the same or similar to the first washer 172. To help identify between the different sealing washers by name, the first washer may have the notation 172a, the second sealing washer may have the notation 172b, etc. The second washer can be a flat sealing washer similar to the one shown or can comprise a memory lip that functions as a lip seal. The lip seal of the second washer, when incorporated, provides another dynamic seal for the seal system 100, which in combination with the first washer 172 and the first and second seal assemblies 102, 104 provide four dynamic sealing points or four dynamic seals with the shaft.

The seal system may further include an additional washer located adjacent the seal element 126 of the second seal assembly 104 and a retaining disc 190, which can be used to hold the various components inside the cylinder 106, which cylinder can of course be modified or lengthened to accommodate components located therein. This washer may be referred to as a third washer incorporated with the seal system 100. The third washer can be the same or similar to the first washer. For instance, the third washer can be a flat sealing washer with an ID that is sized for an interference fit with the shaft or can have a memory lip that functions as a lip seal with a shaped opening 180 that can be arranged to face any desired direction. The lip seal of the third washer, when incorporated, provides another dynamic seal for the seal system 100, which in combination with the first washer 172, the second washer, and the first and second seal assemblies 102, 104 provide five dynamic sealing points or five dynamic seals with the shaft.

The second seal element 126 of the second seal assembly 104 incorporates an excluder 166, similar to that of the first seal assembly 102. In some examples, no sealing washer is practiced with the seal system 100, which may be practiced simply with each seal element having an excluder. In yet another example, any combination of one and up to all three sealing washers may be used. For example, the two end sealing washers may be used with no sealing washer located between the two seal assemblies 102, 104, or the middle washer may be used while one or both end washers are omitted. In another example, only one of the end washers is used. In yet other alternative embodiments, where a washer is used, two or more consecutively stacked washers may be used at the location of the single washer. For example, where a middle washer is used, two or more such washers can be used at the same location as opposed to just one middle washer. For example, two back-to-back washers may be used where the single end washer is currently shown, or three back-to-back-to-back washers may be used where the single end washer is currently shown. In other examples, the thickness of the single washer can increase so that the single washer can operate with higher stiffness compared to a single thinner washer. Other double seal embodiments discussed elsewhere herein can have similar alternative optional washer configurations described herein. Further, the one or more washers in the various configurations described can each have a memory lip, can be a standard sealing washer, or a combination of both.

A retaining disc 190, shown schematically, is provided at the insertion end 120 of the cylinder 106 to retain the various components therein following assembly. The retaining disc 190 can comprise an outer diameter and an inner diameter. The outer diameter of the retaining disc 190 can be selected to form an interference fit with the inside diameter of the cylinder 106, such as about 0.1 thousandths to about 5 thousandths total clearance. The cylinder 106 can have a length that is appropriate for use with the retaining disc. In the configuration shown in FIG. 1A, the retaining disc 190 is thin to fit underneath the body 112 of the can 106. In another example, the cartridge 106 can be extended to allow for a thicker retaining disc 190. The inside diameter of the retaining disc 190 has a dimension that is visually larger than the shaft OD to not interfere or rub against the shaft OD during assembly and use. The space of the body of the retaining disc 190 between the ID and the OD should be sufficiently large to retain the various sealing components inside the cylinder without interfering with the movement of the shaft 108. The retaining disc 190 may be made from a metal material or a polymeric material with the specific material to select from depending on the application of the seal system.

Service grease may be packed inside the spring cavity 134 of the first seal assembly 102 and/or the spring cavity 134 of the second seal assembly 104. The type of service grease can be selected for the particular seal application. For example, if the application is for an implantable medical device, then the service grease can be a biocompatible grease, such as perfluoropolyether (PFPE) based oils and thickeners. For other non-medical applications, the grease can be a lubricant grease, such as calcium grease, lithium grease, sodium grease, etc. When incorporating service grease into one or both spring cavities 134, the grease not only provides lubrication for the dynamic interfaces between the movable shaft and the inside flanges, but the presence of the grease displaces voids and pockets inside the spring cavities, which helps to prevent external fluid from entering the same space that is already occupied by the grease.

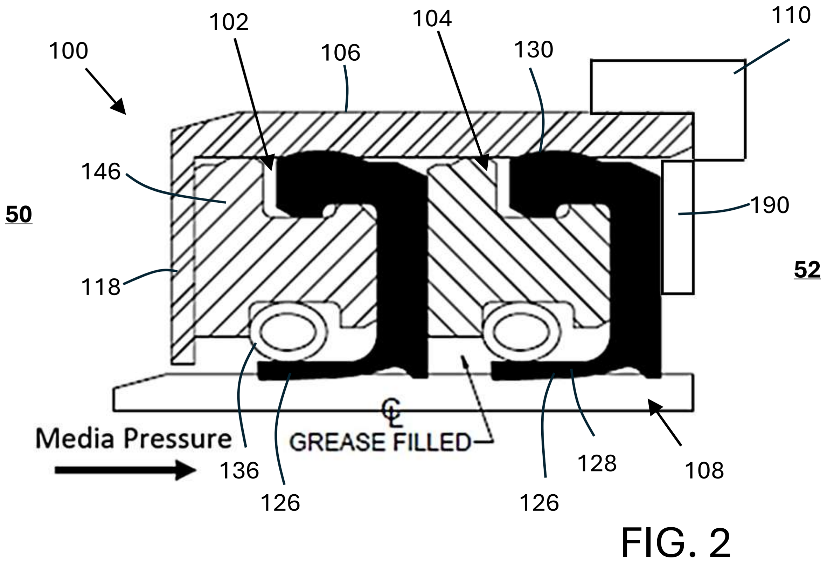

With reference now to FIG. 2, an alternative seal system 100 provided in accordance with further aspects of the invention is shown. The present seal system 100 is similar to the seal system of FIG. 1A with a few exceptions. In the present embodiment, the seal system 100 has been modified so that the sealing washer is absent between the retaining wall 118 and the locking ring 146 of the first seal assembly 102. In this configuration, the seal system 100 maintains two seal assemblies 102, 104 inside the bore of a can or cylinder 106 and wherein the tips or free ends of the inner and outer sealing flanges 128, 130 of the seal elements 126 face the external high-pressure region 50. The seal system 100 provides two dynamic seals, one at each of the first and second seal assemblies 102, 104.

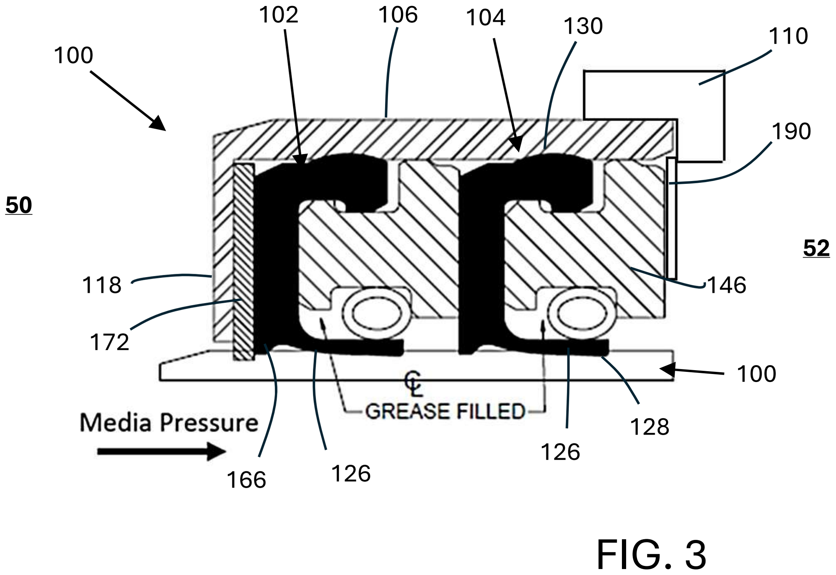

With reference now to FIG. 3, an alternative seal system 100 is provided in accordance with further aspects of the invention is shown. The present seal system 100 is similar to the seal system of FIG. 1A with a few exceptions. The seal system 100 maintains two seal assemblies 102, 104 located inside a can 106 whose tips or free ends of the inner and outer sealing flanges 128, 130 now face the low-pressure region 52. When the free ends of the seal elements face the low-pressure region, such as when placing in the direction opposite media and opposite the media pressure, abrasive media (e.g., slurry, blood, sand, etc.) that could dry up or could cause abrasion do not enter the seal cavities, where the energizers are positioned. This helps to reduce the chance of clogging up the energizers, especially spring-type energizers with spring coils, and reducing the effectiveness of the energizer to bias the sealing flanges.

In the present embodiment, the seal system 100 has a sealing washer 172 located between the first sealing element of the first seal assembly and the retaining wall, like that of FIG. 1A, but wherein the free ends of the sealing elements point in an opposite direction. In combination with the sealing lips of each of the two seal assemblies 102, 104, the seal system of the present embodiment provides three dynamic seals. One or more additional washers may be incorporated, similar to the optional additional washers discussed herein elsewhere.

In still another example, sealing washers may be omitted and the seal system 100 may be practiced simply with each seal element having an excluder 166.

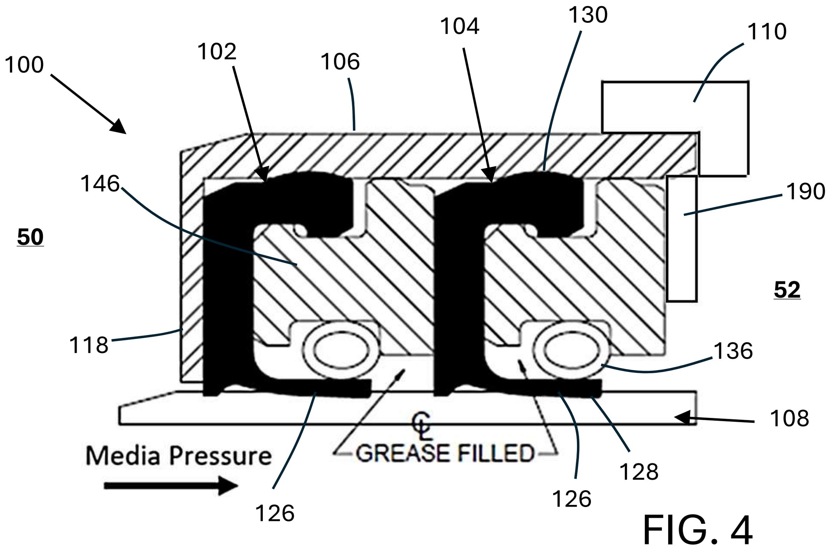

With reference now to FIG. 4, an alternative seal system 100 provided in accordance with still further aspects of the invention is shown. The present seal system 100 is similar to the seal system of FIG. 3 with a few exceptions. In the present embodiment, the seal system 100 has been modified to omit the sealing washer 172 between the retaining wall 118 and the seal element 126 of the first seal assembly 102. In this configuration, the seal system 100 maintains two seal assemblies 102, 104 located inside a can 106 whose tips or free ends of the inner and outer sealing flanges 128, 130 face the low-pressure region 52. The seal system 100 provides two dynamic seals, one at each of the first and second seal assemblies 102, 104.

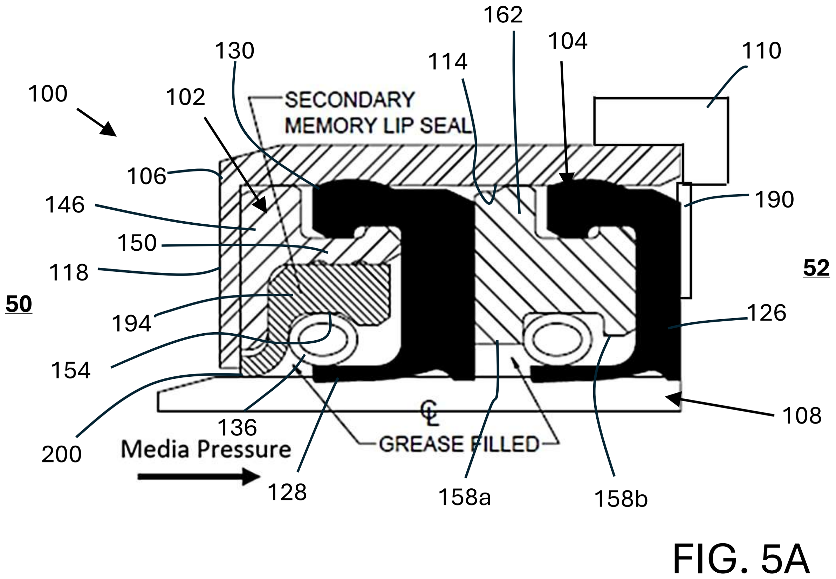

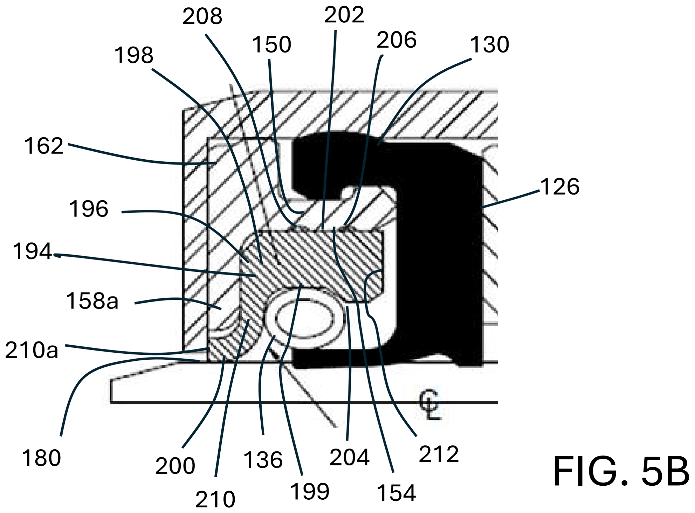

With reference now to FIGs. 5A and 5B, which is a partial enlarged view of FIG. 5A, an alternative seal system 100 provided in accordance with further aspects of the invention is shown. The present seal system 100 is similar to the seal system of FIG. 1A with a few exceptions. In this configuration, the seal system 100 maintains two seal assemblies 102, 104 located inside a can 106 whose free ends of the inner and outer flanges 128, 130 of the seal elements 126 face the high-pressure region 50. The second seal assembly 104 can be the same or similar to the second seal assembly 104 of FIG. 1A. In the present embodiment, the locking ring 146 of the first seal assembly 102 has been reconfigured to cooperate with a modified secondary memory lip seal 194, or secondary lip seal for short. The locking ring 146 maintains an outer flange extension 162 which contacts the interior surface 114 of the cartridge, a deck 150 that has been reduced in thickness compared to the deck of FIG. 1A, and an inner flange extension 158a. This allows for additional cavity space to accommodate the secondary lip seal 194.

The secondary lip seal 194 is made from a non-metallic material, such as a rubber, elastomer, or specialty polymer material. The secondary lip seal 194 has a body 196 comprising a seal deck 198 having a generally rectangular cross-section and a sealing flange 210 extending from the seal deck and comprising a memory lip seal 200. The seal deck 198 has an outer surface 202 and an inner surface 204 opposing the outer surface. The outer surface 202 is configured to press against the inside surface 154 of the deck 150 of the locking ring. One or more raised bumps 206, 208 can be provided on the outer surface 202 of the seal deck 198 to increase contact pressure at the raised bumps when the two decks are pressed together by the energizer 136. Because the secondary lip seal 194 has an annular configuration, the two bumps are understood to be two annular projections. In other examples, there can be one or more than two raised bumps.

The seal deck 198 has a side edge or side surface 212 at an end opposite the seal flange 210. The side edge 212 is preferably spaced from the center channel section of the seal element 126 but can contact the inside surface of the center channel section. The inner surface 204 of the seal deck 198 has a contoured surface for accommodating the curvature of the coils of the energizer 136. In the example shown, the contoured surface has a recess 199 for receiving at least part of the plurality of coils of the energizer 136, which can be a canted coil spring comprising a plurality of interconnected coils that are generally canted along the same canting direction. The location of the recess can be adjusted along the width of the seal deck 198 between the side edge 212 and the seal flange 210 to control the position of the energizer 136 relative to the inside flange and the lip seal on the side flange. In particular, the point biasing of the minor axis of the energizer relative to the inside flange can be selected by adjusting the location of the recess between the side edge and the seal flange. To bias the seal flange 210 against the inner flange extension 158a of the locking ring 146, the location of the recess defined by the inner surface 204 of the seal deck 198 can be selected so that the width of the recess forces the coils of the energizer to press against the inside surface of the seal flange 210 at a desired location along the length of the seal flange.

The memory lip seal 200 is located at an end of seal flange 210 and is configured to seal against the shaft OD. The memory lip seal 200, or simply memory lip for short, can be a molded with a shaped opening in which the ID of the seal flange 210 resembles a frustoconical shape structure with an opening that is configured to the seal around the shaft. The structure of the lip seal 200 comprises a projection that projects inside the ID opening of the inner flange extension 158a of the first locking ring 146. Preferably, the lip seal edge 210a at the end of the frustoconical shaped structure aligns with the edge of the inner flange extension 158a. However, the lip seal edge 210 can be offset from the edge of the inner flange extension without deviating from the scope of the invention.

Thus, aspects of the present seal system 100 can comprise a cylinder 106 having a body with a first end, a second end, an inside surface defining a bore, and a lengthwise axis and having a first seal assembly 102 and a second seal assembly 104 located therein. The first seal assembly can comprise a first locking ring 146 having body with a first deck having an outside surface 153 with a notch, an inside surface 154, and a first deck thickness measured between the notch at the outside surface and the inside surface. The first seal assembly 102 can further comprise a first seal element 126 attached to the first locking ring, the first seal element having an inside flange with a free end, an outside flange with a free end, and a center channel section connected to the inside and outside flanges and together defining a first seal cavity, and wherein the outside flange comprising an extended lip located in the notch at the outside surface 153 of the first deck.

A secondary lip seal 194 comprising a body with a seal deck 198 and a seal flange 210 extending from the seal deck and having an inside diameter (ID), wherein the seal deck comprises an outer surface in contact with the inside surface of the first deck and an inner surface comprising a recess 199 and a first spring 136 comprising a canted coil spring comprising a plurality of interconnected coils located in the recess of the seal deck and biasing against the recess and the inside flange.

Aspects of the present seal system 100 can comprise a cylinder 106 having a body with a first end, a second end, an inside surface defining a bore, and a lengthwise axis. A first seal assembly 102 is located in the bore and comprising a first locking ring 146 having body with a first deck 150 having an outside surface with a notch, an inside surface, and a first deck thickness measured between the notch at the outside surface and the inside surface. A first seal element 126 attached to the first locking ring 146, the first seal element having an inside flange with a free end, an outside flange with a free end, and a center channel section located therebetween and defining a first seal cavity, wherein the outside flange comprising an extended lip or enlarged end section 129 located in the notch at the outside surface of the first deck.

A secondary lip seal 194 comprising a body with a seal deck and a seal flange extending from the seal deck 198 and having an inside diameter (ID), wherein the seal deck comprises an outer surface in contact with the inside surface of the first deck and an inner surface comprising a recess; and an energizer 136, which can be a first spring comprising a canted coil spring comprising a plurality of interconnected coils located in the recess of the seal deck and biasing against the recess and the inside flange. The coils of the canted coil spring are all generally canted in a same direction and when squeezed can further cant along the same direction.

A second seal assembly 104 located in the bore and comprising a second locking ring 146 having body with a second deck 150 having an outside surface with a notch, an inside surface with a notch, and a second deck thickness measured between the notch at the outside surface and the notch at the inside surface. A second seal element 126 attached to the second locking ring, the second seal element having an inside flange with a free end, an outside flange with a free end, and a center channel section located therebetween and defining a second seal cavity. Wherein the outside flange comprising an extended lip 129 located in the notch at the outside surface of the second deck; and a second spring comprising canted coil spring comprising a plurality of interconnected coils located in the notch of the inside surface of the second deck and the second seal cavity and biasing against the notch and the inside flange.

The free ends of the first seal element and the free ends of the second seal element can point in a same direction. For example, they can point at the retaining wall 118 or away from the retaining wall.

The interconnected coils of the first spring 136, which can be a canted coil spring, comprises a major axis and a minor axis and wherein the first deck thickness of the first locking ring has a dimension that is less than a dimension of the minor axis, such as being 0.4 to 0.9 of the dimension of the minor axis.

The seal system 100 can include interconnected coils of the first spring with each comprising a major axis and a minor axis and wherein the seal deck 198 has a seal deck thickness measured between the outside surface and the recess at the inside surface of the seal deck, and wherein the seal deck thickness has a dimension that is about 0.8 to 1.5 times a dimension of the minor axis, such as 0.9 to 1.3, 1.4, or 1.5 times. In other examples, the dimensions can be practiced outside of the disclosed range.

A projection or bump 206 can be incorporated at the outer surface of the seal deck 198. The seal deck can further comprise a second projection or bump at the outer surface the seal deck spaced from the first projection. The projections can be annular projections unitarily formed at the outer periphery of the seal deck.

The first deck 150 of the first locking ring can have a notch at the inside surface and wherein the seal deck 198 can be located in the notch. The notch at the inside surface of the first deck 150 can have a bottom wall located between two sidewalls.

The seal deck can have a side edge, and wherein the side edge can contact one of the two sidewalls of the notch on the first deck 150. The side edge can be spaced from the center channel section of the first seal element 126.

The first seal element has a center channel section thickness that is larger than a thickness of the center channel section of the second seal element.

The seal deck 198 can contact one of the two sidewalls of the notch of the first deck 150.

The memory lip seal 200 of the secondary seal 194 can comprise a frustoconical structure at the ID of the seal flange 210. The first locking ring 146 can comprise an inner flange extension comprising an ID and wherein the frustoconical structure can project into the ID of the inner flange extension. The first spring 136 is shown in contact with the seal flange and the seal flange is in contact with the inner flange extension 158a of the locking ring. The recess of the seal deck 198 comprises a bottom wall located between two sidewalls. One or both of the two sidewalls of the seal deck can slanted relative to the lengthwise axis. Part of one of the two sidewalls can be the seal flange 210.

The first spring 136 can contact the slanted sidewall of the recess on the seal deck.

In an example, the free ends of the first seal element and the free ends of the second seal element point at the first end of the cylinder, which has a retaining wall. Alternatively, the free ends of the first seal element and the free ends of the second seal element point at the second end of the cylinder.

In the present embodiment, the first spring and the second spring have coils with minor axes that are approximately equal.

The seal system 100, as a pre-packaged assembly inside a cylinder 106, can have a shaft located inside the first seal element, the second seal element, and the secondary lip seal, as shown in FIG. 5A. Service grease can be applied or located in the first seal cavity. Similarly, service grease can also be located in the second seal cavity.

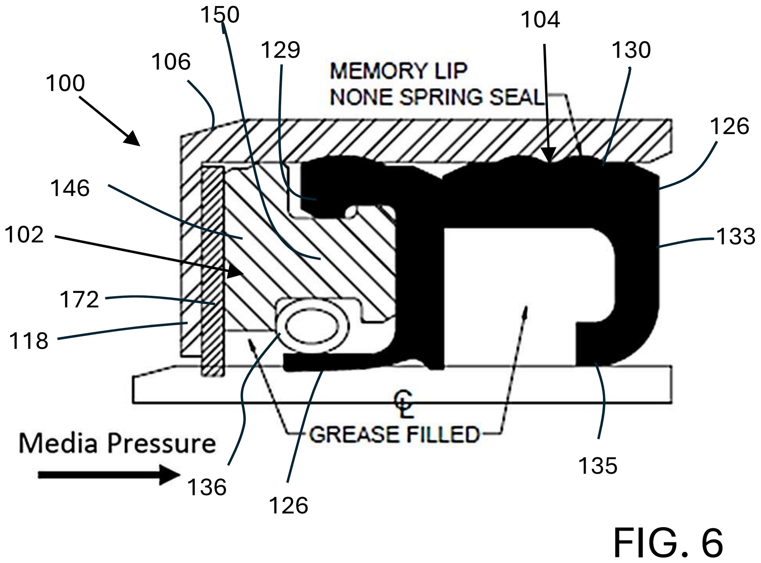

With reference now to FIG. 6, a seal system 100 provided in accordance with still further aspects of the invention is shown. The seal system 100 share many similarities with the seal systems of FIGs. 1A-5B with a few changes. The present seal system 100 has a first seal assembly 102 and a second seal assembly 104, and a sealing washer, similar to that of FIGs. 1A and 1B. In the present embodiment, the second seal assembly 104 has been modified to omit an energizer. The inside flange has also been modified, as further described below.

A seal system 100 can comprise a cylinder 106 having a body with a first end, a second end, an inside surface defining a bore, a lengthwise axis, and a retaining wall 118 at the first end. The retaining wall 118 can be a separately formed retaining disc press fit into the first end or can be unitarily formed with the body of the cylinder. A first seal assembly 102 is located in the bore and comprising a first locking ring 146 having body with a first deck having an outside surface with a notch, an inside surface with a notch, and a first deck thickness measured between the notch at the outside surface and the notch at the inside surface.

A first seal element 126 is attached to the first locking ring 146, the first seal element having an inside flange with a free end, an outside flange with a free end, and a center channel section connected to the inside and outside flanges and together defining a first seal cavity, wherein the outside flange comprising an extended lip or enlarged end section 129 located in the notch at the outside surface of the first deck 150.

A first energizer 136, which can be a first spring comprising a canted coil spring comprising a plurality of interconnected coils, located in the notch of the inside surface of the first deck and the first seal cavity of the first seal element and biasing against the notch and the inside flange.

A sealing washer 172 comprising an OD and an ID, and wherein the sealing washer can contact the retaining wall. In some examples, the sealing washer can be omitted.

A second seal assembly 104 can be located in the bore of the cylinder 106. The second seal assembly can comprise a second seal element 126 comprising an outside flange 130 with a free end, a center section 133 extending from the outside flange 130, a memory lip 135 having a frustoconical structure having a free end at an end of the center section 133, and a seal cavity defined by the outside flange, the center section, and the memory lip. Wherein the free ends of the first seal element and the free ends of the second seal element can point in a same direction. For example, they can point at the retaining wall 118 or away from the retaining wall. As shown, the free end of the outside flange 130 of the second seal element 126 contacts the first seal element of the first seal assembly 102. The outside flange of the second seal element can have a plurality of projections or bumps in contact with the bore of the cylinder. This can help to increase pressure or contact points to improve sealing. In some examples, the second seal element can be made thicker and/or more rigid so that the second seal can be placed in operation without a retainer disc 190 (FIG. 1A). However, a retainer disc can optionally be used, along with a longer cylinder, to secure the components within the cylinder.

The seal system can further comprise a shaft projecting through the center opening of the various components located inside the cylinder.

Service grease can be located in the first seal cavity. Service grease can similarly be located in the second seal cavity.

In some examples, service grease can be omitted altogether.

The OD of the sealing washer 172 can be spaced from the interior surface of the bore of the cylinder. The ID of the sealing washer should be smaller than an OD of a shaft located in the first seal assembly and the second seal assembly. The sealing washer can contact the retaining wall and the first locking ring. Alternatively, when the free ends or oriented in the opposite direction, the sealing washer 172 can contact the retaining wall and the first sealing element. The retaining wall can be formed with the body, such as machined with the body.

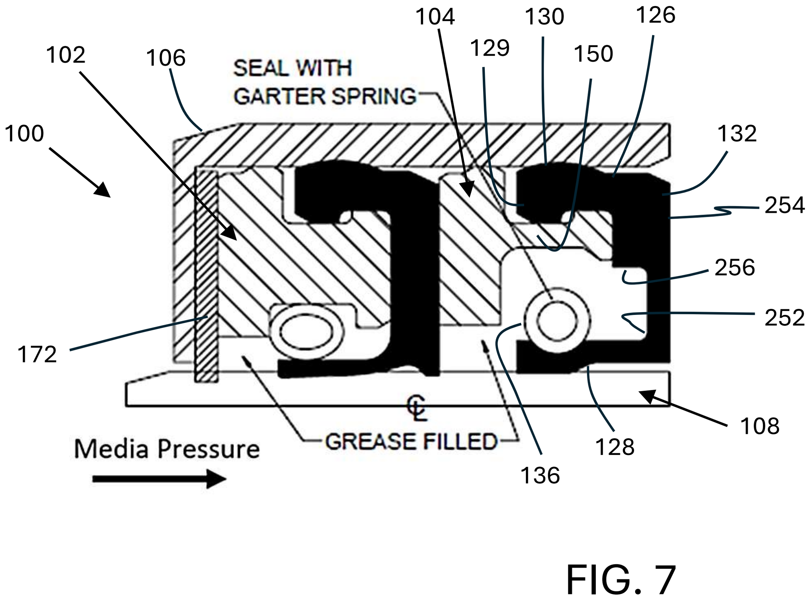

With reference now to FIG. 7, a seal system 100 provided in accordance with still further aspects of the invention is shown. The seal system 100 share many similarities with the seal systems of FIGs. 1A-6 with a few changes. The present seal system 100 has a first seal assembly 102 and a second seal assembly 104, and a sealing washer 172, similar to that of FIGs. 1A and 1B and 6. In the present embodiment, the second seal assembly 104 has been modified, as further described below.

The present a seal system 100 comprises a cylinder 106 having a body with a first end, a second end, an inside surface defining a bore, a lengthwise axis, and a retaining wall at the first end. A first seal assembly 102 is located in the bore and a second seal assembly 104 is located in the bore. The second seal assembly 104 comprising a second locking ring 146 having body with a second deck having an outside surface with a notch, an inside surface with a notch, and a second deck thickness measured between the notch at the outside surface and the notch at the inside surface; a second seal element attached to the second locking ring.

The second seal element 126 has an inside flange 128 with a free end, an outside flange 130 with a free end, and a center channel section 132 connected to the inside and outside flanges and together defining a second seal cavity. The outside flange comprising an extended lip 129 located in the notch at the outside surface of the second deck.

A second energizer 136 is provided with the second seal assembly 104. In the example shown, the second energizer 136 can be a spring comprising a plurality of interconnected coils located in the second seal cavity and biasing against the inside flange. The second spring can be a helical tension spring, in a garter or ring configuration with two ends connected. The second spring biases the inside flange inward towards the shaft, similar to how a rubber band constricts an object wrapped by the rubber band.

The center channel section 132 of the second seal element has a first surface 252 forming part of the second seal cavity and an opposing second surface 254, and wherein the first surface has a step 256 and two different surface portions having the step 256 located therebetween. The two surface portions are located at different thickness portions of the center channel section. The second deck 150 of the second locking ring contacts the first portion of the center channel section but not the second portion of the center channel section.

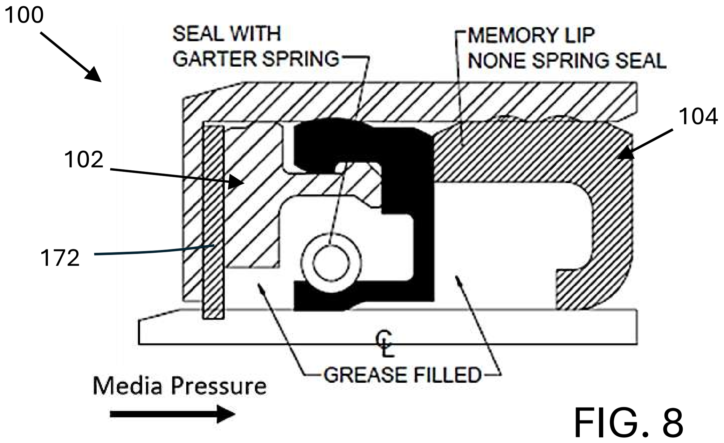

With reference now to FIG. 8, a seal system 100 provided in accordance with still further aspects of the invention is shown. The seal system 100 share many similarities with the seal systems of FIGs. 1A-7 with a few changes. The present seal system 100 has a first seal assembly 102 and a second seal assembly 104, and a sealing washer 172, similar to that of FIGs. 6 and 7. In the present embodiment, the first seal assembly 102 is similar to the second seal assembly of FIG. 7, and the second seal assembly 104 is similar to the second seal assembly of FIG. 6. In some examples, the second seal element can be made thicker and/or more rigid so that the second seal can be placed in operation without a retainer disc 190 (FIG. 1A). However, a retainer disc can optionally be used, along with a longer cylinder, to secure the components within the cylinder.

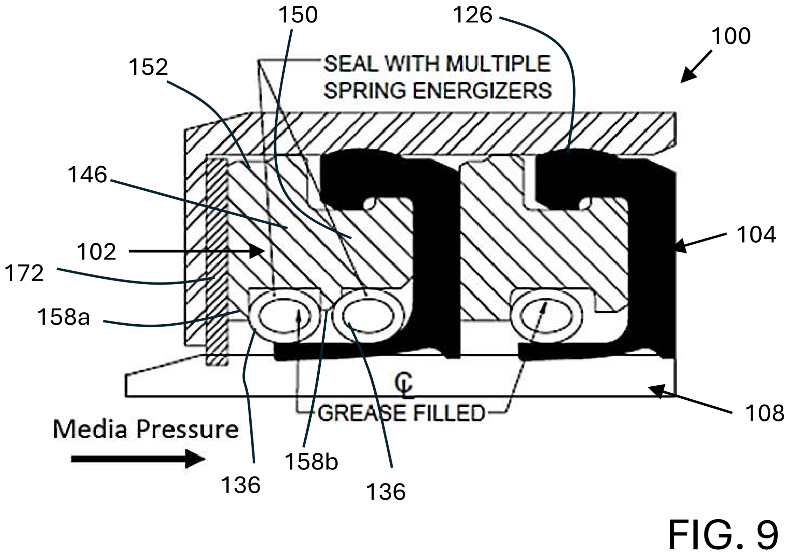

With reference now to FIG. 9, a seal system 100 provided in accordance with still further aspects of the invention is shown. The seal system 100 share many similarities with the seal systems of FIGs. 1A-8 with a few changes. The present seal system 100 has a first seal assembly 102 and a second seal assembly 104, and a sealing washer 172, similar to that of FIGs. 1A and 1B. In the present embodiment, the first seal assembly 102 has been modified, as further described below.

The present seal system 100 comprises a cylinder 106 having a body with a first end, a second end, an inside surface defining a bore, a lengthwise axis, and a retaining wall at the first end. A first seal assembly 102 is located in the bore and comprising a first locking ring 146 having body with a first deck 150 having an outside surface with a notch, an inside surface, and a first deck thickness measured between the notch at the outside surface and the inside surface. A first seal element 126 is attached to the first locking ring, the first seal element having an inside flange with a free end, an outside flange with a free end, and a center channel section connected to the inside and outside flanges and together a first seal cavity. The outside flange comprises an extended lip located in the notch at the outside surface of the first deck.

A first spring 136 comprising a canted coil spring comprising a plurality of interconnected coils is located in the first seal cavity of the first seal element and biasing against the inside surface of the first deck and the inside flange and a second spring 136 comprising a canted coil spring comprising a plurality of interconnected coils is located in the first seal cavity of the first seal element adjacent the first spring and biasing against the inside surface of the first deck and the inside flange.

The locking ring has a first inner flange extension 158a and a second inner flange extension 158b extending from the inside surface of the first deck 150 and the second inner flange extension is located between the first spring and the second spring. The second dinner flange extension 158b can have a width and a blunt tip, which can have a tapered surface.

The two springs 136, 136 can both be canted coil springs, can both have generally the same sized coils, and both bias against the inner surface of the first deck and the inside flange. The two springs can provide additional sealing forces along the inside flange to seal against the shaft 108.

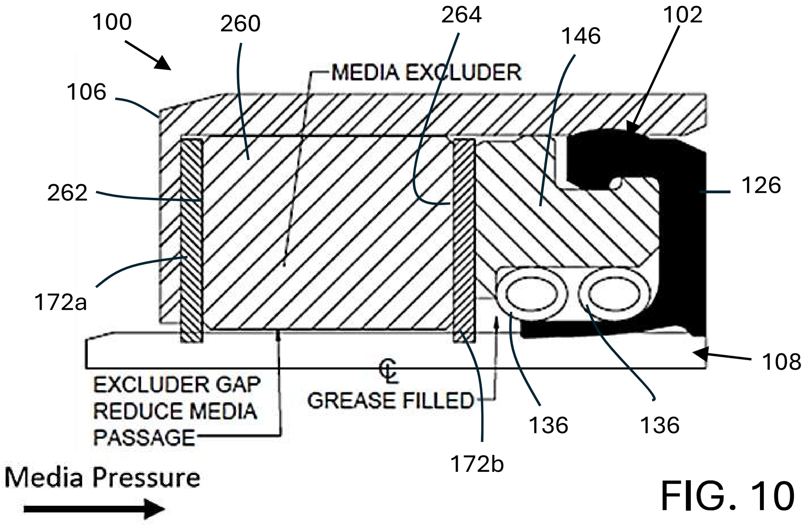

With reference now to FIG. 10, a seal system 100 provided in accordance with still further aspects of the invention is shown. The seal system 100 share many similarities with the seal systems of FIGs. 1A-9 with a few changes. The present seal system 100 has a first seal assembly 102, one or more sealing washers 172, similar to that of FIGs. 1A and 1B and elsewhere. In the present embodiment, the first seal assembly 102 is similar to the first seal assembly of FIG. 9, but a second seal assembly has been omitted. Instead, a restrictor block 260 can be used with the first seal assembly 102.

The present seal system 100 comprises a cylinder having a body with a first end, a second end, an inside surface defining a bore, a lengthwise axis, and a retaining wall at the first end. A first seal assembly 102 is located in the bore of the cylinder. The first seal assembly 102 comprising a first locking ring 146 having body with a first deck having an outside surface with a notch, an inside surface, and a first deck thickness measured between the notch at the outside surface and the inside surface. A first seal element 126 is attached to the first locking ring, the first seal element having an inside flange with a free end, an outside flange with a free end, and a center channel section connected to the inside and outside flanges and together a first seal cavity, wherein the outside flange comprising an extended lip located in the notch at the outside surface of the first deck.

A first spring 136 comprising a canted coil spring comprising a plurality of interconnected coils is located in the first seal cavity of the first seal element and biasing against the inside surface of the first deck and the inside flange. A first sealing washer 172a comprising an OD and an ID and in contact with the retaining wall. A restrictor block 260 comprising a body with an OD, an ID, a first surface 262 between the OD and the ID, and an opposed second surface 264 between the OD and the ID, and wherein the OD is in contact with the bore of the cylinder and the first surface 262 contacts the first sealing washer 172a. A second sealing washer 172b comprising an OD and an ID can be incorporated and placed in contact with the second surface 264 of the restrictor block.

The OD of the restrictor block 260 can be in an interference fit with the bore.

A second spring 136 comprising a canted coil spring comprising a plurality of interconnected coils can be located in the first seal cavity of the first seal element and biasing against the inside surface of the first deck and the inside flange.

Each of the interconnected coils of the first spring, and/or the second spring, comprises a major axis and a minor axis, and wherein the restriction block 260 has a width measured between the first surface 262 and the second surface 264, and wherein the width of the restriction block is 2 times to 4 times larger than the major axis. Preferably, the width of the restriction block is 2.5 times to 3.5 times larger than the major axis.

A shaft can be located through the opening of the first seal assembly and the ID of the restrictor block. The restrictor block can be made from a metal material. The restrictor block can be made from the same material as the locking ring. In some examples, the restrictor block can be made from a hard engineered plastic material.

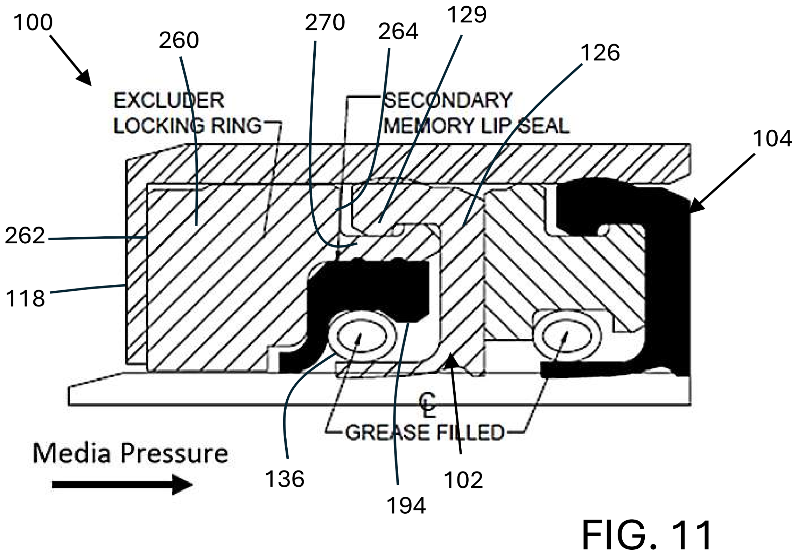

With reference now to FIG. 11, a seal system 100 provided in accordance with still further aspects of the invention is shown. The seal system 100 share many similarities with the seal systems of FIGs. 1A-10 with a few changes. The present seal system 100 has a first seal assembly 102, a second seal assembly 104, a restrictor block 260, and optionally one or more sealing washers, similar to that of FIGs. 1A and 1B and elsewhere. In the present embodiment, the first seal assembly 102 is similar to the first seal assembly of FIGs. 5A and 5B, and the second seal assembly 104 is similar to the second seal assembly of FIG. 1A. The restrictor block 260 is similar to that of FIG. 10, but has been modified to use with the first seal assembly 102, as further discussed below.

A seal system 100 is provided comprising a cylinder having a body with a first end, a second end, an inside surface defining a bore, a lengthwise axis, and a retaining wall attached to the body at the first end. A restrictor block 260 comprising a body with an OD, an ID, a first surface 262 between the OD and the ID, and an opposed second surface 262 having an arm 270 extending axially in a direction away from the first surface 262, and wherein the OD is in contact with the bore of the cylinder. In an example, the OD of the restrictor block can have an interference fit with the bore.

The arm 270 can have an upper surface with a notch for receiving the extended lip 129 of the first seal element of the first seal assembly 102. The arm can have a lower or inner surface for abutting contact with the second seal 194.

The first seal assembly 102 can be located in the bore of the cylinder and comprising: a first seal element 126 having an inside flange with a free end, an outside flange with a free end, and a center channel section connected to the inside and outside flanges and together defining a first seal cavity. The outside flange can comprise an extended lip 129 located in the notch of the arm 270 on the restrictor block 260, which extends into the first seal cavity.

A secondary lip seal 194 comprising a body with a seal deck and a seal flange extending from the seal deck and having an inside diameter (ID) can be used with the first seal assembly. The seal deck of the secondary lip seal 194 comprises an outer surface in contact with the arm 270 of the restrictor block and an inner surface comprising a recess .

A first spring 136 comprising a canted coil spring comprising a plurality of interconnected coils can be located in the recess of the seal deck and biasing against the recess and the inside flange f the first seal element.

Each of the interconnected coils of the first spring 136 can comprise a major axis and a minor axis, wherein the seal deck has a seal deck thickness measured between the outside surface and the recess at the inside surface of the seal deck, and wherein the seal deck thickness has a dimension that is about 0.9 to 1.5 times a dimension of the minor axis.

In some examples, each of the interconnected coils of the second spring of the second seal assembly comprises a major axis and a minor axis and wherein the second deck thickness of the second locking ring has a dimension that is 1.4 times to 2.5 times larger than a dimension of the minor axis.

Each of the interconnected coils of the first spring can comprise a major axis and a minor axis, and wherein the arm 270 of the restrictor block260 has a thickness that is 0.7 to 0.9 time a dimension of the minor axis.

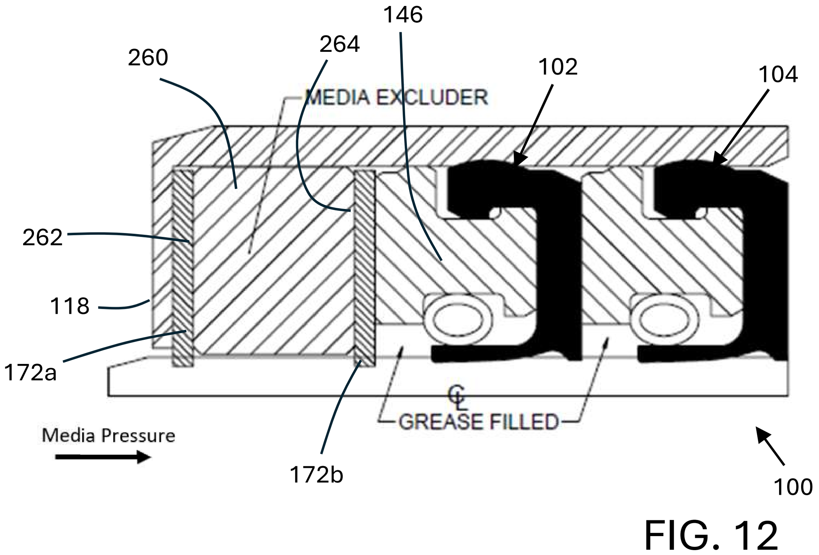

With reference now to FIG. 12, a seal system 100 provided in accordance with still further aspects of the invention is shown. The seal system 100 share many similarities with the seal systems of FIGs. 1A-11 with a few changes. The present seal system 100 has a first seal assembly 102, a second seal assembly 104, a restrictor block 260, and one or more sealing washers, similar to that of FIGs. 1A and 1B and FIG. 10. In the present embodiment, the first seal assembly 102 and the second seal assembly 104 are similar to the first and second seal assemblies of FIGs. 1A and 1B. The restrictor block 260 is similar to the restrictor block of FIG. 10. A first sealing washer 172a is shown in contact with the first surface of the retaining wall 118 and the restrictor block 260. A second sealing washer 172b is shown in contact with the second surface of the restrictor block and the locking ring 146 of the first seal assembly. In some examples, the second sealing washer 172b can be omitted.

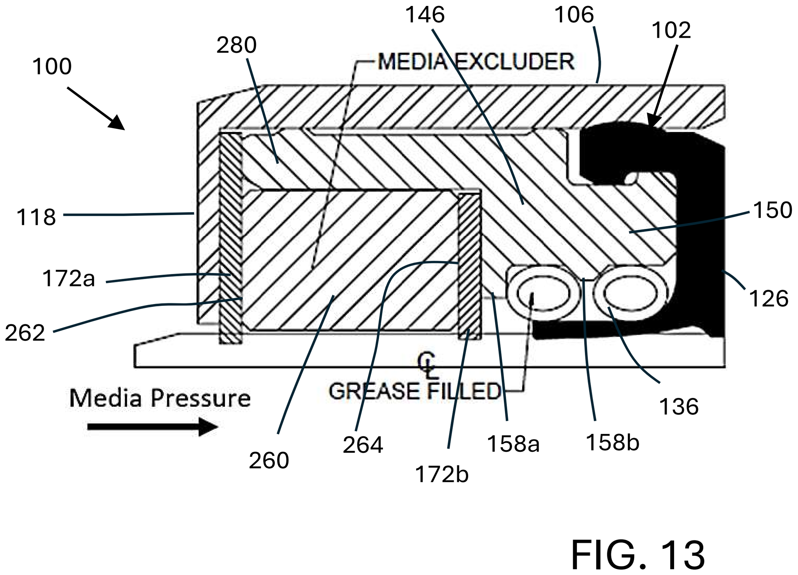

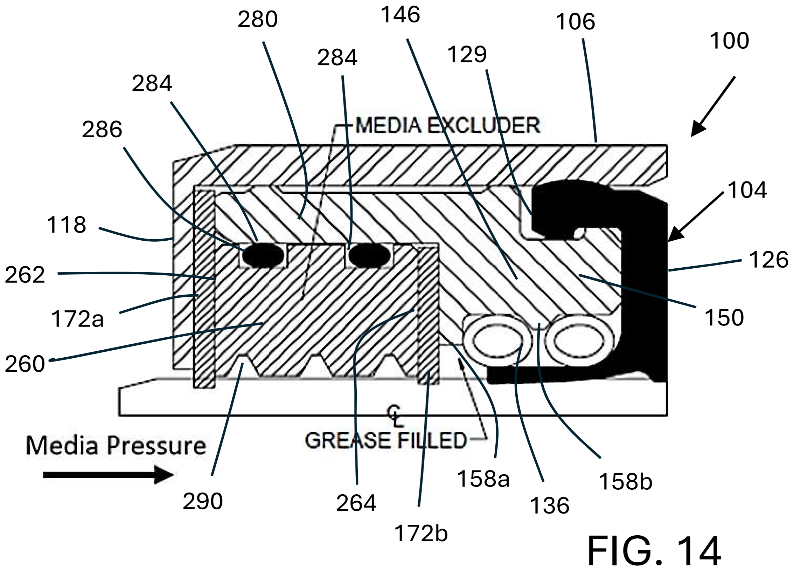

With reference now to FIG. 13, a seal system 100 provided in accordance with still further aspects of the invention is shown. The seal system 100 share many similarities with the seal systems of FIGs. 1A-12 with a few changes. The present seal system 100 has a first seal assembly 102 that resembles the first seal assembly of FIG. 10. In the present embodiment, the locking ring 146 has been modified to cooperate with a restrictor block 260, as further discussed below. FIG. 14 is similar to FIG. 13 but wherein the restrictor block has been further modified to include grooves and reliefs, as further discussed below.

A seal system 100 comprising a cylinder 106 having a body with a first end, a second end, an inside surface defining a bore, a lengthwise axis, and a retaining wall at the first end. A first seal assembly 102 is located in the bore and comprising: a first locking ring 146 having body with a first deck 150 having an outside surface with a notch, an inside surface, a first deck thickness measured between the notch at the outside surface and the inside surface. A ring extension 280 extends from the body of the locking ring. As shown, the ring extension 280 extends towards the retaining wall 118. The ring extension defining a cylinder having an OD and an ID.

A first seal element 126 is attached to the first locking ring 146. The first seal element having an inside flange with a free end, an outside flange with a free end, and a center channel section connected to the inside and outside flanges and together defining a first seal cavity. The outside flange comprising an extended lip 129 is located in the notch at the outside surface of the first deck 150.

A first spring 136 comprising a canted coil spring comprising a plurality of interconnected coils located in the first seal cavity of the first seal element and biasing against the inside surface of the first deck and the inside flange of the seal element.

A first sealing washer 172a comprising an OD and an ID and the body of the washer is in contact with the retaining wall 118.

A restrictor block 260 comprising an OD, an ID, a first surface 262 between the OD and the ID, and an opposed second surface 264 between the OD and the ID is provided. The OD of the restrictor block 260 is in contact with ID of the ring extension 280.

A second sealing washer 172b comprising an OD and an ID is provided. The second sealing washer is in contact with the first locking ring 146.

The OD of the ring extension 280 can be fitted in the bore of the cylinder in a press fit or an interference fit. The OD of the restrictor block 260 can be fitted in the bore of the ring extension 280in a press fit or an interference fit. Optionally, the second sealing washer can be omitted. If incorporated, the OD of the second sealing washer can be smaller than the OD of the first sealing washer for fit.

With reference to FIG. 14, the OD of the restrictor block 260 can comprise a ring groove 284 and an O-ring 286 located in the ring groove 284. The O-ring can serve as a static seal to seal the gap between the restrictor block 260 and the ring extension 280. Additional ring grooves and O-rings may be incorporated at the OD of the restrictor block, with only two shown in FIG. 14.

For the first seal assembly 102 of both FIGs. 13 and 14, a first seal element 126 is attached to the first locking ring 146, the first seal element having an inside flange with a free end, an outside flange with a free end, and a center channel section connected to the inside and outside flanges and together defining a first seal cavity. The outside flange comprising an extended lip 129 located in the notch at the outside surface of the first deck.

A first spring 136 comprising a canted coil spring comprising a plurality of interconnected coils is located in the first seal cavity of the first seal element and biasing against the inside surface of the first deck and the inside flange. A second spring 136 comprising a canted coil spring comprising a plurality of interconnected coils can be located in the first seal cavity adjacent the first spring and biasing against the inside surface of the first deck and the inside flange. The two springs can be spaced or separated by an annular extension or projection. For example, a first inner flange extension 158a and a second inner flange extension 158b spaced from the first inner flange extension can be provided on the inner surface of the deck 150 and wherein the second inner flange extension is located between the first spring and the second spring.

In an example, ach of the interconnected coils of the first spring comprises a major axis and a minor axis, and wherein a thickness between the OD and the ID of the ring extension 280 is about 0.7 time to about 1.3 times a dimension of the minor axis.

The ring groove 284 can comprise a bottom wall located between two sidewalls. The two sidewalls can be generally parallel to one another.

The restrictor block 260 can further comprise a relief groove 290 at the ID. The relief groove can be located closer to the first sealing washer than the second sealing washer. The a second relief groove is incorporated at the ID of the restrictor block, the second relief groove can be located closer to the second sealing washer than the first sealing washer.

In some examples, the ID of the restrictor block can comprise a third relief groove located between the first relief groove and the second relief groove. Each of the relief grooves can comprise a bottom wall located between two sidewalls. The two sidewalls of the first relief groove can be tapered to form a groove that is generally V-shaped. The bottom of the V groove can be truncated or flat, rather than a point.

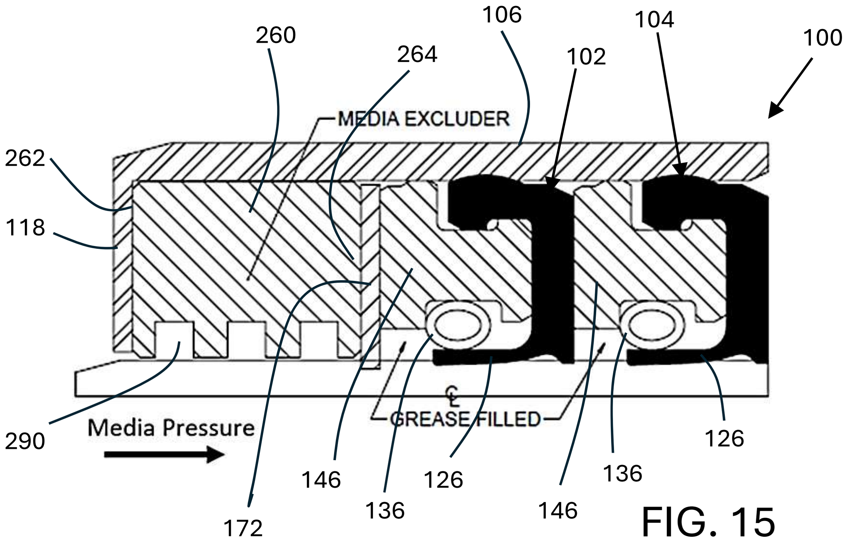

With reference now to FIG. 15, a seal system 100 provided in accordance with still further aspects of the invention is shown. The seal system 100 share many similarities with the seal systems of FIGs. 1A-14 with a few changes. The present seal system 100 has a first seal assembly 102 and a second seal assembly 104 that resemble the first and second seal assemblies of FIG. 12. The present seal system further includes a restrictor block 260 like that of FIG. 12, but wherein the ID of the restrictor block has been modified, as further discussed below.

A seal system 100 is shown comprising a cylinder 106 having a body with a first end, a second end, an inside surface defining a bore, a lengthwise axis, and a retaining wall at the first end. A first seal assembly 102 located in the bore and comprising a first locking ring 146 having body with a first deck having an outside surface with a notch, an inside surface with a notch, and a first deck thickness measured between the notch at the outside surface and the notch at the inside surface. A first seal element 126 is attached to the first locking ring, the first seal element having an inside flange with a free end, an outside flange with a free end, and a center channel section connected to the inside and outside flanges and together defining a first seal cavity. The outside flange comprising an extended lip located in the notch at the outside surface of the first deck; a first spring comprising canted coil spring comprising a plurality of interconnected coils located in the notch of the inside surface of the first deck and the first seal cavity of the first seal element and biasing against the notch and the inside flange;

The second seal assembly 104 can have similar components and positioned the first seal assembly 102.

A restrictor block 260 comprising a body with an OD, an ID, a first surface 262 between the OD and the ID, and an opposed second surface 264 between the OD and the ID, and wherein the OD is in contact with the bore of the cylinder 106.

A sealing washer comprising an OD and an ID and in contact with the second surface 264 of the restrictor block, which is spaced from the retaining wall 118. The ID of the restrictor block comprises a first relief groove 290 located closer to the retaining wall than the sealing washer 172. In other examples, the ID of the restrictor block 260 comprises a second relief groove located closer to the sealing washer 172 than the retaining wall.

In some examples, a third relief groove can be incorporated, which can be located between the first and the second relief grooves.

Each relief groove can comprise two sidewalls and a bottom wall located between the two sidewalls. In an example, the two sidewalls can be generally parallel to one another. In other examples, the sidewalls can be slanted to define a generally V-shaped groove.

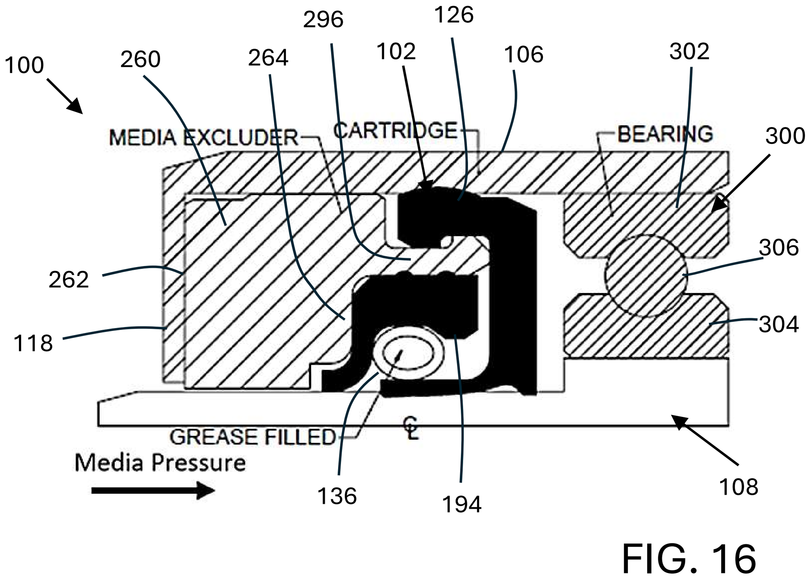

With reference now to FIG. 16, a seal system 100 provided in accordance with still further aspects of the invention is shown. The seal system 100 share many similarities with the seal systems of FIGs. 1A-15 with a few changes. The present seal system 100 has a first seal assembly 102 and a restrictor block 260 that resembles analogous components of FIG. 11. In the present embodiment, a bearing assembly is incorporated with the seal system, as further discussed below.

A seal system 100 is provided as shown comprising a cylinder 106 having a body with a first end, a second end, an inside surface defining a bore, a lengthwise axis, and a retaining wall attached to the body at the first end. A restrictor block 260 comprising an OD, an ID, a first surface 262 between the OD and the ID, and an opposed second surface 264 having an arm 296 extending axially in a direction away from the first surface 262. The OD of the restrictor block is in contact with the bore of the cylinder. The fit between the two can be a press fit or an interference fit.

A first seal assembly 102 is located in the bore and comprising a first seal element 126 having an inside flange with a free end, an outside flange with a free end, and a center channel section connected to the inside and outside flanges and together defining a first seal cavity, and wherein the outside flange comprises an extended lip located in a notch of the arm on the restrictor block, which extends into the first seal cavity.

A secondary lip seal 194 comprising a body with a seal deck and a seal flange extending from the seal deck and having an inside diameter (ID) is provided with the first seal assembly. The seal deck comprises an outer surface in contact with the arm 296 of the restrictor block 260 and an inner surface of the seal deck comprising a recess.

A first spring 136 comprising a canted coil spring comprising a plurality of interconnected coils is located in the recess of the seal deck and biasing against the recess and the inside flange.

A bearing assembly 300 is located in the bore of the cylinder and away from the retaining wall at the first end. The bearing assembly comprise an outer ring 302, an inner ring 304, a cage for retaining a plurality of rolling elements 306 and wherein the outer ring is fitted to the bore of the cylinder in an interference fit. In an example, the plurality of rolling elements are ball bearings.

In an example, the inner ring 304 of the bearing assembly has an ID and wherein the ID of the restrictor block 260 can be smaller than the ID of the inner ring. Service grease can be provided or located in the first seal cavity.

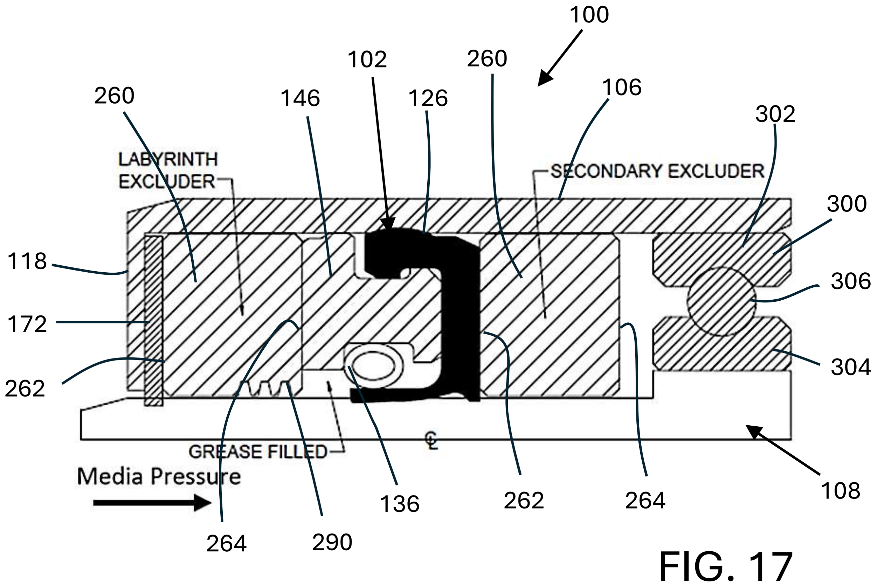

With reference now to FIG. 17, a seal system 100 provided in accordance with still further aspects of the invention is shown. The seal system 100 share many similarities with the seal systems of FIGs. 1A-16 with a few changes. The present seal system 100 has a first seal assembly 102, two restrictor blocks 260, and a bearing assembly 300. The first seal assembly is similar to the seal assemblies shown in FIGs. 1A and 1B and elsewhere. The restrictor blocks are similar to the restrictor blocks shown in FIGs. 10, 12, and 14-15, as further discussed below. In the present embodiment, a bearing assembly 300 similar to that of FIG. 16 is incorporated with the seal system.

As shown, a seal system 100 comprising a cylinder 106 having a body with a first end, a second end, an inside surface defining a bore, a lengthwise axis, and a retaining wall at the first end. A first seal assembly 102 is located in the bore and comprising a first locking ring 146 having body with a first deck having an outside surface with a notch, an inside surface, and a first deck thickness measured between the notch at the outside surface and the inside surface and a first seal element 126 attached to the first locking ring, the first seal element having an inside flange with a free end, an outside flange with a free end, and a center channel section connected to the inside and outside flanges and together defining a first seal cavity, wherein the outside flange comprising an extended lip located in the notch at the outside surface of the first deck.

A first spring 136 comprising a canted coil spring comprising a plurality of interconnected coils located in the first seal cavity of the first seal element and biasing against the inside surface of the first deck and the inside flange.

A first sealing washer 172 is provided comprising an OD and an ID and is in contact with the retaining wall 118.

A first restrictor block 260 comprising a body with an OD, an ID, a first surface 262 between the OD and the ID, and an opposed second surface 264 between the OD and the ID, and wherein the OD is in contact with the bore and the first surface 262 contacts the first sealing washer 172

A second restrictor block 260 spaced from the first restrictor block, the second restrictor block comprising body with an OD, an ID, a first surface 262 between the OD and the ID, and an opposed second surface 264 between the OD and the ID, and wherein the OD of the second restrictor block is in contact with the bore of the cylinder.

A bearing assembly 300 located in the bore and away from the retaining wall 118 at the first end, the bearing assembly comprise an outer ring 302, an inner ring 304, a cage retaining the plurality of rolling elements 306; and wherein the outer ring 302 is fitted to the bore of the cylinder in an interference fit. The bearing assembly 300 can be spaced from the second restrictor block 260.

The ID of the first restrictor block 260 can comprise a plurality of relief grooves 290 located closer to the second surface 264 of the first restrictor block 260 than the first surface 262. In an example, the plurality of relief grooves 290 comprise three relief grooves.

Each relief groove can have a groove shape that is generally V-shape along a side cross-section. In an example, the V-shape has a truncated tip between two slanted sides.

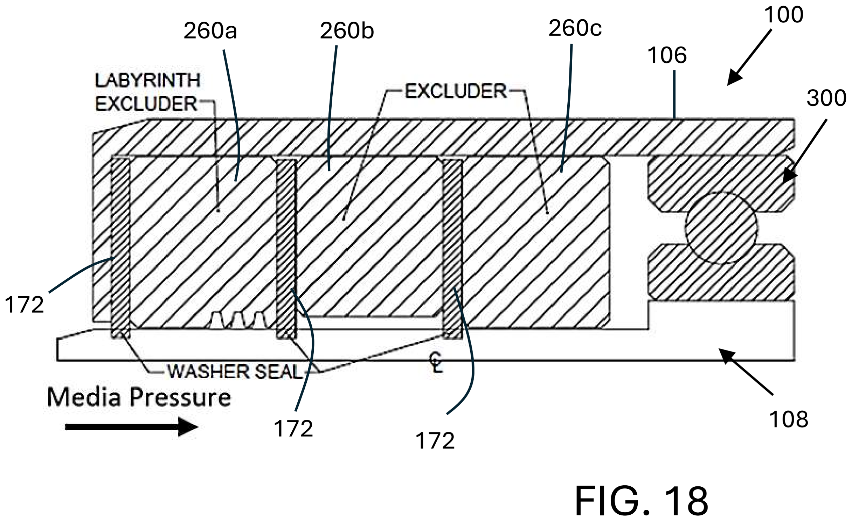

With reference now to FIG. 18, a seal system 100 provided in accordance with still further aspects of the invention is shown. The seal system 100 share many similarities with the seal systems of FIGs. 1A-17 with a few changes. The present seal system 100 has three restrictor blocks and a plurality of sealing washers. In the example shown, the first restrictor block 260 resembles the one with relief grooves shown in FIG. 17. The other two restrictor blocks 260 resemble the restrictor block of FIGs. 10 and 12.

The present seal system incorporates three sealing washers 172 and a bearing assembly 300, similar to that of FIGs. 16 and 17.

As shown, a seal system 100 is provided comprising a cylinder 106 having a body with a first end, a second end, an inside surface defining a bore, a lengthwise axis, and a retaining wall at the first end; a first sealing washer comprising an OD and an ID and in contact with the retaining wall.

A first restrictor block 260a comprising a body with an OD, an ID, a first surface between the OD and the ID, and an opposed second surface between the OD and the ID, and wherein the OD is in contact with the bore and the first surface contacts the first sealing washer.

Aa second sealing washer comprising an OD and an ID is shown in contact with the second surface of the first restrictor block 260a.

A second restrictor block 260b comprising a body with an OD, an ID, a first surface between the OD and the ID, and an opposed second surface between the OD and the ID, and wherein the OD of the second restrictor block is in contact with the bore of the cylinder and the first surface contacts the second sealing washer.

A third sealing washer is provided comprising an OD and an ID and in contact with the first surface of the second restrictor block 260b.

A third restrictor block 260c comprising a body having an OD, an ID, a first surface between the OD and the ID, and an opposed second surface between the OD and the ID, and wherein the OD of the third restrictor block is in contact with the bore and the first surface contacts the third sealing washer.

A bearing assembly 300 is located in the bore of the cylinder and away from the retaining wall at the first end. The bearing assembly comprises an outer ring, an inner ring, a cage retaining a plurality of rolling elements; and wherein the outer ring is fitted to the bore of the cylinder in an interference fit. The rolling elements can be roller or can be ball bearings.

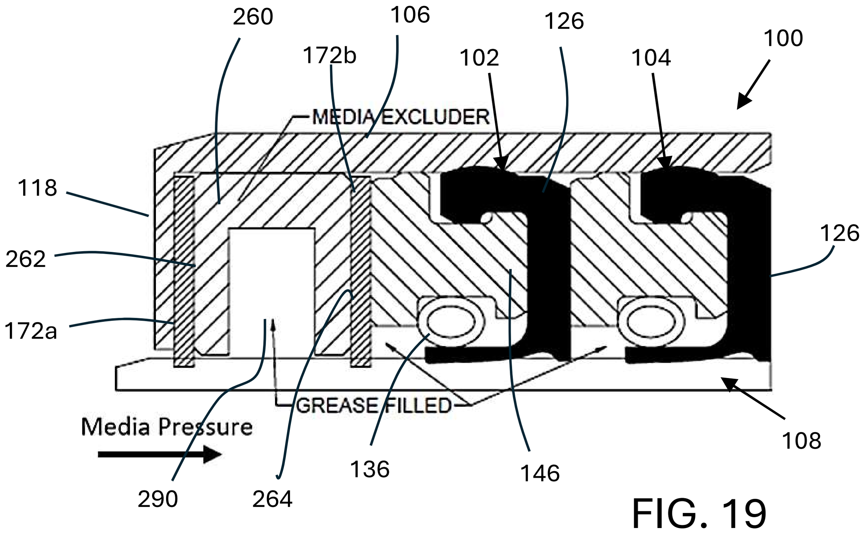

With reference now to FIG. 19, a seal system 100 provided in accordance with still further aspects of the invention is shown. The seal system 100 share many similarities with the seal systems of FIGs. 1A-17 with a few changes. The present seal system 100 has two seal assemblies and a restrictor block, similar to that of FIG. 12. However, in the present embodiment, the restrictor block has been modified, as further discussed below.

As shown, a seal system 100 comprises a cylinder 106 having a body with a first end, a second end, an inside surface defining a bore, a lengthwise axis, and a retaining wall at the first end. A first seal assembly 102 is located in the bore of the cylinder and comprising a first locking ring 146 having body with a first deck having an outside surface with a notch, an inside surface with a notch, and a first deck thickness measured between the notch at the outside surface and the notch at the inside surface. A first seal element 126 is attached to the first locking ring, the first seal element having an inside flange with a free end, an outside flange with a free end, and a center channel section connected to the inside and outside flanges and together defining a first seal cavity, wherein the outside flange comprising an extended lip located in the notch at the outside surface of the first deck. A first spring 136 comprising a canted coil spring comprising a plurality of interconnected coils is located in the notch of the inside surface of the first deck and the first seal cavity of the first seal element and biasing against the notch and the inside flange.

A first sealing washer 172a comprising an OD and an ID and is in contact with the retaining wall 118.

A restrictor block 260 comprising a body with an OD, an ID, a first surface 262 between the OD and the ID, and an opposed second surface 264, and wherein the OD is in contact with the bore of the cylinder and with the first sealing washer 172a at the first surface. The ID of the restrictor block 260 can comprise a groove 290 having a depth that is about 20% to 80% of a dimension of the restrictor block 260 between the OD and the ID; and wherein service grease is located in the groove 260 of the restrictor block.

A second seal assembly 104 comprising a second seal element attached to a second locking ring can be located in the bore of the cylinder. The second seal element 126 having an inside flange with a free end, an outside flange with a free end, and a center channel section connected to the inside and outside flanges and together defining a second seal cavity, wherein the outside flange comprising an extended lip located in the notch at the outside surface of the second deck; a second spring comprising a canted coil spring comprising a plurality of interconnected coils located in the notch of the inside surface of the second deck and the second seal cavity and biasing against the notch and the inside flange.

A second sealing washer 172b comprising an OD and an ID and can be in contact with the second surface 264 of the restrictor block 260.

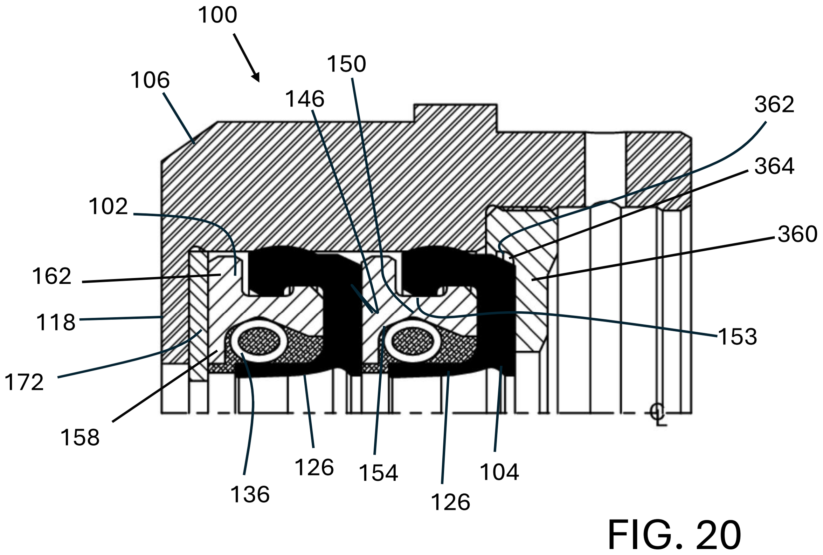

With reference now to FIG. 20, an alternative seal system 100 is provided in accordance with further aspects of the invention is shown. The present seal system 100 is similar to the seal systems of FIGs. 1A and 3 in that the free ends of the first and second sealing elements can both turn in a first direction or a second direction, with a few exceptions. The seal system 100 maintains two seal assemblies 102, 104 located inside a can 106 whose tips or free ends of the inner and outer sealing flanges 128, 130 face the same direction, toward the retaining wall 118. In other examples, the free ends can face away from the retaining wall. Each of the first and the second locking ring 146, 146 comprises a deck 150 comprising a notch or groove at the outside surface 153 for receiving the enlarged end section 129 of the outer flange 130 in a mechanical engagement, which is understood to be more than a surface to surface contact.

Each of the first locking ring and the second locking ring 146, 146 further comprises a notch or groove at the inside surface 154 for interacting with the respective energizer 136, which can be a canted coil spring. In the present embodiment, the notch at the inside surface comprises a V-shaped groove or a V-bottom groove. The V-shaped groove allows for alignment or positioning of the respective energizer within the groove.

Each of the first locking ring and the second locking ring 146, 146 further comprises an inside flange extension 158 and an outside flange extension 162. The outside flange extension has an outer edge that is spaced from the interior surface of the bore. To retain the respective seal assembly inside the bore, the deck of each locking ring is sized and shaped to press the outside flange of the seal element between the deck and the bore of the cylinder. This configuration allows the first seal assembly and the second seal assembly to be slid into the bore of the cylinder during installation without having to slide the locking rings directly against the inside surface of the bore.

The bore of the cylinder in the present embodiment comprises at least two bore sections, including a first bore section with a first bore diameter and a second bore section with a second bore diameter that differs from the first bore diameter. As shown, the bore can further include a third bore section with a third bore diameter. The second seal element can be partly located in the first bore section and partly in the second bore section.

A retaining ring 360 can be provided to retain the two seal assemblies within the bore. As shown, the retaining ring 360, which can be made from a metal material or an engineered plastic, has an outside diameter and an inside diameter, wherein the inside diameter is larger than an inside diameter of the fist seal element and the second seal element. The retaining ring 360 is pressed against the second seal element and against the bore of the cylinder. In the example shown, the retaining ring 360 is pressed against the bore at the second bore section.

In an example, the retaining ring 360 has a shoulder 362. The shoulder 362 allows the retaining ring 360 to be pressed around part of the outer flange of the second seal element and pushed against the center channel section of the second seal element. This arrangement further supports the second seal element from movement within the bore of the cylinder. In an example, an undercut 364 is provided at the shoulder. The undercut can be provided to simplify sizing between the shoulder and the seal element and therefore assembly of the retaining ring 360. In other examples, the undercut can be omitted.

Like the embodiment of FIG. 1A, another sealing washer, similar to the sealing washer 172, can be placed between the second seal element of the second seal assembly and the retaining ring 360. Optionally another sealing washer, similar to the sealing washer 172, can be placed between the first sealing element and the second locking ring. Still optionally, three washers, one sealing washer located between the retaining wall 118 and the first locking ring, a second sealing washer between the first sealing element and the second locking ring, and a third sealing washer located between the second sealing element and the retaining ring 360. Where the seal assemblies are assembled so that the free ends of the first sealing element and the second sealing element point away from the retaining wall 118, the first, second, and/or third sealing washers can still be incorporated as described, but with the free ends of the first sealing element and the second sealing element point away from the retaining wall.

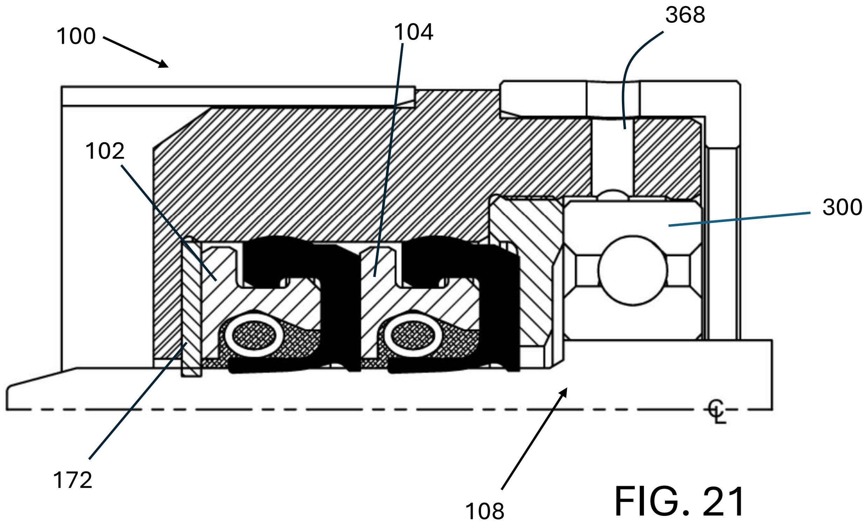

With reference now to FIG. 21 and continued reference to FIG. 20, a bearing assembly 300, such as one of bearing assemblies discussed elsewhere herein, can be located in the third bore section of the cylinder. The bearing assembly 300 can be spaced from the retaining ring 360 so that the two do not contact one another. A port 368 can be provided through the cylinder, at the third bore section. The port 368 may be used to add service grease or lubricant into the interface between the outer ring of the bearing assembly and the third bore section of the cylinder.

A shaft 108 having at least two different shaft sections, including a first shaft section of a first shaft diameter and a second shaft section of a second diameter that differs from the first shaft diameter is installed in the seal system. A transition is provided between the two shaft sections. The first seal element and the second seal element are pressed against the first shaft section with the first shaft diameter and the bearing assembly is pressed against the second shaft section with the second shaft diameter.

The present seal system and bearing assembly may be used with an equipment, such as a pump, including a medical blood pump.

A still further aspect of the invention is a method of using seal systems, pre-packaged seal systems, and pre-packaged seal and bearing assemblies, and components thereof, as shown and described.

A still further aspect of the invention is a method of manufacturing or making seal systems, pre-packaged seal systems, and pre-packaged seal and bearing assemblies, and components thereof, as shown and described.

The various seal assemblies, seal systems, gaskets or washers, pre-packaged seal systems, and pre-packaged seal and bearing systems can be interchangeable unless the components are mechanically or operationally conflicting. For example, the seal assemblies of FIGs. 5A and 5B can be used for the seal assemblies of FIG. 6. In yet another example, where a seal element is shown with an integrated excluder, a different seal element with an excluder may be used. Thus, the various embodiments described herein are intended to be interchangeable where they are compatible to do so.

As another example, various cylinders or cans have outer contours that can be sized and shaped to fit different operating environments that call for the seal assembly or combination seal and bearing assembly of the present disclosure. As such, various steps, shoulders, and split lines may be incorporated with the can or cylinder to adapt to the environment for which the particular cylinder or can is used. For example, a single shoulder may be used on the exterior of the cylinder for one application while multiple shoulders or steps may be used for the same cylinder in another application.

Although limited embodiments of seal assemblies and seal systems, and methods of operation thereof, have been specifically described and illustrated herein, many modifications and variations will be apparent to those skilled in the art. The method steps disclosed herein can be performed in a differing order as desired. The disclosure is also defined in the following claims.

### Example Embodiments

The following are numbered example embodiments of the apparatuses, devices, systems, and methods related to lip seals for sealing a gap between a shaft and a structure, such as a housing. The below listing of examples or any other examples disclosed herein may be combined in whole or in part. Elements of the examples disclosed herein are not limiting.

Example 1. A seal system comprising: a cylinder having a body with a first end, a second end, an inside surface defining a bore, and a lengthwise axis; a first seal assembly located in the bore and comprising: a first locking ring having body with a first deck having an outside surface with a notch, an inside surface with a notch, and a first deck thickness measured between the notch at the outside surface and the notch at the inside surface; a first seal element attached to the first locking ring, the first seal element having an inside flange with a free end, an outside flange with a free end, and a center channel section connected to the inside and outside flanges and together defining a first seal cavity, wherein the outside flange comprising an extended lip located in the notch at the outside surface of the first deck; a first spring comprising a canted coil spring comprising a plurality of interconnected coils located in the notch of the inside surface of the first deck and the first seal cavity of the first seal element and biasing against the notch and the inside flange; a second seal assembly located in the bore and comprising: a second locking ring having body with a second deck having an outside surface with a notch, an inside surface with a notch, and a second deck thickness measured between the notch at the outside surface and the notch at the inside surface; a second seal element attached to the second locking ring, the second seal element having an inside flange with a free end, an outside flange with a free end, and a center channel section located therebetween and defining a second seal cavity, wherein the outside flange comprising an extended lip located in the notch at the outside surface of the second deck; a second spring comprising a canted coil spring comprising a plurality of interconnected coils located in the notch of the inside surface of the second deck and the second seal cavity and biasing against the notch and the inside flange; wherein the free ends of the first seal element and the free ends of the second seal element point in a same direction; and wherein each of the interconnected coils of the first spring comprises a major axis and a minor axis and wherein the first deck thickness has a dimension that is 1.4 times to 2.5 times larger than a dimension of the minor axis.

Example 2. The assembly, system, device, apparatus, and method of any of the above or below Examples alone or in combination, wherein the second locking ring contacts the center channel section of the first seal element.

Example 3. The assembly, system, device, apparatus, and method of any of the above or below Examples alone or in combination, wherein the first end of the bore comprises a retaining wall.

Example 4. The assembly, system, device, apparatus, and method of any of the above or below Examples alone or in combination, wherein the retaining wall is unitarily formed with the body of the cylinder.

Example 5. The assembly, system, device, apparatus, and method of any of the above or below Examples alone or in combination, wherein the free ends of the first seal element and the free ends of the second seal element point at the first end.

Example 6. The assembly, system, device, apparatus, and method of any of the above or below Examples alone or in combination, further comprising a sealing washer having a body with a first surface, an opposed second surface, an outside diameter (OD), and an inside diameter (ID), and wherein the body of the sealing washer contacts both the retaining wall and the first locking ring.

Example 7. The assembly, system, device, apparatus, and method of any of the above or below Examples alone or in combination, wherein a shaft projects through the first sealing element and the second sealing element and the ID of the sealing washer.

Example 8. The assembly, system, device, apparatus, and method of any of the above or below Examples alone or in combination, wherein the first locking ring further comprises a locking flange engaging the bore of the cylinder in an interference fit.

Example 8A. The assembly, system, device, apparatus, and method of any of the above or below Examples alone or in combination, wherein the locking flange of the locking ring has a width, and wherein an end most edge of the locking flange has a width that is less than the width of the locking flange.

Example 8B. The assembly, system, device, apparatus, and method of any of the above or below Examples alone or in combination, wherein the end most edge of the locking flange has a surface with a flat section and a non-flat section.

Example 8C. The assembly, system, device, apparatus, and method of any of the above or below Examples alone or in combination, wherein the first spring biases against the notch with a flat bottom surface, a tapered bottom surface, or a bottom surface with a V-shape.

Example 8D. The assembly, system, device, apparatus, and method of any of the above or below Examples alone or in combination, wherein the second spring biases against the notch with a flat bottom surface, a tapered bottom surface, or a bottom surface with a V-shape.

Example 8E. The assembly, system, device, apparatus, and method of any of the above or below Examples alone or in combination, wherein the locking flange of the first locking ring is spaced from the bore of the cylinder.

Example 8F. The assembly, system, device, apparatus, and method of any of the above or below Examples alone or in combination, wherein the locking flange of the second locking ring is spaced from the bore of the cylinder.

Example 8G. The assembly, system, device, apparatus, and method of any of the above or below Examples alone or in combination, further comprising a retaining ring having an outside diameter and an inside diameter than is larger than an inside diameter of the second seal element, wherein the retaining ring is pressed against the second seal element and against the bore of the cylinder.

Example 8G. The assembly, system, device, apparatus, and method of any of the above or below Examples alone or in combination, further comprising a retaining ring having an outside diameter and an inside diameter than is larger than an inside diameter of the second seal element, wherein the retaining ring is pressed against the second seal element and against the bore of the cylinder.

Example 8H. The assembly, system, device, apparatus, and method of any of the above or below Examples alone or in combination, wherein the retaining ring is pressed against the center channel section and the outside flange of the second seal element.

Example 8I. The assembly, system, device, apparatus, and method of any of the above or below Examples alone or in combination, wherein the bore of the cylinder comprises at least two different bore sections with different inside diameters.

Example 8J. The assembly, system, device, apparatus, and method of any of the above or below Examples alone or in combination, wherein the locking flange is pressed against the bore of the cylinder along an edge surface of the locking flange that has a length measurement that is less than the width of the locking flange.

Example 9. The assembly, system, device, apparatus, and method of any of the above or below Examples alone or in combination, further comprising service grease located in the first seal cavity.

Example 10. The assembly, system, device, apparatus, and method of any of the above or below Examples alone or in combination, further comprising service grease located in the second seal cavity.

Example 11. The assembly, system, device, apparatus, and method of any of the above or below Examples alone or in combination, wherein each of the interconnected coils of the second spring comprises a major axis and a minor axis and wherein the second deck thickness has a dimension that is 1.4 times to 2.5 times larger than a dimension of the minor axis.

Example 12. The assembly, system, device, apparatus, and method of any of the above or below Examples alone or in combination, wherein the dimension of the second deck thickness is 1.8 times to 2.3 times larger than the dimension of the minor axis.

Example 13. The assembly, system, device, apparatus, and method of any of the above or below Examples alone or in combination, wherein the dimension of the first deck thickness is 1.8 times to 2.3 times larger than the dimension of the minor axis.

Example 14. The assembly, system, device, apparatus, and method of any of the above or below Examples alone or in combination, wherein the first locking ring contacts a retaining wall formed with the body of the cylinder and the second locking ring contacts the center channel section of the first seal element.

Example 15. The assembly, system, device, apparatus, and method of any of the above or below Examples alone or in combination, wherein the notch on the inside surface of the first deck comprises a bottom surface and two sidewalls.

Example 16. The assembly, system, device, apparatus, and method of any of the above or below Examples alone or in combination, wherein the notch on the inside surface of the second deck comprises a bottom surface and two sidewalls.

Example 17. The assembly, system, device, apparatus, and method of any of the above or below Examples alone or in combination, wherein the notch on the outside surface of the first deck comprises a bottom surface and two sidewalls.

Example 18. The assembly, system, device, apparatus, and method of any of the above or below Examples alone or in combination, wherein one of the two sidewalls is defined by a locking ring that presses against the bore of the cylinder.

Example 19. The assembly, system, device, apparatus, and method of any of the above or below Examples alone or in combination, wherein the notch on the outside surface of the second deck comprises a bottom surface and two sidewalls.

Example 20. The assembly, system, device, apparatus, and method of any of the above or below Examples alone or in combination, wherein the first seal assembly and the second seal assembly are identical in components.

Example 21. The assembly, system, device, apparatus, and method of any of the above or below Examples alone or in combination, wherein the sealing washer has a memory lip at the ID.

Example 22. The assembly, system, device, apparatus, and method of any of the above or below Examples alone or in combination, wherein the first spring is spaced from at least one of the two sidewalls.

Example 22A. The assembly, system, device, apparatus, and method of any of the above or below Examples alone or in combination, wherein the first spring is pressed against a V-bottom of the notch on the inside surface of the first deck.

Example 22B. The assembly, system, device, apparatus, and method of any of the above or below Examples alone or in combination, wherein the second spring is pressed against a V-bottom of the notch on the inside surface of the second deck.

Example 23. The assembly, system, device, apparatus, and method of any of the above or below Examples alone or in combination, wherein the first spring contacts the sidewall that is closest to the first end.

Example 24. The assembly, system, device, apparatus, and method of any of the above or below Examples alone or in combination, wherein the second spring is spaced from at least one of the two sidewalls.

Example 25. The assembly, system, device, apparatus, and method of any of the above or below Examples alone or in combination, wherein the second spring contacts the sidewall that is closest to the first end.

Example 26. The assembly, system, device, apparatus, and method of any of the above or below Examples alone or in combination, further comprising an excluder and an annular recess at an end of the center channel section of the first seal element.

Example 27. The assembly, system, device, apparatus, and method of any of the above or below Examples alone or in combination, wherein the excluder is sized and shaped to seal against a shaft.

Example 28. The assembly, system, device, apparatus, and method of any of the above or below Examples alone or in combination, further comprising an excluder and an annular recess at an end of the center channel section of the second seal element.

Example 29. The assembly, system, device, apparatus, and method of any of the above or below Examples alone or in combination, wherein the excluder is sized and shaped to seal against a shaft.

Example 30. The assembly, system, device, apparatus, and method of any of the above or below Examples alone or in combination, wherein the free ends of the first seal element and the free ends of the second seal element point at the second end, away from a retaining wall that is formed with the body of the cylinder.

Example 31. The assembly, system, device, apparatus, and method of any of the above or below Examples alone or in combination, further comprising a sealing washer in contact with the retaining wall and the first seal element.

Example 31A. The assembly, system, device, apparatus, and method of any of the above or below Examples alone or in combination, further comprising a sealing washer in contact with a seal element and a locking ring.

Example 32. The assembly, system, device, apparatus, and method of any of the above or below Examples alone or in combination, wherein the first locking ring contacts the second seal element.

Example 33. The assembly, system, device, apparatus, and method of any of the above or below Examples alone or in combination, further comprising a retaining disc having an OD and an ID and wherein the OD is engaged with the bore of the cylinder ring in an interference fit, the retaining disc being spaced from the retaining wall.

Example 34. A seal system comprising: a cylinder having a body with a first end, a second end, an inside surface defining a bore, and a lengthwise axis; a first seal assembly located in the bore and comprising: a first locking ring having body with a first deck having an outside surface with a notch, an inside surface, and a first deck thickness measured between the notch at the outside surface and the inside surface; a first seal element attached to the first locking ring, the first seal element having an inside flange with a free end, an outside flange with a free end, and a center channel section connected to the inside and outside flanges and together defining a first seal cavity, wherein the outside flange comprising an extended lip located in the notch at the outside surface of the first deck; a secondary lip seal comprising a body with a seal deck and a seal flange extending from the seal deck and having an inside diameter (ID), wherein the seal deck comprises an outer surface in contact with the inside surface of the first deck and an inner surface comprising a recess; a first spring comprising a canted coil spring comprising a plurality of interconnected coils located in the recess of the seal deck and biasing against the recess and the inside flange; and wherein the free ends of the first seal element point in a same direction.

Example 34A. The assembly, system, device, apparatus, and method of any of the above or below Examples alone or in combination, wherein the recess of the seal deck has a V-shape.

Example 34B. The assembly, system, device, apparatus, and method of any of the above or below Examples alone or in combination, wherein the recess of the seal deck has a flat bottom surface or a tapered surface.

Example 35. A seal system comprising: a cylinder having a body with a first end, a second end, an inside surface defining a bore, and a lengthwise axis; a first seal assembly located in the bore and comprising: a first locking ring having body with a first deck having an outside surface with a notch, an inside surface, and a first deck thickness measured between the notch at the outside surface and the inside surface; a first seal element attached to the first locking ring, the first seal element having an inside flange with a free end, an outside flange with a free end, and a center channel section located therebetween and defining a first seal cavity, wherein the outside flange comprising an extended lip located in the notch at the outside surface of the first deck; a secondary lip seal comprising a body with a seal deck and a seal flange extending from the seal deck and having an inside diameter (ID), wherein the seal deck comprises an outer surface in contact with the inside surface of the first deck and an inner surface comprising a recess; a first spring comprising a canted coil spring comprising a plurality of interconnected coils located in the recess of the seal deck and biasing against the recess and the inside flange; a second seal assembly located in the bore and comprising: a second locking ring having body with a second deck having an outside surface with a notch, an inside surface with a notch, and a second deck thickness measured between the notch at the outside surface and the notch at the inside surface; a second seal element attached to the second locking ring, the second seal element having an inside flange with a free end, an outside flange with a free end, and a center channel section located therebetween and defining a second seal cavity, wherein the outside flange comprising an extended lip located in the notch at the outside surface of the second deck; a second spring comprising canted coil spring comprising a plurality of interconnected coils located in the notch of the inside surface of the second deck and the second seal cavity and biasing against the notch and the inside flange; and wherein the free ends of the first seal element and the free ends of the second seal element point in a same direction.

Example 36. The assembly, system, device, apparatus, and method of any of the above or below Examples alone or in combination, wherein each of the interconnected coils of the first spring comprises a major axis and a minor axis and wherein the first deck thickness has a dimension that is less than a dimension of the minor axis.

Example 36A. The assembly, system, device, apparatus, and method of any of the above or below Examples alone or in combination, wherein the ID of the seal flange of the secondary lip seal is sized and shaped to seal against a shaft.

Example 37. The assembly, system, device, apparatus, and method of any of the above or below Examples alone or in combination, wherein each of the interconnected coils of the first spring comprises a major axis and a minor axis, wherein the seal deck has a seal deck thickness measured between the outside surface and the recess at the inside surface of the seal deck, and wherein the seal deck thickness has a dimension that is about 0.9 to 1.5 times a dimension of the minor axis.

Example 38. The assembly, system, device, apparatus, and method of any of the above or below Examples alone or in combination, further comprising a projection at the outer surface of the seal deck.

Example 39. The assembly, system, device, apparatus, and method of any of the above or below Examples alone or in combination, further comprising a second projection at the outer surface the seal deck spaced from the projection.

Example 40. The assembly, system, device, apparatus, and method of any of the above or below Examples alone or in combination, wherein the projection and the second projection are annular projections unitarily formed with the seal deck.

Example 41. The assembly, system, device, apparatus, and method of any of the above or below Examples alone or in combination, wherein the first deck has a notch at the inside surface and wherein the seal deck is located in the notch.

Example 42. The assembly, system, device, apparatus, and method of any of the above or below Examples alone or in combination, wherein the notch at the inside surface of the first deck has a bottom wall located between two sidewalls.

Example 43. The assembly, system, device, apparatus, and method of any of the above or below Examples alone or in combination, wherein the seal deck has a side edge, and wherein the side edge contacts one of the two sidewalls.

Example 44. The assembly, system, device, apparatus, and method of any of the above or below Examples alone or in combination, wherein the seal deck has a side edge that is spaced from the center channel section of the first seal element.

Example 45. The assembly, system, device, apparatus, and method of any of the above or below Examples alone or in combination, wherein the center channel section of the first seal element has a thickness that is larger than a thickness of the center channel section of the second seal element.

Example 46. The assembly, system, device, apparatus, and method of any of the above or below Examples alone or in combination, further comprising an excluder and an annular recess at an end of the center channel section of the first seal element.

Example 47. The assembly, system, device, apparatus, and method of any of the above or below Examples alone or in combination, wherein seal deck contacts one of the two sidewalls of the notch of the first deck.

Example 48. The assembly, system, device, apparatus, and method of any of the above or below Examples alone or in combination, further comprising a frustoconical structure at the ID of the seal flange.

Example 49. The assembly, system, device, apparatus, and method of any of the above or below Examples alone or in combination, wherein the first locking ring comprises an inner flange extension comprising an ID.

Example 50. The assembly, system, device, apparatus, and method of any of the above or below Examples alone or in combination, wherein the frustoconical structure projects into the ID of the inner flange extension.

Example 51. The assembly, system, device, apparatus, and method of any of the above or below Examples alone or in combination, wherein the first spring is in contact with the seal flange and the seal flange is in contact with the inner flange extension.

Example 52. The assembly, system, device, apparatus, and method of any of the above or below Examples alone or in combination, wherein the recess of the seal deck comprises a bottom wall located between two sidewalls.

Example 53. The assembly, system, device, apparatus, and method of any of the above or below Examples alone or in combination, wherein at least one of the two sidewalls of the seal deck is slanted relative to the lengthwise axis.

Example 54. The assembly, system, device, apparatus, and method of any of the above or below Examples alone or in combination, wherein the first spring contacts the slanted sidewall.

Example 55. The assembly, system, device, apparatus, and method of any of the above or below Examples alone or in combination, wherein the free ends of the first seal element and the free ends of the second seal element point at the first end of the cylinder, which has a retaining wall formed with the body of the cylinder.

Example 56. The assembly, system, device, apparatus, and method of any of the above or below Examples alone or in combination, wherein the free ends of the first seal element and the free ends of the second seal element point at the second end of the cylinder.

Example 57. The assembly, system, device, apparatus, and method of any of the above or below Examples alone or in combination, wherein the first spring and the second spring have coils with minor axes that are approximately equal.

Example 58. The assembly, system, device, apparatus, and method of any of the above or below Examples alone or in combination, further comprising a shaft located inside the first seal element, the second seal element, and the secondary lip seal.

Example 59. The assembly, system, device, apparatus, and method of any of the above or below Examples alone or in combination, further comprising service grease located in the first seal cavity.

Example 60. The assembly, system, device, apparatus, and method of any of the above or below Examples alone or in combination, further comprising service grease located in the second seal cavity.

Example 61. A seal system comprising: a cylinder having a body with a first end, a second end, an inside surface defining a bore, a lengthwise axis, and a retaining wall at the first end; a first seal assembly located in the bore and comprising: a first locking ring having body with a first deck having an outside surface with a notch, an inside surface with a notch, and a first deck thickness measured between the notch at the outside surface and the notch at the inside surface; a first seal element attached to the first locking ring, the first seal element having an inside flange with a free end, an outside flange with a free end, and a center channel section connected to the inside and outside flanges and together defining a first seal cavity, wherein the outside flange comprising an extended lip located in the notch at the outside surface of the first deck; a first spring comprising a canted coil spring comprising a plurality of interconnected coils located in the notch of the inside surface of the first deck and the first seal cavity of the first seal element and biasing against the notch and the inside flange; a sealing washer comprising an OD and an ID, and wherein the sealing washer contacts the retaining wall; a second seal assembly located in the bore and comprising: a second seal element comprising an outside flange with a free end, a center section extending from the outside flange, a memory lip having a frustoconical structure having a free end at an end of the center section, and a seal cavity defined by the outside flange, the center section, and the memory lip; and wherein the free ends of the first seal element and the free ends of the second seal element point in a same direction.

Example 62. The assembly, system, device, apparatus, and method of any of the above or below Examples alone or in combination, wherein each of the interconnected coils of the first spring comprises a major axis and a minor axis and wherein the first deck thickness has a dimension that is 1.4 times to 2.5 times larger than a dimension of the minor axis.

Example 63. The assembly, system, device, apparatus, and method of any of the above or below Examples alone or in combination, wherein the free end of the outside flange of the second seal element contacts the first seal element.

Example 64. The assembly, system, device, apparatus, and method of any of the above or below Examples alone or in combination, wherein the outside flange of the second seal element has a plurality of projections in contact with the bore of the cylinder.

Example 64A. The assembly, system, device, apparatus, and method of any of the above or below Examples alone or in combination, further comprising a retaining disc in contact with the second seal element.

Example 65. The assembly, system, device, apparatus, and method of any of the above or below Examples alone or in combination, further comprising a shaft located in the first seal assembly, the second seal assembly, and the sealing washer.

Example 66. The assembly, system, device, apparatus, and method of any of the above or below Examples alone or in combination, further comprise a shaft projecting through the center opening of the various components located inside the cylinder.

Example 67. The assembly, system, device, apparatus, and method of any of the above or below Examples alone or in combination, further comprising service grease located in the first seal cavity.

Example 68. The assembly, system, device, apparatus, and method of any of the above or below Examples alone or in combination, further comprising service grease located in the second seal cavity.

Example 69. The assembly, system, device, apparatus, and method of any of the above or below Examples alone or in combination, wherein the OD of the sealing washer is spaced from the interior surface of the bore of the cylinder.

Example 70. The assembly, system, device, apparatus, and method of any of the above or below Examples alone or in combination, wherein the ID of the sealing washer is smaller than an OD of a shaft located in the first seal assembly and the second seal assembly.

Example 71. The assembly, system, device, apparatus, and method of any of the above or below Examples alone or in combination, wherein the free ends of the first seal element and the free ends of the second seal element point at the retaining wall.

Example 72. The assembly, system, device, apparatus, and method of any of the above or below Examples alone or in combination, wherein the free ends of the first seal element and the free ends of the second seal element point away from the retaining wall.

Example 73. The assembly, system, device, apparatus, and method of any of the above or below Examples alone or in combination, wherein the sealing washer contacts the retaining wall and the first locking ring.

Example 74. The assembly, system, device, apparatus, and method of any of the above or below Examples alone or in combination, wherein the sealing washer contacts the retaining wall and the first sealing element.

Example 75. The assembly, system, device, apparatus, and method of any of the above or below Examples alone or in combination, wherein the retaining wall is formed with the body.

Example 76. A seal system comprising: a cylinder having a body with a first end, a second end, an inside surface defining a bore, a lengthwise axis, and a retaining wall at the first end; a first seal assembly located in the bore; a second seal assembly located in the bore and comprising: a second locking ring having body with a second deck having an outside surface with a notch, an inside surface with a notch, and a second deck thickness measured between the notch at the outside surface and the notch at the inside surface; a second seal element attached to the second locking ring, the second seal element having an inside flange with a free end, an outside flange with a free end, and a center channel section connected to the inside and outside flanges and together defining a second seal cavity, wherein the outside flange comprising an extended lip located in the notch at the outside surface of the second deck; a second spring comprising a plurality of interconnected coils located in the second seal cavity and biasing against the inside flange; wherein the center channel section of the second seal element has a first surface forming part of the second seal cavity and an opposing second surface; wherein the first surface has a step and two different surface portions having the step located therebetween; and wherein the second deck contacts the first portion but not the second portion.

Example 77. A seal system comprising: a cylinder having a body with a first end, a second end, an inside surface defining a bore, a lengthwise axis, and a retaining wall at the first end; a first seal assembly located in the bore and comprising: a first locking ring having body with a first deck having an outside surface with a notch, an inside surface with a notch, and a first deck thickness measured between the notch at the outside surface and the notch at the inside surface; a first seal element attached to the first locking ring, the first seal element having an inside flange with a free end, an outside flange with a free end, and a center channel section connected to the inside and outside flanges and together defining a first seal cavity, wherein the outside flange comprising an extended lip located in the notch at the outside surface of the first deck; a first spring comprising a canted coil spring comprising a plurality of interconnected coils located in the notch of the inside surface of the first deck and the first seal cavity of the first seal element and biasing against the notch and the inside flange; a second seal assembly located in the bore and comprising: a second locking ring having body with a second deck having an outside surface with a notch, an inside surface with a notch, and a second deck thickness measured between the notch at the outside surface and the notch at the inside surface; a second seal element attached to the second locking ring, the second seal element having an inside flange with a free end, an outside flange with a free end, and a center channel section connected to the inside and outside flanges and together a second seal cavity, wherein the outside flange comprising an extended lip located in the notch at the outside surface of the second deck; a second spring comprising a plurality of interconnected coils located in the second seal cavity and biasing against the inside flange; wherein the free ends of the first seal element and the free ends of the second seal element point in a same direction; and wherein each of the interconnected coils of the first spring comprises a major axis and a minor axis and wherein the first deck thickness has a dimension that is 1.4 times to 2.5 times larger than a dimension of the minor axis.

Example 78. The assembly, system, device, apparatus, and method of any of the above or below Examples alone or in combination, wherein the second spring is a helical tension spring.

Example 79. The assembly, system, device, apparatus, and method of any of the above or below Examples alone or in combination, wherein the second spring is spaced from the second deck.

Example 80. The assembly, system, device, apparatus, and method of any of the above or below Examples alone or in combination, wherein the second deck thickness has a dimension that is less than the dimension of the minor axis.

Example 81. The assembly, system, device, apparatus, and method of any of the above or below Examples alone or in combination, further comprising a retaining wall formed with the body at the first end of the cylinder.

Example 82. The assembly, system, device, apparatus, and method of any of the above or below Examples alone or in combination, wherein a sealing washer having an OD and an ID is in contact with the retaining wall and the first locking ring.

Example 83. The assembly, system, device, apparatus, and method of any of the above or below Examples alone or in combination, wherein a sealing washer having an OD and an ID is in contact with the retaining wall and the first seal element.

Example 84. The assembly, system, device, apparatus, and method of any of the above or below Examples alone or in combination, wherein the free ends of the first seal element and the free ends of the second seal element point at the second end.

Example 85. The assembly, system, device, apparatus, and method of any of the above or below Examples alone or in combination, wherein the center channel section of the second seal element has a first surface forming part of the second seal cavity and an opposing second surface.

Example 86. The assembly, system, device, apparatus, and method of any of the above or below Examples alone or in combination, wherein the first surface has a step and two different surface portions having the step located therebetween.

Example 87. The assembly, system, device, apparatus, and method of any of the above or below Examples alone or in combination, wherein the different surface portions include a first portion with a first portion thickness and a second portion with a second portion thickness that is less than the first portion thickness.

Example 88. The assembly, system, device, apparatus, and method of any of the above or below Examples alone or in combination, wherein the second deck contacts the first portion but not the second portion.

Example 89. The assembly, system, device, apparatus, and method of any of the above or below Examples alone or in combination, wherein the inside flange of the second seal element has a notch and the second spring is located in the notch.

Example 90. A seal system comprising: a cylinder having a body with a first end, a second end, an inside surface defining a bore, a lengthwise axis, and a retaining wall at the first end; a first seal assembly located in the bore and comprising: a first locking ring having body with a first deck having an outside surface with a notch, an inside surface with a notch, and a first deck thickness measured between the notch at the outside surface and the notch at the inside surface; a first seal element attached to the first locking ring, the first seal element having an inside flange with a free end, an outside flange with a free end, and a center channel section connected to the inside and outside flanges and together a first seal cavity, wherein the outside flange comprising an extended lip located in the notch at the outside surface of the first deck and the inside flange comprises a notch; a first spring comprising a plurality of interconnected coils located in the notch of the inside flange in the first seal cavity and biasing against the inside flange; a sealing washer comprising an OD and an ID, and wherein the sealing washer contacts the retaining wall; a second seal assembly located in the bore and comprising: a second seal element comprising an outside flange with a free end, a center section extending from the outside flange, a memory lip having a frustoconical structure having a free end at an end of the center section, and a seal cavity defined by the outside flange, the center section, and the memory lip; and wherein the free ends of the first seal element and the free ends of the second seal element point in a same direction.

Example 91. The assembly, system, device, apparatus, and method of any of the above or below Examples alone or in combination, wherein the free end of the outside flange of the second seal element contacts the first seal element.

Example 92. The assembly, system, device, apparatus, and method of any of the above or below Examples alone or in combination, wherein the outside flange of the second seal element has a plurality of projections in contact with the bore of the cylinder.

Example 93. The assembly, system, device, apparatus, and method of any of the above or below Examples alone or in combination, wherein the free ends of the first seal element and the free ends of the second seal element point at the retaining wall.

Example 94. The assembly, system, device, apparatus, and method of any of the above or below Examples alone or in combination, wherein the free ends of the first seal element and the free ends of the second seal element point away from the retaining wall.

Example 95. The assembly, system, device, apparatus, and method of any of the above or below Examples alone or in combination, wherein the sealing washer contacts the retaining wall and the first locking ring.

Example 96. The assembly, system, device, apparatus, and method of any of the above or below Examples alone or in combination, wherein the sealing washer contacts the retaining wall and the first seal element.

Example 97. The assembly, system, device, apparatus, and method of any of the above or below Examples alone or in combination, wherein each of the coils has a diameter and wherein the first deck thickness has a dimension that is about 0.4 to 0.9 times the diameter.

Example 98. The assembly, system, device, apparatus, and method of any of the above or below Examples alone or in combination, wherein the outside flange of the first seal element has a thickness and the outside flange of the second seal element has a thickness, which is larger than the thickness of the outside flange of the first seal element.

Example 99. A seal system comprising: a cylinder having a body with a first end, a second end, an inside surface defining a bore, a lengthwise axis, and a retaining wall at the first end; a first seal assembly located in the bore and comprising: a first locking ring having body with a first deck having an outside surface with a notch, an inside surface, and a first deck thickness measured between the notch at the outside surface and the inside surface; a first seal element attached to the first locking ring, the first seal element having an inside flange with a free end, an outside flange with a free end, and a center channel section connected to the inside and outside flanges and together a first seal cavity, wherein the outside flange comprising an extended lip located in the notch at the outside surface of the first deck; a first spring comprising a canted coil spring comprising a plurality of interconnected coils located in the first seal cavity of the first seal element and biasing against the inside surface of the first deck and the inside flange; a second spring comprising a canted coil spring comprising a plurality of interconnected coils located in the first seal cavity of the first seal element adjacent the first spring and biasing against the inside surface of the first deck and the inside flange; and an inner flange extension extending from the inside surface and located between the first spring and the second spring.

Example 100. A seal system comprising: a cylinder having a body with a first end, a second end, an inside surface defining a bore, a lengthwise axis, and a retaining wall at the first end; a first seal assembly located in the bore and comprising: a first locking ring having body with a first deck having an outside surface with a notch, an inside surface, and a first deck thickness measured between the notch at the outside surface and the inside surface; a first seal element attached to the first locking ring, the first seal element having an inside flange with a free end, an outside flange with a free end, and a center channel section connected to the inside and outside flanges and together a first seal cavity, wherein the outside flange comprising an extended lip located in the notch at the outside surface of the first deck; a first spring comprising a canted coil spring comprising a plurality of interconnected coils located in the first seal cavity of the first seal element and biasing against the inside surface of the first deck and the inside flange; a second seal assembly located in the bore and comprising: a second locking ring having body with a second deck having an outside surface with a notch, an inside surface with a notch, and a second deck thickness measured between the notch at the outside surface and the notch at the inside surface; a second seal element attached to the second locking ring, the second seal element having an inside flange with a free end, an outside flange with a free end, and a center channel section connected to the inside and outside flanges and together a second seal cavity, wherein the outside flange comprising an extended lip located in the notch at the outside surface of the second deck; a second spring comprising a canted coil spring comprising a plurality of interconnected coils located in the notch of the inside surface of the second deck and the second seal cavity and biasing against the notch and the inside flange; a third spring comprising a canted coil spring comprising a plurality of interconnected coils located in the first seal cavity of the first seal element adjacent the first spring and biasing against the inside surface of the first deck and the inside flange; and wherein the free ends of the first seal element and the free ends of the second seal element point in a same direction.

Example 101. The assembly, system, device, apparatus, and method of any of the above or below Examples alone or in combination, wherein each of the interconnected coils of the first spring comprises a major axis and a minor axis and wherein the first deck thickness has a dimension that is 1.4 times to 2.5 times larger than a dimension of the minor axis.

Example 101A. The assembly, system, device, apparatus, and method of any of the above or below Examples alone or in combination, further comprising an inner flange extension projecting between the first spring and the third spring to space the first spring and the third spring.

Example 102. The assembly, system, device, apparatus, and method of any of the above or below Examples alone or in combination, wherein each of the interconnected coils of the third spring comprises a major axis and a minor axis and wherein the first deck thickness has a dimension that is 1.4 times to 2.5 times larger than a dimension of the minor axis.

Example 103. The assembly, system, device, apparatus, and method of any of the above or below Examples alone or in combination, further comprising a first inner flange extension and a second inner flange extension spaced from the first inner flange extension, and wherein the second inner flange extension is located between the first spring and the third spring.

Example 104. The assembly, system, device, apparatus, and method of any of the above or below Examples alone or in combination, further comprising a sealing washer comprising an OD and an ID, and wherein the sealing washer is in contact with the retaining wall and the first locking ring.

Example 105. The assembly, system, device, apparatus, and method of any of the above or below Examples alone or in combination, wherein the retaining wall is unitarily formed with the body of the cylinder.

Example 106. The assembly, system, device, apparatus, and method of any of the above or below Examples alone or in combination, wherein the second inner flange extension comprises width and a tapered tip at an end of the second inner flange extension.

Example 107. The assembly, system, device, apparatus, and method of any of the above or below Examples alone or in combination, wherein the first, second, and third springs are substantially of a same size and shape.

Example 108. The assembly, system, device, apparatus, and method of any of the above or below Examples alone or in combination, wherein a length of the inside flange of the first seal element is longer than a length of the inside flange of the second seal element.

Example 109. The assembly, system, device, apparatus, and method of any of the above or below Examples alone or in combination, further comprising a sealing washer comprising an OD and an ID, and wherein the sealing washer is in contact with the retaining wall and the first seal element.

Example 110. The assembly, system, device, apparatus, and method of any of the above or below Examples alone or in combination, wherein the free ends of the first seal element and the free ends of the second seal element point at the retaining wall.

Example 111. The assembly, system, device, apparatus, and method of any of the above or below Examples alone or in combination, further comprising service grease located in the first seal cavity and contacting the first spring and the third spring.

Example 112. The assembly, system, device, apparatus, and method of any of the above or below Examples alone or in combination, further comprising service grease located in the second seal cavity.

Example 113. A seal system comprising: a cylinder having a body with a first end, a second end, an inside surface defining a bore, a lengthwise axis, and a retaining wall at the first end; a first seal assembly located in the bore and comprising: a first locking ring having body with a first deck having an outside surface with a notch, an inside surface, and a first deck thickness measured between the notch at the outside surface and the inside surface; a first seal element attached to the first locking ring, the first seal element having an inside flange with a free end, an outside flange with a free end, and a center channel section connected to the inside and outside flanges and together a first seal cavity, wherein the outside flange comprising an extended lip located in the notch at the outside surface of the first deck; a first spring comprising a canted coil spring comprising a plurality of interconnected coils located in the first seal cavity of the first seal element and biasing against the inside surface of the first deck and the inside flange; a first sealing washer comprising an OD and an ID and in contact with the retaining wall; a restrictor block comprising an OD, an ID, a first surface between the OD and the ID, and an opposed second surface between the OD and the ID, and wherein the OD is in contact with the bore and the first surface contacts the first sealing washer; and a second sealing washer comprising an OD and an ID and in contact with the second surface of the restrictor block.

Example 114. The assembly, system, device, apparatus, and method of any of the above or below Examples alone or in combination, further comprising a second spring comprising a canted coil spring comprising a plurality of interconnected coils located in the first seal cavity of the first seal element and biasing against the inside surface of the first deck and the inside flange.

Example 115. The assembly, system, device, apparatus, and method of any of the above or below Examples alone or in combination, wherein the second sealing washer is in contact with the first locking ring.

Example 116. The assembly, system, device, apparatus, and method of any of the above or below Examples alone or in combination, wherein the second sealing washer is in contact with the first seal element.

Example 117. The assembly, system, device, apparatus, and method of any of the above or below Examples alone or in combination, wherein the free ends of the first seal element point at the retaining wall.

Example 118. The assembly, system, device, apparatus, and method of any of the above or below Examples alone or in combination, wherein the free ends of the first seal element point away from the retaining wall.

Example 119. The assembly, system, device, apparatus, and method of any of the above or below Examples alone or in combination, further comprising a first inner flange extension and a second inner flange extension spaced from the first inner flange extension, and wherein the second inner flange extension is located between the first spring and the second spring.

Example 120. The assembly, system, device, apparatus, and method of any of the above or below Examples alone or in combination, wherein the retaining wall is unitarily formed with the body of the cylinder.

Example 121. The assembly, system, device, apparatus, and method of any of the above or below Examples alone or in combination, wherein each of the interconnected coils of the first spring comprises a major axis and a minor axis, and wherein the restriction block has a width measured between the first surface and the second surface, and wherein the width of the restriction block is 2 times to 4 times larger than the major axis.

Example 122. The assembly, system, device, apparatus, and method of any of the above or below Examples alone or in combination, wherein the width of the restriction block is 2.5 times to 3.5 times larger than the major axis.

Example 123. The assembly, system, device, apparatus, and method of any of the above or below Examples alone or in combination, further comprising a shaft projecting through the first seal assembly and the ID of the restrictor block.

Example 124. A seal system comprising: a cylinder having a body with a first end, a second end, an inside surface defining a bore, a lengthwise axis, and a retaining wall attached to the body at the first end; a restrictor block comprising an OD, an ID, a first surface between the OD and the ID, and an opposed second surface having an arm extending axially in a direction away from the first surface, and wherein the OD is in contact with the bore; a first seal assembly located in the bore and comprising: a first seal element having an inside flange with a free end, an outside flange with a free end, and a center channel section connected to the inside and outside flanges and together defining a first seal cavity, wherein the outside flange comprises an extended lip located in a notch of the arm on the restrictor block, which extends into the first seal cavity; a secondary lip seal comprising a body with a seal deck and a seal flange extending from the seal deck and having an inside diameter (ID), wherein the seal deck comprises an outer surface in contact with the arm of the restrictor block and an inner surface comprising a recess; and a first spring comprising a canted coil spring comprising a plurality of interconnected coils located in the recess of the seal deck and biasing against the recess and the inside flange.

Example 125. A seal system comprising: a cylinder having a body with a first end, a second end, an inside surface defining a bore, a lengthwise axis, and a retaining wall attached to the body at the first end; a restrictor block comprising an OD, an ID, a first surface between the OD and the ID, and an opposed second surface having an arm extending axially in a direction away from the first surface, and wherein the OD is in contact with the bore; a first seal assembly located in the bore and comprising: a first seal element having an inside flange with a free end, an outside flange with a free end, and a center channel section connected to the inside and outside flanges and together defining a first seal cavity, wherein the outside flange comprises an extended lip located in a notch of the arm on the restrictor block, which extends into the first seal cavity; a secondary lip seal comprising a body with a seal deck and a seal flange extending from the seal deck and having an inside diameter (ID), wherein the seal deck comprises an outer surface in contact with the arm of the restrictor block and an inner surface comprising a recess; a first spring comprising a canted coil spring comprising a plurality of interconnected coils located in the recess of the seal deck and biasing against the recess and the inside flange; a second seal assembly located in the bore and comprising: a second locking ring having body with a second deck having an outside surface with a notch, an inside surface with a notch, and a second deck thickness measured between the notch at the outside surface and the notch at the inside surface; a second seal element attached to the second locking ring, the second seal element having an inside flange with a free end, an outside flange with a free end, and a center channel section connected to the inside and outside flanges and together defining a second seal cavity, wherein the outside flange comprising an extended lip located in the notch at the outside surface of the second deck; a second spring comprising a canted coil spring comprising a plurality of interconnected coils located in the notch of the inside surface of the second deck and the second seal cavity and biasing against the notch and the inside flange; and wherein the free ends of the first seal element and the free ends of the second seal element point in a same direction.

Example 126. The assembly, system, device, apparatus, and method of any of the above or below Examples alone or in combination, wherein seal flange contacts the second surface of the restrictor block.

Example 127. The assembly, system, device, apparatus, and method of any of the above or below Examples alone or in combination, further comprising a frustoconical structure at the ID of the seal flange.

Example 128. The assembly, system, device, apparatus, and method of any of the above or below Examples alone or in combination, wherein the second surface of the restrictor block has a step defining a receiving cavity, and wherein the frustoconical structure projects into the receiving cavity.

Example 129. The assembly, system, device, apparatus, and method of any of the above or below Examples alone or in combination, wherein the first spring is in contact with the seal flange.

Example 130. The assembly, system, device, apparatus, and method of any of the above or below Examples alone or in combination, wherein the second locking ring contacts the first seal element.

Example 131. The assembly, system, device, apparatus, and method of any of the above or below Examples alone or in combination, wherein the retaining wall is unitarily formed with the body of the cylinder, and the free of the first seal element and the free ends of the second seal element point at the retaining wall.

Example 131A. The assembly, system, device, apparatus, and method of any of the above or below Examples alone or in combination, wherein the restrictor block has a width and a contact edge that contacts the bore of the cylinder along a length that is less than the width.

Example 131B. The assembly, system, device, apparatus, and method of any of the above or below Examples alone or in combination, wherein the locking flange of the locking ring has a width and a contact edge that contacts the bore of the cylinder along a length that is less than the width.

Example 132. The assembly, system, device, apparatus, and method of any of the above or below Examples alone or in combination, wherein each of the interconnected coils of the first spring comprises a major axis and a minor axis, wherein the seal deck has a seal deck thickness measured between the outside surface and the recess at the inside surface of the seal deck, and wherein the seal deck thickness has a dimension that is about 0.9 to 1.5 times a dimension of the minor axis.

Example 133. The assembly, system, device, apparatus, and method of any of the above or below Examples alone or in combination, wherein each of the interconnected coils of the second spring comprises a major axis and a minor axis and wherein the second deck thickness has a dimension that is 1.4 times to 2.5 times larger than a dimension of the minor axis.

Example 134. The assembly, system, device, apparatus, and method of any of the above or below Examples alone or in combination, wherein each of the interconnected coils of the first spring comprises a major axis and a minor axis, and wherein the arm of the restrictor block has a thickness that is 0.7 to 0.9 time a dimension of the minor axis.

Example 135. The assembly, system, device, apparatus, and method of any of the above or below Examples alone or in combination, further comprising service grease in the first cavity.

Example 136. The assembly, system, device, apparatus, and method of any of the above or below Examples alone or in combination, further comprising service grease in the second cavity.

Example 137. The assembly, system, device, apparatus, and method of any of the above or below Examples alone or in combination, further comprising a sealing washer having a body with a first surface, an opposed second surface, an outside diameter (OD), and an inside diameter (ID), and wherein the body of the sealing washer contacts both the retaining wall and the first surface of the restrictor block.

Example 138. A seal system comprising: a cylinder having a body with a first end, a second end, an inside surface defining a bore, a lengthwise axis, and a retaining wall at the first end; a first seal assembly located in the bore and comprising: a first locking ring having body with a first deck having an outside surface with a notch, an inside surface with a notch, and a first deck thickness measured between the notch at the outside surface and the notch at the inside surface; a first seal element attached to the first locking ring, the first seal element having an inside flange with a free end, an outside flange with a free end, and a center channel section connected to the inside and outside flanges and together defining a first seal cavity, wherein the outside flange comprising an extended lip located in the notch at the outside surface of the first deck; a first spring comprising canted coil spring comprising a plurality of interconnected coils located in the notch of the inside surface of the first deck and the first seal cavity of the first seal element and biasing against the notch and the inside flange; a second seal assembly located in the bore and comprising: a second locking ring having body with a second deck having an outside surface with a notch, an inside surface with a notch, and a second deck thickness measured between the notch at the outside surface and the notch at the inside surface; a second seal element attached to the second locking ring, the second seal element having an inside flange with a free end, an outside flange with a free end, and a center channel section connected to the inside and outside flanges and together defining a second seal cavity, wherein the outside flange comprising an extended lip located in the notch at the outside surface of the second deck; a second spring comprising a canted coil spring comprising a plurality of interconnected coils located in the notch of the inside surface of the second deck and the second seal cavity and biasing against the notch and the inside flange; a first sealing washer comprising an OD and an ID and in contact with the retaining wall; a restrictor block comprising an OD, an ID, a first surface between the OD and the ID, and an opposed second surface between the OD and the ID, and wherein the OD is in contact with the bore and the first surface is in contact with the first sealing washer; and a second sealing washer comprising an OD and an ID and in contact with the second surface of the restrictor block.

Example 139. The assembly, system, device, apparatus, and method of any of the above or below Examples alone or in combination, wherein the second sealing washer is in contact with the first locking ring.

Example 140. The assembly, system, device, apparatus, and method of any of the above or below Examples alone or in combination, wherein the free ends of the first seal element and the free ends of the second seal element point in a same direction.

Example 141. The assembly, system, device, apparatus, and method of any of the above or below Examples alone or in combination, wherein each of the interconnected coils of the first spring comprises a major axis and a minor axis and wherein the first deck thickness has a dimension that is 1.4 times to 2.5 times larger than a dimension of the minor axis.

Example 142. The assembly, system, device, apparatus, and method of any of the above or below Examples alone or in combination, wherein the second sealing washer is in contact with the first seal element.

Example 143. The assembly, system, device, apparatus, and method of any of the above or below Examples alone or in combination, wherein the free ends of the first seal element and the free ends of the second seal element point at the retaining wall.

Example 144. The assembly, system, device, apparatus, and method of any of the above or below Examples alone or in combination, wherein the free ends of the first seal element and the free ends of the second seal element point away from the retaining wall

Example 145. A seal system comprising: a cylinder having a body with a first end, a second end, an inside surface defining a bore, a lengthwise axis, and a retaining wall at the first end; a first seal assembly located in the bore and comprising: a first locking ring having body with a first deck having an outside surface with a notch, an inside surface, a first deck thickness measured between the notch at the outside surface and the inside surface, and a ring extension extending towards the retaining wall, the ring extension defining a cylinder having an OD and an ID; a first seal element attached to the first locking ring, the first seal element having an inside flange with a free end, an outside flange with a free end, and a center channel section connected to the inside and outside flanges and together defining a first seal cavity, wherein the outside flange comprising an extended lip located in the notch at the outside surface of the first deck; a first spring comprising a canted coil spring comprising a plurality of interconnected coils located in the first seal cavity of the first seal element and biasing against the inside surface of the first deck and the inside flange; a first sealing washer comprising an OD and an ID and in contact with the retaining wall; a restrictor block comprising an OD, an ID, a first surface between the OD and the ID, and an opposed second surface between the OD and the ID, and wherein the OD of the restrictor block is in contact with the ID of the ring extension; and a second sealing washer comprising an OD and an **ID** and in contact with the first locking ring.

Example 146. A seal system comprising: a cylinder having a body with a first end, a second end, an inside surface defining a bore, a lengthwise axis, and a retaining wall at the first end; a first seal assembly located in the bore and comprising: a first locking ring having body with a first deck having an outside surface with a notch, an inside surface, a first deck thickness measured between the notch at the outside surface and the inside surface, and a ring extension extending towards the retaining wall, the ring extension defining a cylinder having an OD and an ID; a first seal element attached to the first locking ring, the first seal element having an inside flange with a free end, an outside flange with a free end, and a center channel section connected to the inside and outside flanges and together defining a first seal cavity, wherein the outside flange comprising an extended lip located in the notch at the outside surface of the first deck; a first spring comprising a canted coil spring comprising a plurality of interconnected coils located in the first seal cavity of the first seal element and biasing against the inside surface of the first deck and the inside flange; a first sealing washer comprising an OD and an ID and in contact with the retaining wall; a restrictor block comprising an OD, an ID, a first surface between the OD and the ID, and an opposed second surface between the OD and the ID, and wherein the OD of the restrictor block is in contact with ID of the ring extension; a second sealing washer comprising an OD and an ID and in contact with the first locking ring; and wherein the OD of the restrictor block comprises a ring groove and an O-ring located in the ring groove.

Example 147. A seal system comprising: a cylinder having a body with a first end, a second end, an inside surface defining a bore, a lengthwise axis, and a retaining wall at the first end; a first seal assembly located in the bore and comprising: a first locking ring having body with a first deck having an outside surface with a notch, an inside surface, a first deck thickness measured between the notch at the outside surface and the inside surface, and a ring extension extending towards the retaining wall, the ring extension defining a cylinder having an OD and an ID; a first seal element attached to the first locking ring, the first seal element having an inside flange with a free end, an outside flange with a free end, and a center channel section connected to the inside and outside flanges and together defining a first seal cavity, wherein the outside flange comprising an extended lip located in the notch at the outside surface of the first deck; a first spring comprising a canted coil spring comprising a plurality of interconnected coils located in the first seal cavity of the first seal element and biasing against the inside surface of the first deck and the inside flange; a second spring comprising a canted coil spring comprising a plurality of interconnected coils located in the first seal cavity adjacent the first spring and biasing against the inside surface of the first deck and the inside flange; a first sealing washer comprising an OD and an ID and in contact with the retaining wall; a restrictor block comprising an OD, an ID, a first surface between the OD and the ID, and an opposed second surface between the OD and the ID, and wherein the OD of the restrictor block is in contact with ID of the ring extension; and a second sealing washer comprising an OD and an ID and in contact with the first locking ring.

Example 148. The assembly, system, device, apparatus, and method of any of the above or below Examples alone or in combination, wherein the free ends of the first seal element point at the retaining wall.

Example 149. The assembly, system, device, apparatus, and method of any of the above or below Examples alone or in combination, wherein the OD of the first sealing washer is larger than the OD of the second sealing washer.

Example 150. The assembly, system, device, apparatus, and method of any of the above or below Examples alone or in combination, wherein the first surface of the restrictor block contacts the first sealing washer.

Example 151. The assembly, system, device, apparatus, and method of any of the above or below Examples alone or in combination, wherein the second surface of the restrictor block contact with the second sealing washer.

Example 152. The assembly, system, device, apparatus, and method of any of the above or below Examples alone or in combination, further comprising a first inner flange extension and a second inner flange extension spaced from the first inner flange extension, and wherein the second inner flange extension is located between the first spring and the second spring.

Example 153. The assembly, system, device, apparatus, and method of any of the above or below Examples alone or in combination, wherein the retaining wall is unitarily formed with the body of the cylinder.

Example 154. The assembly, system, device, apparatus, and method of any of the above or below Examples alone or in combination, wherein the second inner flange extension comprises width and a tapered tip at an end of the second inner flange extension.

Example 155. The assembly, system, device, apparatus, and method of any of the above or below Examples alone or in combination, wherein each of the interconnected coils of the first spring comprises a major axis and a minor axis, wherein a thickness between the OD and the ID of the ring extension is about 0.7 time to about 1.3 times a dimension of the minor axis.

Example 156. The assembly, system, device, apparatus, and method of any of the above or below Examples alone or in combination, wherein the OD of the restrictor block comprises a ring groove and an O-ring located in the ring groove.

Example 157. The assembly, system, device, apparatus, and method of any of the above or below Examples alone or in combination, wherein the ring groove is a first ring groove and the O-ring is a first O-ring, and further comprising a second ring groove space from the first ring groove having a second O-ring located in the second ring groove.

Example 158. The assembly, system, device, apparatus, and method of any of the above or below Examples alone or in combination, wherein the first ring groove comprises a bottom wall located between two sidewalls.

Example 159. The assembly, system, device, apparatus, and method of any of the above or below Examples alone or in combination, wherein the two sidewalls are generally parallel to one another.

Example 160. The assembly, system, device, apparatus, and method of any of the above or below Examples alone or in combination, wherein the ID of the restrictor block comprises a relief groove located closer to the first sealing washer than the second sealing washer.

Example 161. The assembly, system, device, apparatus, and method of any of the above or below Examples alone or in combination, wherein the relief groove is a first relief groove, and wherein the ID of the restrictor block comprises a second relief groove located closer to the second sealing washer than the first sealing washer.

Example 162. The assembly, system, device, apparatus, and method of any of the above or below Examples alone or in combination, wherein the ID of the restrictor block comprises a third relief groove located between the first relief groove and the second relief groove.

Example 163. The assembly, system, device, apparatus, and method of any of the above or below Examples alone or in combination, wherein the first relief groove comprises a bottom wall located between two sidewalls.

Example 164. The assembly, system, device, apparatus, and method of any of the above or below Examples alone or in combination, wherein the two sidewalls of the first relief groove are tapered.

Example 165. The assembly, system, device, apparatus, and method of any of the above or below Examples alone or in combination, further comprising an excluder and an annular recess at an end of the center channel section of the first seal element.

Example 166. The assembly, system, device, apparatus, and method of any of the above or below Examples alone or in combination, further comprising service grease located in the first seal cavity.

Example 167. A seal system comprising: a cylinder having a body with a first end, a second end, an inside surface defining a bore, a lengthwise axis, and a retaining wall at the first end; a first seal assembly located in the bore and comprising: a first locking ring having body with a first deck having an outside surface with a notch, an inside surface with a notch, and a first deck thickness measured between the notch at the outside surface and the notch at the inside surface; a first seal element attached to the first locking ring, the first seal element having an inside flange with a free end, an outside flange with a free end, and a center channel section connected to the inside and outside flanges and together defining a first seal cavity, wherein the outside flange comprising an extended lip located in the notch at the outside surface of the first deck; a first spring comprising canted coil spring comprising a plurality of interconnected coils located in the notch of the inside surface of the first deck and the first seal cavity of the first seal element and biasing against the notch and the inside flange; a restrictor block comprising an OD, an ID, a first surface between the OD and the ID, and an opposed second surface between the OD and the ID, and wherein the OD is in contact with the bore; a sealing washer comprising an OD and an ID and in contact with the second surface of the restrictor block, which is spaced from the retaining wall; wherein the ID of the restrictor block comprises a first relief groove located closer to the retaining wall than the sealing washer; and wherein the ID of the restrictor block comprises a second relief groove located closer to the sealing washer than the retaining wall.

Example 168. The seal system of claim 165, further comprising a second seal assembly located in the bore and comprising: a second locking ring having body with a second deck having an outside surface with a notch, an inside surface with a notch, and a second deck thickness measured between the notch at the outside surface and the notch at the inside surface; a second seal element attached to the second locking ring, the second seal element having an inside flange with a free end, an outside flange with a free end, and a center channel connected to the inside and outside flanges and together defining a second seal cavity, wherein the outside flange comprising an extended lip located in the notch at the outside surface of the second deck; and a second spring comprising a canted coil spring comprising a plurality of interconnected coils located in the notch of the inside surface of the second deck and the second seal cavity and biasing against the notch and the inside flange.

Example 169. A seal system comprising: a cylinder having a body with a first end, a second end, an inside surface defining a bore, a lengthwise axis, and a retaining wall at the first end; a first seal assembly located in the bore and comprising: a first locking ring having body with a first deck having an outside surface with a notch, an inside surface with a notch, and a first deck thickness measured between the notch at the outside surface and the notch at the inside surface; a first seal element attached to the first locking ring, the first seal element having an inside flange with a free end, an outside flange with a free end, and a center channel section connected to the inside and outside flanges and together defining a first seal cavity, wherein the outside flange comprising an extended lip located in the notch at the outside surface of the first deck; a first spring comprising canted coil spring comprising a plurality of interconnected coils located in the notch of the inside surface of the first deck and the first seal cavity of the first seal element and biasing against the notch and the inside flange; a second seal assembly located in the bore and comprising: a second locking ring having body with a second deck having an outside surface with a notch, an inside surface with a notch, and a second deck thickness measured between the notch at the outside surface and the notch at the inside surface; a second seal element attached to the second locking ring, the second seal element having an inside flange with a free end, an outside flange with a free end, and a center channel connected to the inside and outside flanges and together defining a second seal cavity, wherein the outside flange comprising an extended lip located in the notch at the outside surface of the second deck; a second spring comprising a canted coil spring comprising a plurality of interconnected coils located in the notch of the inside surface of the second deck and the second seal cavity and biasing against the notch and the inside flange; a restrictor block comprising an OD, an ID, a first surface between the OD and the ID, and an opposed second surface between the OD and the ID, and wherein the OD is in contact with the bore; and a sealing washer comprising an OD and an ID and in contact with the second surface of the restrictor block, which is spaced from the retaining wall.

Example 170. The assembly, system, device, apparatus, and method of any of the above or below Examples alone or in combination, wherein the first surface of the restrictor block is in contact with the retaining wall.

Example 171. The assembly, system, device, apparatus, and method of any of the above or below Examples alone or in combination, wherein the sealing washer is in contact with the first locking ring.

Example 172. The assembly, system, device, apparatus, and method of any of the above or below Examples alone or in combination, wherein the first seal element is in contact with the second locking ring.

Example 173. The assembly, system, device, apparatus, and method of any of the above or below Examples alone or in combination, wherein the free ends of the first seal element and the free ends of the second seal element point in a same direction; and

Example 174. The assembly, system, device, apparatus, and method of any of the above or below Examples alone or in combination, wherein the fee ends of the first seal element and the free ends of the second seal element point at the retaining wall.

Example 175. The assembly, system, device, apparatus, and method of any of the above or below Examples alone or in combination, wherein the fee ends of the first seal element and the free ends of the second seal element point away from the retaining wall.

Example 176. The assembly, system, device, apparatus, and method of any of the above or below Examples alone or in combination, wherein the ID of the restrictor block comprises a relief groove located closer to the retaining wall than the sealing washer.

Example 177. The assembly, system, device, apparatus, and method of any of the above or below Examples alone or in combination, wherein the relief groove is a first relief groove, and wherein the ID of the restrictor block comprises a second relief groove located closer to the sealing washer than the retaining wall.

Example 178. The assembly, system, device, apparatus, and method of any of the above or below Examples alone or in combination, wherein the ID of the restrictor block comprises a third relief groove located between the first relief groove and the second relief groove.

Example 179. The assembly, system, device, apparatus, and method of any of the above or below Examples alone or in combination, wherein the first relief groove comprises a bottom wall located between two sidewalls.

Example 180. The assembly, system, device, apparatus, and method of any of the above or below Examples alone or in combination, wherein the two sidewalls of the first relief groove are generally parallel to one another.

Example 181. The assembly, system, device, apparatus, and method of any of the above or below Examples alone or in combination, further comprising an excluder and an annular recess at an end of the center channel section of the first seal element.

Example 182. The assembly, system, device, apparatus, and method of any of the above or below Examples alone or in combination, further comprising service grease located in the first seal cavity.

Example 183. A seal system comprising: a cylinder having a body with a first end, a second end, an inside surface defining a bore, a lengthwise axis, and a retaining wall attached to the body at the first end; a restrictor block comprising an OD, an ID, a first surface between the OD and the ID, and an opposed second surface having an arm extending axially in a direction away from the first surface, and wherein the OD is in contact with the bore; a first seal assembly located in the bore and comprising: a first seal element having an inside flange with a free end, an outside flange with a free end, and a center channel section connected to the inside and outside flanges and together defining a first seal cavity, wherein the outside flange comprises an extended lip located in a notch of the arm on the restrictor block, which extends into the first seal cavity; a secondary lip seal comprising a body with a seal deck and a seal flange extending from the seal deck and having an inside diameter (ID), wherein the seal deck comprises an outer surface in contact with the arm of the restrictor block and an inner surface comprising a recess; a first spring comprising a canted coil spring comprising a plurality of interconnected coils located in the recess of the seal deck and biasing against the recess and the inside flange; and a bearing assembly located in the bore and away from the retaining wall at the first end , the bearing assembly comprise an outer ring, an inner ring, a cage retaining a plurality of rolling elements; and wherein the outer ring is fitted to the bore of the cylinder in an interference fit.

Example 184. The assembly, system, device, apparatus, and method of any of the above or below Examples alone or in combination, wherein the plurality of rolling elements are ball bearings.

Example 185. The assembly, system, device, apparatus, and method of any of the above or below Examples alone or in combination, wherein the inner ring has an ID and wherein the ID of the restrictor block is smaller than the ID of the inner ring.

Example 186. The assembly, system, device, apparatus, and method of any of the above or below Examples alone or in combination, further comprising service grease located in the first seal cavity.

Example 187. A seal system comprising: a cylinder having a body with a first end, a second end, an inside surface defining a bore, a lengthwise axis, and a retaining wall at the first end; a first seal assembly located in the bore and comprising: a first locking ring having body with a first deck having an outside surface with a notch, an inside surface, and a first deck thickness measured between the notch at the outside surface and the inside surface; a first seal element attached to the first locking ring, the first seal element having an inside flange with a free end, an outside flange with a free end, and a center channel section connected to the inside and outside flanges and together defining a first seal cavity, wherein the outside flange comprising an extended lip located in the notch at the outside surface of the first deck; a first spring comprising a canted coil spring comprising a plurality of interconnected coils located in the first seal cavity of the first seal element and biasing against the inside surface of the first deck and the inside flange; a first sealing washer comprising an OD and an ID and in contact with the retaining wall; a first restrictor block comprising an OD, an ID, a first surface between the OD and the ID, and an opposed second surface between the OD and the ID, and wherein the OD is in contact with the bore and the first surface contacts the first sealing washer; a second restrictor block spaced from the first restrictor block, the second restrictor block comprising an OD, an ID, a first surface between the OD and the ID, and an opposed second surface between the OD and the ID, and wherein the OD of the second restrictor block is in contact with the bore; and a bearing assembly located in the bore and away from the retaining wall at the first end, the bearing assembly comprise an outer ring, an inner ring, a cage retaining a plurality of rolling elements; and wherein the outer ring is fitted to the bore of the cylinder in an interference fit.

Example 188. The assembly, system, device, apparatus, and method of any of the above or below Examples alone or in combination, wherein the bearing assembly is spaced from the second restrictor block.

Example 189. The assembly, system, device, apparatus, and method of any of the above or below Examples alone or in combination, wherein the first surface of the second restrictor block contacts the first seal element.

Example 190. The assembly, system, device, apparatus, and method of any of the above or below Examples alone or in combination, wherein the free ends of the first seal element point at the retaining wall.

Example 191. The assembly, system, device, apparatus, and method of any of the above or below Examples alone or in combination, wherein the free ends of the first seal element point away from the retaining wall.

Example 192. The assembly, system, device, apparatus, and method of any of the above or below Examples alone or in combination, wherein the first locking ring contacts the first surface of the second restrictor block.

Example 193. The assembly, system, device, apparatus, and method of any of the above or below Examples alone or in combination, wherein the ID of the first restrictor block comprises a plurality of relief grooves located closer to the second surface than the first surface.

Example 194. The assembly, system, device, apparatus, and method of any of the above or below Examples alone or in combination, wherein the plurality of relief grooves comprise three relief grooves.

Example 195. The assembly, system, device, apparatus, and method of any of the above or below Examples alone or in combination, wherein each relief groove is generally V-shape along a side cross-section.

Example 196. The assembly, system, device, apparatus, and method of any of the above or below Examples alone or in combination, wherein the V-shape has a truncated tip between two slanted sides.

Example 197. A seal system comprising: a cylinder having a body with a first end, a second end, an inside surface defining a bore, a lengthwise axis, and a retaining wall at the first end; a first sealing washer comprising an OD and an ID and in contact with the retaining wall; a first restrictor block comprising an OD, an ID, a first surface between the OD and the ID, and an opposed second surface between the OD and the ID, and wherein the OD is in contact with the bore and the first surface contacts the first sealing washer; a second sealing washer comprising an OD and an ID and in contact with the second surface of the first restrictor block; a second restrictor block comprising an OD, an ID, a first surface between the OD and the ID, and an opposed second surface between the OD and the ID, and wherein the OD of the second restrictor block is in contact with the bore and the first surface contacts the second sealing washer; a third sealing washer comprising an OD and an ID and in contact with the first surface of the second restrictor block; a third restrictor block comprising an OD, an ID, a first surface between the OD and the ID, and an opposed second surface between the OD and the ID, and wherein the OD of the third restrictor block is in contact with the bore and the first surface contacts the third sealing washer; and a bearing assembly located in the bore and away from the retaining wall at the first end, the bearing assembly comprise an outer ring, an inner ring, a cage retaining a plurality of rolling elements; and wherein the outer ring is fitted to the bore of the cylinder in an interference fit.

Example 198. The assembly, system, device, apparatus, and method of any of the above or below Examples alone or in combination, wherein the ID of the first restrictor block comprises a plurality of relief grooves located closer to the second surface than the first surface.

Example 199. The assembly, system, device, apparatus, and method of any of the above or below Examples alone or in combination, wherein the plurality of relief grooves comprise three relief grooves.

Example 200. The assembly, system, device, apparatus, and method of any of the above or below Examples alone or in combination, wherein each relief groove is generally V-shape along a side cross-section.

Example 201. The assembly, system, device, apparatus, and method of any of the above or below Examples alone or in combination, wherein the V-shape has a truncated tip between two slanted sides.

Example 202. A seal system comprising: a cylinder having a body with a first end, a second end, an inside surface defining a bore, a lengthwise axis, and a retaining wall at the first end; a first seal assembly located in the bore and comprising: a first locking ring having body with a first deck having an outside surface with a notch, an inside surface with a notch, and a first deck thickness measured between the notch at the outside surface and the notch at the inside surface; a first seal element attached to the first locking ring, the first seal element having an inside flange with a free end, an outside flange with a free end, and a center channel section connected to the inside and outside flanges and together defining a first seal cavity, wherein the outside flange comprising an extended lip located in the notch at the outside surface of the first deck; a first spring comprising canted coil spring comprising a plurality of interconnected coils located in the notch of the inside surface of the first deck and the first seal cavity of the first seal element and biasing against the notch and the inside flange; a first sealing washer comprising an OD and an ID and in contact with the retaining wall; a restrictor block comprising an OD, an ID, a first surface between the OD and the ID, and an opposed second surface, and wherein the OD is in contact with the bore and the first sealing washer at the first surface; wherein the ID of the restrictor block comprises a groove having a depth that is about 20% to 80% of a dimension of the restrictor block between the OD and the ID; and wherein service grease is located in the groove of the restrictor block.

Example 203. A seal system comprising: a cylinder having a body with a first end, a second end, an inside surface defining a bore, a lengthwise axis, and a retaining wall at the first end; a first seal assembly located in the bore and comprising: a first locking ring having body with a first deck having an outside surface with a notch, an inside surface with a notch, and a first deck thickness measured between the notch at the outside surface and the notch at the inside surface; a first seal element attached to the first locking ring, the first seal element having an inside flange with a free end, an outside flange with a free end, and a center channel section connected to the inside and outside flanges and together defining a first seal cavity, wherein the outside flange comprising an extended lip located in the notch at the outside surface of the first deck; a first spring comprising canted coil spring comprising a plurality of interconnected coils located in the notch of the inside surface of the first deck and the first seal cavity of the first seal element and biasing against the notch and the inside flange; a second seal assembly located in the bore and comprising: a second locking ring having body with a second deck having an outside surface with a notch, an inside surface with a notch, and a second deck thickness measured between the notch at the outside surface and the notch at the inside surface; a second seal element attached to the second locking ring, the second seal element having an inside flange with a free end, an outside flange with a free end, and a center channel section connected to the inside and outside flanges and together defining a second seal cavity, wherein the outside flange comprising an extended lip located in the notch at the outside surface of the second deck; a second spring comprising a canted coil spring comprising a plurality of interconnected coils located in the notch of the inside surface of the second deck and the second seal cavity and biasing against the notch and the inside flange; a first sealing washer comprising an OD and an ID and in contact with the retaining wall; a restrictor block comprising an OD, an ID, a first surface between the OD and the ID, and an opposed second surface, and wherein the OD is in contact with the bore and the first sealing washer at the first surface; wherein the ID of the restrictor block comprises a groove having a depth that is about 20% to 80% of a dimension of the restrictor block between the OD and the ID; and wherein service grease is located in the groove of the restrictor block.

Example 204. The assembly, system, device, apparatus, and method of any of the above or below Examples alone or in combination, further comprising a second sealing washer comprising an OD and an ID and in contact with the second surface of the restrictor block.

Example 205. The assembly, system, device, apparatus, and method of any of the above or below Examples alone or in combination, wherein the second sealing washer is in contact with the first locking ring.

Example 206. The assembly, system, device, apparatus, and method of any of the above or below Examples alone or in combination, wherein the free ends of the first seal element and the free ends of the second seal element point in a same direction.

Example 207. The assembly, system, device, apparatus, and method of any of the above or below Examples alone or in combination, further comprising service grease located in the first seal cavity and the second seal cavity.

Example 208. The assembly, system, device, apparatus, and method of any of the above or below Examples alone or in combination, wherein the free ends of the first seal element and the free ends of the second seal element point at the retaining wall.

Example 209. The assembly, system, device, apparatus, and method of any of the above or below Examples alone or in combination, wherein the free ends of the first seal element and the free ends of the second seal element point away the retaining wall.

Example 210. The assembly, system, device, apparatus, and method of any of the above or below Examples alone or in combination, wherein service grease is omitted.

Example 211. The assembly, system, device, apparatus, and method of any of the above or below Examples alone or in combination, wherein service grease is provide in the cavity of the first seal assembly or in the cavity of the second seal assembly.

Example 212. The assembly, system, device, apparatus, and method of any of the above or below Examples alone or in combination, wherein service grease is provided in a groove of a restrictor block.

Example 213. The assembly, system, device, apparatus, and method of any of the above or below Examples alone or in combination, further comprising a retaining disc at the second end or open end of the cylinder for securing components inside the cylinder.

Example 214. The assembly, system, device, apparatus, and method of any of the above or below Examples alone or in combination, wherein a retaining disc is omitted at the second end or open end of the cylinder.

Example 215. The assembly, system, device, apparatus, and method of any of the above or below Examples alone or in combination, wherein a retaining disc is located at the second end of the cylinder and in contact with the second seal element.

Example 216. The assembly, system, device, apparatus, and method of any of the above or below Examples alone or in combination, further comprising a shaft projecting through the ID of the first seal assembly.

Example 217. The assembly, system, device, apparatus, and method of any of the above or below Examples alone or in combination, further comprising wherein the shaft has at least two different shaft sections with different outside diameters.

Example 218. A seal system comprising: a cylinder having a body with a first end with a retaining wall, a second end, an inside surface defining a bore, and a lengthwise axis; a first seal assembly located in the bore and comprising: a first locking ring having body with a first deck having an outside surface with a notch, an inside surface with a notch, an inner flange extension, an outer flange extension, and wherein notch at the inside surface comprises a V-shaped bottom or a flat bottom; a first seal element attached to the first locking ring, the first seal element having an inside flange with a free end, an outside flange with a free end, and a center channel section connected to the inside and outside flanges and together defining a first seal cavity, wherein the outside flange comprising an extended lip located in the notch at the outside surface of the first deck; a first spring comprising a canted coil spring comprising a plurality of interconnected coils located in the notch of the inside surface of the first deck and the first seal cavity of the first seal element and biasing against the notch and the inside flange; a second seal assembly located in the bore and comprising: a second locking ring having body with a second deck having an outside surface with a notch, an inside surface with a notch, an inner flange extension, an outer flange extension, and wherein notch at the inside surface comprises a V-shaped bottom or a flat bottom; a second seal element attached to the second locking ring, the second seal element having an inside flange with a free end, an outside flange with a free end, and a center channel section located therebetween and defining a second seal cavity, wherein the outside flange comprising an extended lip located in the notch at the outside surface of the second deck; a second spring comprising a canted coil spring comprising a plurality of interconnected coils located in the notch of the inside surface of the second deck and the second seal cavity and biasing against the notch and the inside flange; a sealing washer having a body with a first surface, an opposed second surface, an outside diameter (OD), and an inside diameter (ID), and wherein the body of the sealing washer contacts both the retaining wall and the first locking ring; and wherein the free ends of the first seal element and the free ends of the second seal element point in a same direction.

Example 219. The assembly, system, device, apparatus, and method of any of the above or below Examples alone or in combination, wherein an end edge of the outer flange extension of the first locking ring is spaced from the inside surface of the bore.

Example 220. The assembly, system, device, apparatus, and method of any of the above or below Examples alone or in combination, wherein an end edge of the outer flange extension of the second locking ring is spaced from the inside surface of the bore.

Example 221. The assembly, system, device, apparatus, and method of any of the above or below Examples alone or in combination, wherein the bore of the cylinder comprises at least two bore sections, including a first bore section with a first bore diameter and a second bore section with a second bore diameter that differs from the first bore diameter.

Example 222. The assembly, system, device, apparatus, and method of any of the above or below Examples alone or in combination, wherein the second seal element is partly located in the first bore section and partly located in the second bore section.

Example 223. The assembly, system, device, apparatus, and method of any of the above or below Examples alone or in combination, further comprising a retaining ring having an outside diameter and an inside diameter that is larger than an inside diameter of the second seal element, wherein the retaining ring is pressed against the second seal element and against the bore of the cylinder.

Example 224. The assembly, system, device, apparatus, and method of any of the above or below Examples alone or in combination, wherein the retaining ring is pressed against the second bore section.

Example 225. The assembly, system, device, apparatus, and method of any of the above or below Examples alone or in combination, wherein the retaining ring is pressed against the center channel section and the outside flange of the second seal element.

Example 226. The assembly, system, device, apparatus, and method of any of the above or below Examples alone or in combination, wherein the bore has a third bore section of a third bore diameter that differs from the first bore diameter and the second bore diameter.

Example 227. The assembly, system, device, apparatus, and method of any of the above or below Examples alone or in combination , further comprising a bearing assembly located in the third bore section.

Example 228. The assembly, system, device, apparatus, and method of any of the above or below Examples alone or in combination , wherein the bearing assembly is spaced from the retaining ring.

Example 229. The assembly, system, device, apparatus, and method of any of the above or below Examples alone or in combination , further comprising a shaft having at least two different shaft sections, including a first shaft section of a first shaft diameter and a second shaft section of a second diameter that differs from the first shaft diameter.

Example 230. The assembly, system, device, apparatus, and method of any of the above or below Examples alone or in combination , wherein the first seal element and the second seal element are pressed against the first shaft section and the bearing assembly is pressed against the second shaft section.

Example 231. The assembly, system, device, apparatus, and method of any of the above or below Examples alone or in combination , wherein the cylinder comprises a port, and wherein the port is aligned with an outer bearing ring of the bearing assembly.

Example 232. The assembly, system, device, apparatus, and method of any of the above or below, wherein the free ends of the first seal element and the second seal element point at the retaining wall or away from the retaining wall.

Example 233. The assembly, system, device, apparatus, and method of any of the above or below, further comprising a second sealing washer located in a seam between the first seal element and the second seal element.

Example 234. The assembly, system, device, apparatus, and method of any of the above or below, further comprising a sealing element located between a retaining ring and a second sealing element.

Example 235. The assembly, system, device, apparatus, and method of any of the above, where a sealing washer is claimed, two or more consecutively stacked sealing washers are employed, at one, two, or all single sealing washer locations.

## Claims

1. Seal system (100) comprising:
a cylinder having a body with a first end with a retaining wall (118), a second end, an inside surface (154) defining a bore, and a lengthwise axis;
a first seal assembly (102) located in the bore and comprising:
a first locking ring (146) having body with a first deck having an outside surface with a notch, an inside surface (154) with a notch, an inner flange extension (158a, 158b), an outer flange extension (162), and wherein notch at the inside surface (154) comprises a V-shaped bottom or a flat bottom;
a first seal element (126) attached to the first locking ring (146), the first seal element (126) having an inside flange (128) with a free end, an outside flange (130) with a free end, and a center channel section connected to the inside and outside flanges (128, 130) and together defining a first seal cavity, wherein the outside flange (130) comprising an extended lip located in the notch at the outside surface of the first deck;
a first spring comprising a canted coil spring comprising a plurality of interconnected coils located in the notch of the inside surface (154) of the first deck and the first seal cavity of the first seal element (126) and biasing against the notch and the inside flange (128);
a second seal assembly (104) located in the bore and comprising:
a second locking ring having body with a second deck having an outside surface with a notch, an inside surface (154) with a notch, an inner flange extension (158a, 158b), an outer flange extension (162), and wherein notch at the inside surface (154) comprises a V-shaped bottom or a flat bottom;
a second seal element attached to the second locking ring, the second seal element (126) having an inside flange (128) with a free end, an outside flange (130) with a free end, and a center channel section located therebetween and defining a second seal cavity, wherein the outside flange (130) comprising an extended lip located in the notch at the outside surface of the second deck;
a second spring comprising a canted coil spring comprising a plurality of interconnected coils located in the notch of the inside surface (154) of the second deck and the second seal cavity and biasing against the notch and the inside flange (128);
a sealing washer (172) having a body with a first surface, an opposed second surface, an outside diameter (OD), and an inside diameter (ID), and wherein the body of the sealing washer (172) contacts both the retaining wall (118) and the first locking ring (146) or contacts both the retaining wall (118) and the first seal element (126); and
wherein the free ends of the first seal element (126) and the free ends of the second seal element point in a same direction.

2. Seal system (100) according to claim 1, wherein an end edge of the outer flange extension (162) of the first locking ring (146) is spaced from the inside surface (154) of the bore, an end edge of the outer flange extension (162) of the second locking ring is spaced from the inside surface (154) of the bore, or both the end edge of the first locking ring (146) and the end edge of the second locking ring are spaced from the inside surface (154) of the bore.

3. Seal system (100) according to any of claims 1 to 2, wherein the free ends of the first seal element (126) and the free ends of the second seal element point at the retaining wall (118) and wherein a second sealing washer (172b) is located between the first seal element (126) and the second seal element.

4. Seal system (100) according to any of claims 1 to 3, wherein the bore of the cylinder comprises at least two bore sections, including a first bore section with a first bore diameter and a second bore section with a second bore diameter that differs from the first bore diameter, and wherein the second seal element is partly located in the first bore section and partly located in the second bore section.

5. Seal system (100) according to claim 4, wherein the bore has a third bore section of a third bore diameter that differs from the first bore diameter and the second bore diameter, and wherein a bearing assembly (300) is located in the third bore section.

6. Seal system (100) according to claim 5, wherein the bearing assembly (300) is spaced from a retaining ring (360).

7. Seal system (100) according to claim 6, further comprising a shaft (108) having at least two different shaft sections, including a first shaft section of a first shaft diameter and a second shaft section of a second diameter that differs from the first shaft diameter, and wherein the first seal element (126) and the second seal element (126) are pressed against the first shaft section and the bearing assembly (300) is pressed against the second shaft section.

8. Seal system (100) according to any of claims 4 to 7, further comprising a retaining ring (360) having an outside diameter and an inside diameter that is larger than an inside diameter of the second seal element, wherein the retaining ring (360) is pressed against the second seal element and against the bore of the cylinder.

9. Seal system (100) according to claim4, wherein the retaining ring (360) is pressed against the center channel section and the outside flange (130) of the second seal element (126).

10. Seal system (100) according to any of claims 1 to 9, further comprising a second sealing washer (172b) located between the retaining ring (360) and the second seal element.

11. A seal system (100) comprising:
a cylinder having a body with a first end, a second end, an inside surface (154) defining a bore, a lengthwise axis, and a retaining wall (118) at the first end;
a first seal assembly (102) located in the bore and comprising:
a first locking ring (146) having body with a first deck having an outside surface with a notch, an inside surface (154), a first deck thickness measured between the notch at the outside surface and the inside surface (154), and a ring extension extending towards the retaining wall (118), the ring extension defining a cylinder having an OD and an ID;
a first seal element (126) attached to the first locking ring (146), the first seal element (126) having an inside flange (128) with a free end, an outside flange (130) with a free end, and a center channel section connected to the inside and outside flanges (128, 130) and together defining a first seal cavity, wherein the outside flange (130) comprising an extended lip located in the notch at the outside surface of the first deck;
a first spring comprising a canted coil spring comprising a plurality of interconnected coils located in the first seal cavity of the first seal element (126) and biasing against the inside surface (154) of the first deck and the inside flange (128);
a second spring comprising a canted coil spring comprising a plurality of interconnected coils located in the first seal cavity adjacent the first spring and biasing against the inside surface (154) of the first deck and the inside flange (128);
a first sealing washer (172a) comprising an OD and an ID and in contact with the retaining wall (118); and
a second sealing washer (172b) comprising an OD and an ID and in contact with the first locking ring (146).

12. The seal system (100) according to claim 11, further comprising a restrictor block comprising an OD, an ID, a first surface between the OD and the ID, and an opposed second surface between the OD and the ID, and wherein the OD of the restrictor block is in contact with the bore.

13. Method of assembling a seal system (100) comprising:
inserting a first seal assembly (102) and a second seal assembly (104) into a cylinder, the cylinder having a body with a first end with a retaining wall (118), a second end, an inside surface (154) defining a bore, and a lengthwise axis;
the first seal assembly (102) is located in the bore and comprising:
a first locking ring (146) having body with a first deck having an outside surface with a notch, an inside surface (154) with a notch, an inner flange extension (158a, 158b), an outer flange extension (162), and wherein notch at the inside surface (154) comprises a V-shaped bottom or a flat bottom;
a first seal element (126) attached to the first locking ring (146), the first seal element (126) having an inside flange (128) with a free end, an outside flange (130) with a free end, and a center channel section connected to the inside and outside flanges (128, 130) and together defining a first seal cavity, wherein the outside flange (130) comprising an extended lip located in the notch at the outside surface of the first deck;
a first spring comprising a canted coil spring comprising a plurality of interconnected coils located in the notch of the inside surface (154) of the first deck and the first seal cavity of the first seal element (126) and biasing against the notch and the inside flange (128);
the second seal assembly (104) located in the bore and comprising:
a second locking ring having body with a second deck having an outside surface with a notch, an inside surface (154) with a notch, an inner flange extension (158a, 158b), an outer flange extension (162), and wherein notch at the inside surface (154) comprises a V-shaped bottom or a flat bottom;
a second seal element attached to the second locking ring, the second seal element having an inside flange (128) with a free end, an outside flange (130) with a free end, and a center channel section located therebetween and defining a second seal cavity, wherein the outside flange (130) comprising an extended lip located in the notch at the outside surface of the second deck;
a second spring comprising a canted coil spring comprising a plurality of interconnected coils located in the notch of the inside surface (154) of the second deck and the second seal cavity and biasing against the notch and the inside flange (128);
placing a sealing washer (172) into the bore of the cylinder, the sealing washer (172) having a body with a first surface, an opposed second surface, an outside diameter (OD), and an inside diameter (ID), and wherein the body of the sealing washer (172) contacts both the retaining wall (118) and the first locking ring (146); and
wherein the free ends of the first seal element (126) and the free ends of the second seal element point in a same direction.

14. Method according to claim 13, wherein an end edge of the outer flange extension (162) of the first locking ring (146) is spaced from the inside surface (154) of the bore, an end edge of the outer flange extension (162) of the second locking ring is spaced from the inside surface (154) of the bore, or both the end edge of the first locking ring (146) and the end edge of the second locking ring are spaced from the inside surface (154) of the bore.

15. Method according to claim 14, further comprising placing a retaining ring (360) having an outside diameter and an inside diameter that is larger than an inside diameter of the second seal element (126) into the bore of the cylinder, wherein the retaining ring (360) is pressed against the second seal element (126) and against the bore of the cylinder.

16. Method according to claim 15, further comprising placing a bearing assembly into the bore of the cylinder in a spaced relationship with the retaining ring (360).
